# EUROPEAN PATENT SPECIFICATION

(11) **EP 4 192 093 B1**
(45) Date of publication and mention of the grant of the patent: **25.03.2026**
(21) Application number: 21860363.7
(22) Date of filing: 24.08.2021
(51) Int. Cl.: H04W 24/02, G06N 3/098, G06N 7/01, G06N 20/10, H04W 28/02, H04W 8/24, H04W 24/08, H04W 36/00, H04W 88/08

(54) **INTELLIGENT RADIO ACCESS NETWORK**
INTELLIGENTES FUNKZUGANGSNETZ
RÉSEAU D'ACCÈS RADIO INTELLIGENT

(30) Priority: 24.08.2020 CN 202010858139
(43) Date of publication of application: 07.06.2023
(73) Proprietor: Huawei Technologies Co., Ltd., Shenzhen, Guangdong 518129 (CN)
(72) Inventor: ZENG, Qinghai, Shenzhen, Guangdong 518129 (CN); LUO, Haiyan, Shenzhen, Guangdong 518129 (CN); GENG, Tingting, Shenzhen, Guangdong 518129 (CN); HU, Xingxing, Shenzhen, Guangdong 518129 (CN)
(74) Representative: MERH-IP Matias Erny Reichl Hoffmann Patentanwälte PartG mbB
(86) International application number: PCT/CN2021/114255
(87) International publication number: WO 2022/042528

(56) References cited:
- WO-A1-2020/131128
- CN-A- 102 932 751
- CN-A- 108 476 536
- CN-A- 109 644 387
- CN-A- 111 522 669
- US-A1- 2020 065 712
- US-A1- 2020 104 777
- US-A1- 2020 252 142
- US-B1- 6 459 881

## Description

### TECHNICAL FIELD

This application relates to communication technologies, and in particular, to an intelligent radio access network.

### BACKGROUND

In a wireless communication network, for example, in a mobile communication network, services supported by the network are increasingly diversified. Therefore, requirements that need to be met are increasingly diversified. For example, the network needs to support an ultra-high rate, an ultra-low latency, and/or massive connection. This feature makes network planning, network configuration, and/or resource scheduling more complex. In addition, because the network has increasingly powerful functions, for example, supports increasingly high spectrums, supports a higher-order multiple-input multiple-output (multiple input multiple output, MIMO) technology, supports beamforming, and/or supports a new technology such as beam management, network energy saving becomes a hot research topic. These new requirements, new scenarios, and new features pose unprecedented challenges to network planning, operation and maintenance, and efficient operation.
WO 2020/131128 A1 discloses communicating, via a 5G-Connection Behavior Status Identification module configured on an RAN Intelligent Controller, connection event information about events of one or more UE's connection to a 5G hotspot cell, along with associated UEs' channel condition information. This document does not specifically disclose AI tasks.
US 2020/104777 A1 discloses providing a user with AI tasks by an artificial intelligence task management system. This document does not specifically disclose a communication involving a base station.

### SUMMARY

Embodiments of this application provide a communication method, to introduce artificial intelligence AI in a radio access network RAN, so as to implement network intelligence and provide an efficient RAN.

The invention is defined in the claims.

According to a first aspect, a communication method is provided. An execution body of the method is a radio intelligence controller RIC or may be an apparatus that can support the RIC in implementing this function, for example, a chip. This is not limited. The method includes: sending first task configuration information to a base station, where the first task configuration information is used to indicate configuration information of one or more artificial intelligence, AI, tasks, and an execution body of each of the one or more tasks is a terminal device or the base station.

Optionally, execution bodies of different tasks may be the same or different. This is not limited. For example, the first task configuration information indicates configuration information of X1 tasks, execution bodies of X2 tasks are the base station, and execution bodies of X3 tasks are the terminal device. X1 is a positive integer greater than or equal to 1, X2 is an integer greater than or equal to 0 and less than or equal to X1, and X3 is an integer greater than or equal to 0 and less than or equal to X1. A sum of X2 and X3 is equal to X1.

Optionally, that the execution body of each task is the base station includes: The execution body of each task is a central unit CU of the base station or a distributed unit DU of the base station. In this case, in a possible implementation, the execution body of each of the one or more tasks is the terminal device, the CU, or the DU; the execution body of each of the one or more tasks is the terminal device or the CU; or the execution body of each of the one or more tasks is the terminal device or the DU.

Optionally, that the execution body of each task is the CU of the base station includes: The execution body of each task is a central unit-control plane CU-CP of the base station or a central unit-user plane CU-UP of the base station. In this case, in a possible implementation, the execution body of each of the one or more tasks is the terminal device, the CU-CP, the CU-UP, or the DU; the execution body of each of the one or more tasks is the terminal device, the CU-CP, or the CU-UP; the execution body of each of the one or more tasks is the terminal device, the CU-CP, or the DU; the execution body of each of the one or more tasks is the terminal or the CU-CP; the execution body of each of the one or more tasks is the terminal device or the CU-UP; or the execution body of each of the one or more tasks is the terminal device, the CU-UP, or the DU.

According to the foregoing method, the RIC may send an AI task to the base station, and/or send an AI task to the terminal through the base station, to implement an AI function in a RAN, so that AI can be effectively introduced in the RAN, to implement an efficient RAN. For example, efficiency of network planning, network configuration, resource scheduling, and/or the like can be improved. When AI is introduced in the RAN according to this method, an existing network can be better compatible, and a new AI function is easy to introduce.

For each of the one or more tasks, configuration information of the task is used to indicate one or more of the following content of the task: a task identifier ID. a task type, task content, a task execution body, and a task status.

According to this method, task information may be configured for an execution body of an AI task, so that the execution body of the task can know how to execute the corresponding AI task. In this way, an AI function can be implemented in a network.

In a possible implementation, the task type is data collection, inference result publishing, model publishing, or model training. For example, when configuration information of a task is not used to indicate a task type, it may be agreed on in a protocol or other signaling may be used to indicate in advance that the type of the task is data collection, inference result publishing, model publishing, or model training. For another example, when configuration information of a task is used to indicate a task type, the type of the task may be indicated in a plurality of task types. The plurality of task types may include at least one of data collection, inference result publishing, model publishing, and model training. Optionally, the plurality of task types may further include another task type. This is not limited.

Optionally, when the task type is model training, the task type is further used to indicate that the task type is distributed model training or centralized model training. Alternatively, that the task type is data collection, inference result publishing, model publishing, or model training includes: The task type is data collection, inference result publishing, model publishing, distributed model training, or centralized model training.

In this embodiment of this application, an inference result obtained by the RIC by using an AI model may be a parameter configuration on a RAN side and/or a parameter configuration on a terminal side. For example, a parameter value on the RAN side includes a parameter configuration of a cell and/or a parameter configuration of a base station. In this case, the inference result publishing may further be described as configuring a parameter, and the inference result may be described as a parameter value.

According to this method, data may be collected to assist in implementing a model training function and/or an inference function in AI functions, a result obtained by the RIC through inference may be published to the base station or the terminal device, the AI model may be published to the base station or the terminal device, and/or the base station or the terminal device may be indicated to perform model training. In this way, various possible AI functions may be introduced in a RAN to obtain an efficient RAN.

In a possible implementation, when the task type is data collection, the task content indicates one or more of the following content: a data measurement type, a measurement condition, and a measurement result report (or described as data report) manner. Alternatively, the task content indicates one or more of the following content: a data type and a data report manner.

When the task type is inference result publishing, the task content indicates an inference result.

When the task type is model publishing, the task content indicates model information.

When the task type is model training, the task content indicates one or more of the following content: a condition for reporting model parameter information or reporting model parameter gradient information, information about a reference neural network, and a neural network training data set.

According to this method, specific content of an AI task may be indicated to an execution body of the AI task, so that the execution body can execute the corresponding task according to an indication of the task content. In this way, an AI function can be implemented in a network.

In a possible implementation, the task status includes an activated state or a deactivated state, or the task status includes an activated state, a deactivated state, or a released state.

According to this method, execution of a task can be flexibly controlled. For example, the task may be configured to be activated in a partial time period, or a configured task may be released, so that power consumption of a task execution body can be reduced.

In a possible implementation, the method further includes: receiving a first interface setup request message from the CU of the base station.

According to this method, an interface between the RIC and the CU may be set up. In this way, communication can be performed between the RIC and the CU.

In a possible implementation, the first interface setup request message is used to indicate one or more of the following content: a message type, an ID of the CU, capability information of the CU, configuration information of the CU, and status information of the CU.

According to this method, information about the CU may be obtained, to perform AI model training and/or inference in the RIC.

In a possible implementation, the method further includes: receiving a second interface setup request message from the DU of the base station.

According to this method, an interface between the RIC and the DU may be set up. In this way, communication can be performed between the RIC and the DU.

In a possible implementation, the second interface setup request message is used to indicate one or more of the following content: a message type, an ID of the DU, capability information of the DU, configuration information of the DU, and status information of the DU.

According to this method, information about the DU may be obtained, to perform AI model training and/or inference in the RIC.

In a possible implementation, the method further includes: receiving information about the terminal device from the base station, where the information about the terminal device includes one or more of the following: capability information of the terminal device, configuration information of the terminal device, and status information of the terminal device. Optionally, the receiving information about the terminal device from the base station includes: receiving the information about the terminal device from the CU of the base station.

According to this method, the information about the terminal may be obtained, to perform AI model training and/or inference in the RIC.

In a possible implementation, the one or more tasks include at least one data collection task, and the method further includes: receiving collected data from the base station. The receiving collected data from the base station includes: receiving the collected data from the CU of the base station. Optionally, when an execution body of the at least one data collection task is the base station, the data is collected by the base station. Optionally, when an execution body of the at least one data collection task is the CU, the data is collected by the CU. Optionally, when an execution body of the at least one data collection task is the DU, the data is collected by the DU. The data collected by the DU may be sent by the DU to the CU and sent by the CU to the RIC. Optionally, when an execution body of the at least one data collection task is the CU-CP, the data is collected by the CU-CP. Optionally, when an execution body of the at least one data collection task is the CU-UP, the data is collected by the CU-UP. The data collected by the CU-UP may be sent by the CU-UP to the CU-CP and sent by the CU-CP to the RIC. Optionally, when an execution body of the at least one data collection task is the terminal device, the data is collected by the terminal device, and is sent by the terminal device to the base station.

According to this method, data expected to be collected can be obtained, to assist in implementing a model training function and/or an inference function.

In a possible implementation, the method further includes: publishing an inference result to the base station. The publishing an inference result to the base station includes: publishing the inference result to the CU of the base station.

According to this method, the inference result may be published to the base station or the terminal device. For example, after collecting data, the RIC may perform inference by using the data, so that a parameter configuration on a RAN side and/or a parameter configuration of the terminal can be obtained. The RIC may publish a parameter value to the base station and/or the terminal device, so that the base station and/or the terminal device can update a corresponding parameter value. In this way, network performance can be improved.

In a possible implementation, the one or more tasks include at least one model training task, and the method further includes: receiving model parameter information or model parameter gradient information from the base station. The receiving model parameter information or model parameter gradient information from the base station includes: receiving the model parameter information or the model parameter gradient information from the CU of the base station. The parameter information or the parameter gradient information may be sent by the terminal device to the base station.

According to this method, federated learning can be implemented on a terminal side. This improves efficiency of AI model training.

According to a second aspect, a communication method is provided. An execution body of the method is a base station, or may be a CU, or an apparatus that can support the base station or the CU in implementing this function, for example, a chip. This is not limited. The method includes: receiving first task configuration information from a radio intelligence controller RIC, where the first task configuration information is used to indicate configuration information of one or more artificial intelligence, AI, tasks, and an execution body of each of the one or more tasks is a terminal device or a base station.

For description of the configuration information of the task, refer to the first aspect. Details are not described herein again.

In a possible implementation, for at least one of the one or more tasks, an execution body of the at least one task is the terminal device, and the method further includes: indicating information about each of the at least one task to the terminal device by using radio resource control RRC signaling, a system information block SIB, a master information block MIB, or a paging message.

In a possible implementation, for at least one of the one or more tasks, an execution body of the at least one task is a DU, and the method further includes: sending content of each of the at least one task to the DU.

In a possible implementation, for at least one of the one or more tasks, an execution body of the at least one task is a CU-UP, and the method further includes: sending content of each of the at least one task to the CU-UP.

In a possible implementation, the method further includes: sending a first interface setup request message to the RIC. For description of the first interface setup request message, refer to the first aspect. Details are not described herein again.

In a possible implementation, the method further includes: sending information about the terminal device to the RIC. For description of the information about the terminal, refer to the first aspect. Details are not described herein again.

In a possible implementation, the one or more tasks include at least one data collection task, and the method further includes: sending collected data to the RIC. For description of the data, refer to the specific description in the first aspect. Details are not described herein again. For example, the method further includes: receiving the data from the terminal device, the DU, or the CU-UP.

In a possible implementation, the method further includes: receiving an inference result from the RIC. Optionally, the method further includes: sending the inference result to the terminal device, the DU, or the CU-UP. Optionally, the sending the inference result to the terminal device includes: sending the inference result to the terminal by using RRC signaling, a SIB, a MIB, or a paging message.

In a possible implementation, the one or more tasks include at least one model training task, and the method further includes: receiving model parameter information or model parameter gradient information from the terminal device, and sending the model parameter information or the model parameter gradient information to the RIC.

According to a third aspect not covered by the claims, a communication method is provided. An execution body of the method may be a terminal device or an apparatus that can support the terminal device in implementing this function, for example, a chip. This is not limited. The method includes: receiving information about one or more tasks from a base station by using radio resource control RRC signaling, a system information block SIB, a master information block MIB, or a paging message, where information about each task in the information about the one or more tasks is used to indicate one or more of the following content of each task: a task identifier ID, a task type, task content, a task execution body, and a task status.

For description of the task identifier ID, the task type, the task content, the task execution body, and the task status, refer to the first aspect or the second aspect. Details are not described herein again.

In a possible implementation, the method further includes: sending information about the terminal device to the base station, where the information about the terminal device includes one or more of the following: capability information of the terminal device, configuration information of the terminal device, and status information of the terminal device.

In a possible implementation, the one or more tasks include at least one data collection task, and the method further includes: sending collected data to the base station.

In a possible implementation, the method further includes: receiving an inference result from the base station.

In a possible implementation, the one or more tasks include at least one model training task, and the method further includes: sending model parameter information or model parameter gradient information to the base station.

According to a fourth aspect, an apparatus is provided. The apparatus may be a RIC, or may be another apparatus that can implement the method described in the first aspect. The another apparatus can be installed in the RIC, or can match the RIC for use. In a design, the apparatus may include a module one-to-one corresponding to the method/operation/step/action described in the first aspect. The module may be a hardware circuit, software, or a combination of a hardware circuit and software. In a design, the apparatus may include a processing module and a communication module.

In a possible implementation, the communication module is configured to send first task configuration information to a base station, where the first task configuration information is used to indicate configuration information of one or more artificial intelligence, AI, tasks, and an execution body of each of the one or more tasks is a terminal device or the base station. The configuration information of the task may be generated by the processing module.

For other information that can be received and/or sent by the communication module, refer to the description in the first aspect. Details are not described herein again.

According to a fifth aspect, an apparatus is provided. The apparatus may be a base station, or may be another apparatus that can implement the method described in the second aspect. The another apparatus can be installed in the base station, or can match the base station for use. In a design, the apparatus may include a module one-to-one corresponding to the method/operation/step/action described in the second aspect. The module may be a hardware circuit, software, or a combination of a hardware circuit and software. In a design, the apparatus may include a processing module and a communication module.

In a possible implementation, the communication module is configured to receive first task configuration information from a radio intelligence controller RIC, where the first task configuration information is used to indicate configuration information of one or more artificial intelligence, AI, tasks, and an execution body of each of the one or more tasks is a terminal device or a base station. The processing module may be configured to: receive the first task configuration information from the communication module, and process the first task configuration information.

For other information that can be received and/or sent by the communication module, refer to the description in the second aspect. Details are not described herein again.

According to a sixth aspect not covered by the claims, an apparatus is provided. The apparatus may be a terminal device, or may be another apparatus that can implement the method described in the third aspect. The another apparatus can be installed in the terminal device, or can match the terminal device for use. In a design, the apparatus may include a module one-to-one corresponding to the method/operation/step/action described in the third aspect. The module may be a hardware circuit, software, or a combination of a hardware circuit and software. In a design, the apparatus may include a processing module and a communication module.

In a possible implementation, the communication module is configured to receive information about one or more tasks from a base station by using radio resource control RRC signaling, a system information block SIB, a master information block MIB, or a paging message, where information about each task in the information about the one or more tasks is used to indicate one or more of the following content of each task: a task identifier ID, a task type, task content, a task execution body, and a task status. The processing module may be configured to: receive the information about the one or more tasks from the communication module, and process the information.

For other information that can be received and/or sent by the communication module, refer to the description in the third aspect. Details are not described herein again.

According to a seventh aspect, an embodiment of this application provides an apparatus. The apparatus includes a processor, configured to implement the method described in the first aspect. The apparatus may further include a memory, configured to store instructions. The memory is coupled to the processor, and when executing the instructions stored in the memory, the processor can implement the method described in the first aspect. The apparatus may further include a communication interface, and the communication interface is used by the apparatus to communicate with another device. In this embodiment of this application, the communication interface may be a transceiver, a circuit, a bus, a module, a pin, or another type of communication interface.

In a possible design, the apparatus includes:
the memory, configured to store program instructions; and
the processor, configured to send first task configuration information to a base station through the communication interface, where the first task configuration information is used to indicate configuration information of one or more tasks, and an execution body of each of the one or more tasks is a terminal device or the base station.

For other information that can be received and/or sent by the processor through the communication interface, refer to the description in the first aspect. Details are not described herein again.

According to an eighth aspect, an embodiment of this application provides an apparatus. The apparatus includes a processor, configured to implement the method described in the second aspect. The apparatus may further include a memory, configured to store instructions. The memory is coupled to the processor, and when executing the instructions stored in the memory, the processor can implement the method described in the second aspect. The apparatus may further include a communication interface, and the communication interface is used by the apparatus to communicate with another device.

In a possible design, the apparatus includes:
the memory, configured to store program instructions; and
the processor, configured to receive first task configuration information from a radio intelligence controller RIC through the communication interface, where the first task configuration information is used to indicate configuration information of one or more tasks, and an execution body of each of the one or more tasks is a terminal device or a base station.

For other information that can be received and/or sent by the processor through the communication interface, refer to the description in the second aspect. Details are not described herein again.

According to a ninth aspect not covered by the claims, an embodiment of this application provides an apparatus. The apparatus includes a processor, configured to implement the method described in the third aspect. The apparatus may further include a memory, configured to store instructions. The memory is coupled to the processor, and when executing the instructions stored in the memory, the processor can implement the method described in the third aspect. The apparatus may further include a communication interface, and the communication interface is used by the apparatus to communicate with another device.

In a possible design, the apparatus includes:
the memory, configured to store program instructions; and
the processor, configured to receive information about one or more tasks from a base station through the communication interface by using radio resource control RRC signaling, a system information block SIB, a master information block MIB, or a paging message, where information about each task in the information about the one or more tasks is used to indicate one or more of the following content of each task: a task identifier ID, a task type, task content, a task execution body, and a task status.

For other information that can be received and/or sent by the processor through the communication interface, refer to the description in the third aspect. Details are not described herein again.

According to a tenth aspect not covered by the claims, a communication method is provided. An execution body of the method may be a radio intelligence controller RIC or an apparatus that can support the RIC in implementing this function, for example, a chip. This is not limited. The method includes: sending second task configuration information to a terminal device through a first protocol layer, where the second task configuration information is used to indicate configuration information of one or more tasks, and an execution body of each of the one or more tasks includes one or more terminal devices.

Optionally, execution bodies of different tasks may be the same or different. This is not limited. Optionally, the first protocol layer is a protocol layer other than an RRC protocol layer. This may be alternatively described as that the first protocol layer is a non-RRC layer, or described as that the first protocol layer is not an RRC layer.

In a possible implementation, for each of the one or more tasks, configuration information of the task is used to indicate one or more of the following content of the task: a task identifier ID, a task type, task content, a task execution body, and a task status.

According to the foregoing method, the RIC may send an AI task to the terminal device, to implement an AI function in a RAN, so that AI can be effectively introduced in the RAN, to implement an efficient RAN. For example, efficiency of network planning, network configuration, resource scheduling, and/or the like can be improved. When AI is introduced in the RAN according to this method, an existing network can be better compatible, and a new AI function is easy to introduce.

In a possible implementation, the method further includes: sending third task configuration information to a base station, where the third task configuration information is used to indicate configuration information of one or more tasks, and an execution body of each of the one or more tasks indicated by the third task configuration information includes a central unit CU of the base station or a distributed unit DU of the base station.

In a possible implementation, configuration information of each of the one or more tasks indicated by the third task configuration information is used to indicate one or more of the following content of the task: a task identifier ID, a task type, task content, a task execution body, and a task status.

According to the foregoing method, the RIC may send an AI task to the base station, to implement an AI function in a RAN, so that AI can be effectively introduced in the RAN, to implement an efficient RAN. For example, efficiency of network planning, network configuration, resource scheduling, and/or the like can be improved. When AI is introduced in the RAN according to this method, an existing network can be better compatible, and a new AI function is easy to introduce.

For description of the task type, the task content, and the task status, refer to the description in the first aspect. Details are not described herein again.

In a possible implementation, the method further includes: receiving a first interface setup request message from the CU of the base station. For specific information and beneficial effects, refer to the description in the first aspect. Details are not described herein again.

In a possible implementation, the method further includes: receiving a second interface setup request message from the DU of the base station. For specific information and beneficial effects, refer to the description in the first aspect. Details are not described herein again.

In a possible implementation, the method further includes: receiving information about the terminal device from the base station, where the information about the terminal device includes one or more of the following: capability information of the terminal device, configuration information of the terminal device, and status information of the terminal device. Optionally, the receiving information about the terminal device from the base station includes: receiving the information about the terminal device from the CU of the base station.

According to this method, the information about the terminal may be obtained, to perform AI model training and/or inference in the RIC.

In a possible implementation, the one or more tasks include at least one data collection task, and the method further includes: receiving collected data from the base station. The receiving collected data from the base station includes: receiving the collected data from the CU of the base station. Optionally, when an execution body of the at least one data collection task is the base station, the data is collected by the base station. Optionally, when an execution body of the at least one data collection task is the CU, the data is collected by the CU. Optionally, when an execution body of the at least one data collection task is the DU, the data is collected by the DU. The data collected by the DU may be sent by the DU to the CU and sent by the CU to the RIC. Optionally, when an execution body of the at least one data collection task is the CU-CP, the data is collected by the CU-CP. Optionally, when an execution body of the at least one data collection task is the CU-UP, the data is collected by the CU-UP. The data collected by the CU-UP may be sent by the CU-UP to the CU-CP and sent by the CU-CP to the RIC.

According to this method, data expected to be collected can be obtained, to assist in implementing a model training function and/or an inference function.

In a possible implementation, the method further includes: publishing an inference result to the base station. The publishing an inference result to the base station includes: publishing the inference result to the CU of the base station.

According to this method, the inference result may be published to the base station. For example, after collecting data, the RIC may perform inference by using the data, so that a parameter configuration on a RAN side can be obtained. The RIC may publish a parameter value to the base station, so that the base station can update a corresponding parameter value. In this way, network performance can be improved.

In a possible implementation, the one or more tasks indicated by the second task configuration information include at least one data collection task, and the method further includes: receiving collected data from the terminal device through the first protocol layer. According to this method, data expected to be collected can be obtained, to assist in implementing a model training function and/or an inference function.

In a possible implementation, the one or more tasks indicated by the second task configuration information include at least one model training task, and the method further includes: receiving model parameter information or model parameter gradient information from the terminal through the first protocol layer. According to this method, federated learning can be implemented on a terminal side. This improves efficiency of AI model training.

In a possible implementation, the first protocol layer is an artificial intelligence control AIC layer above a packet data convergence protocol PDCP layer, the first protocol layer is an AIC layer above a radio resource control RRC layer, or the first protocol layer is an application layer.

That the first protocol layer is an artificial intelligence control AIC layer above a packet data convergence protocol PDCP layer includes: At a transmitting end, data at an AIC layer is successively delivered to a PDCP layer, an RLC layer, a MAC layer, and a physical layer. After a physical layer at a receiving end receives the data, the data is successively delivered to a MAC layer, an RLC layer, a PDCP layer, and an AIC layer.

That the first protocol layer is an AIC layer above a radio resource control RRC layer includes: At a transmitting end, data at an AIC layer is successively delivered to an RRC layer, a PDCP layer, an RLC layer, a MAC layer, and a physical layer. After a physical layer at a receiving end receives the data, the data is successively delivered to a MAC layer, an RLC layer, a PDCP layer, an RRC layer, and an AIC layer.

According to this method, a new protocol layer may be introduced for publishing a task, and/or a model is published by using an application layer, to implement validity and scalability of task publishing.

According to an eleventh aspect not covered by the claims, a communication method is provided. An execution body of the method may be a base station, a CU, or an apparatus that can support the base station or the CU in implementing this function, for example, a chip. This is not limited. The method includes: receiving third task configuration information from a radio intelligence controller RIC, where the third task configuration information is used to indicate configuration information of one or more tasks, and an execution body of each of the one or more tasks indicated by the third task configuration information includes a central unit CU of the base station or a distributed unit DU of the base station.

For specific description of task configuration information, refer to the description in the tenth aspect. Details are not described herein again.

In a possible implementation, for at least one of the one or more tasks, an execution body of the at least one task is the DU, and the method further includes: sending content of each of the at least one task to the DU.

In a possible implementation, for at least one of the one or more tasks, an execution body of the at least one task is a CU-UP, and the method further includes: sending content of each of the at least one task to the CU-UP.

In a possible implementation, the method further includes: sending a first interface setup request message to the RIC. For specific information and beneficial effects, refer to the description in the tenth aspect. Details are not described herein again.

In a possible implementation, the one or more tasks include at least one data collection task, and the method further includes: sending collected data to the RIC. Optionally, the data is received from the DU of the base station, or is received from the CU-UP of the base station.

In a possible implementation, the method further includes: receiving an inference result from the RIC.

According to a twelfth aspect not covered by the claims, a communication method is provided. An execution body of the method may be a terminal device or an apparatus that can support the terminal device in implementing this function, for example, a chip. This is not limited. The method includes: receiving second task configuration information from a radio intelligence controller RIC through a first protocol layer, where the second task configuration information is used to indicate configuration information of one or more tasks, and an execution body of each of the one or more tasks includes one or more terminal devices.

For specific description of task configuration information, refer to the description in the tenth aspect. Details are not described herein again.

In a possible implementation, the method further includes: sending information about the terminal device to a base station, where the information about the terminal device includes one or more of the following: capability information of the terminal device, configuration information of the terminal device, and status information of the terminal device.

In a possible implementation, the one or more tasks include at least one data collection task, and the method further includes: sending collected data to the RIC through the first protocol layer.

In a possible implementation, the one or more tasks include at least one model training task, and the method further includes: sending model parameter information or model parameter gradient information to the RIC through the first protocol layer.

In a possible implementation, the method further includes: receiving an inference result from the RIC through the first protocol layer.

In a possible implementation, the first protocol layer is an intelligence control AIC layer above a packet data convergence protocol PDCP layer, the first protocol layer is an AIC layer above a radio resource control RRC layer, or the first protocol layer is an application layer.

According to a thirteenth aspect not covered by the claims, an apparatus is provided. The apparatus may be a RIC, or may be another apparatus that can implement the method described in the tenth aspect. The another apparatus can be installed in the RIC, or can match the RIC for use. In a design, the apparatus may include a module one-to-one corresponding to the method/operation/step/action described in the tenth aspect. The module may be a hardware circuit, software, or a combination of a hardware circuit and software. In a design, the apparatus may include a processing module and a communication module.

In a possible implementation, the processing module sends second task configuration information to a terminal device through a first protocol layer by using the communication module, where the second task configuration information is used to indicate configuration information of one or more tasks, and an execution body of each of the one or more tasks includes one or more terminal devices.

In a possible implementation, the communication module is configured to send third task configuration information to a base station, where the third task configuration information is used to indicate configuration information of one or more tasks, and an execution body of each of the one or more tasks indicated by the third task configuration information includes a central unit CU of the base station or a distributed unit DU of the base station. The third task configuration information is generated by the processing module.

For other information that can be received and/or sent by the communication module, refer to the description in the tenth aspect. Details are not described herein again.

According to a fourteenth aspect not covered by the claims, an apparatus is provided. The apparatus may be a base station, or may be another apparatus that can implement the method described in the eleventh aspect. The another apparatus can be installed in the base station, or can match the base station for use. In a design, the apparatus may include a module one-to-one corresponding to the method/operation/step/action described in the eleventh aspect. The module may be a hardware circuit, software, or a combination of a hardware circuit and software. In a design, the apparatus may include a processing module and a communication module.

In a possible implementation, the communication module is configured to receive third task configuration information from a radio intelligence controller RIC, where the third task configuration information is used to indicate configuration information of one or more tasks, and an execution body of each of the one or more tasks indicated by the third task configuration information includes a central unit CU of the base station or a distributed unit DU of the base station. The processing module is configured to: receive the third task configuration information from the communication module, and process the third task configuration information.

For other information that can be received and/or sent by the communication module, refer to the description in the eleventh aspect. Details are not described herein again.

According to a fifteenth aspect not covered by the claims, an apparatus is provided. The apparatus may be a terminal device, or may be another apparatus that can implement the method described in the twelfth aspect. The another apparatus can be installed in the terminal device, or can match the terminal device for use. In a design, the apparatus may include a module one-to-one corresponding to the method/operation/step/action described in the twelfth aspect. The module may be a hardware circuit, software, or a combination of a hardware circuit and software. In a design, the apparatus may include a processing module and a communication module.

In a possible implementation, the processing module is configured to receive second task configuration information from a radio intelligence controller RIC through a first protocol layer by using the communication module, where the second task configuration information is used to indicate configuration information of one or more tasks, and an execution body of each of the one or more tasks includes one or more terminal devices.

For other information that can be received and/or sent by the communication module, refer to the description in the twelfth aspect. Details are not described herein again.

According to a sixteenth aspect not covered by the claims, an embodiment of this application provides an apparatus. The apparatus includes a processor, configured to implement the method described in the tenth aspect. The apparatus may further include a memory, configured to store instructions. The memory is coupled to the processor, and when executing the instructions stored in the memory, the processor can implement the method described in the tenth aspect. The apparatus may further include a communication interface, and the communication interface is used by the apparatus to communicate with another device. In this embodiment of this application, the communication interface may be a transceiver, a circuit, a bus, a module, a pin, or another type of communication interface.

In a possible design, the apparatus includes:
the memory, configured to store program instructions; and
the processor, configured to send second task configuration information to a terminal device through a first protocol layer by using the communication interface, where the second task configuration information is used to indicate configuration information of one or more tasks, and an execution body of each of the one or more tasks includes one or more terminal devices.

In a possible implementation, the processor sends third task configuration information to a base station through the communication interface, where the third task configuration information is used to indicate configuration information of one or more tasks, and an execution body of each of the one or more tasks indicated by the third task configuration information includes a central unit CU of the base station or a distributed unit DU of the base station.

For other information that can be received and/or sent by the processor through the communication interface, refer to the description in the tenth aspect. Details are not described herein again.

According to a seventeenth aspect not covered by the claims, an embodiment of this application provides an apparatus. The apparatus includes a processor, configured to implement the method described in the eleventh aspect. The apparatus may further include a memory, configured to store instructions. The memory is coupled to the processor, and when executing the instructions stored in the memory, the processor can implement the method described in the eleventh aspect. The apparatus may further include a communication interface, and the communication interface is used by the apparatus to communicate with another device.

In a possible design, the apparatus includes:
the memory, configured to store program instructions; and
the processor, configured to receive third task configuration information from a radio intelligence controller RIC through the communication interface, where the third task configuration information is used to indicate configuration information of one or more tasks, and an execution body of each of the one or more tasks indicated by the third task configuration information includes a central unit CU of the base station or a distributed unit DU of the base station.

For other information that can be received and/or sent by the processor through the communication interface, refer to the description in the eleventh aspect. Details are not described herein again.

According to an eighteenth aspect not covered by the claims, an embodiment of this application provides an apparatus. The apparatus includes a processor, configured to implement the method described in the twelfth aspect. The apparatus may further include a memory, configured to store instructions. The memory is coupled to the processor, and when executing the instructions stored in the memory, the processor can implement the method described in the twelfth aspect. The apparatus may further include a communication interface, and the communication interface is used by the apparatus to communicate with another device.

In a possible design, the apparatus includes:
the memory, configured to store program instructions; and
the processor, configured to receive second task configuration information from a radio intelligence controller RIC through a first protocol layer by using the communication interface, where the second task configuration information is used to indicate configuration information of one or more tasks, and an execution body of each of the one or more tasks includes one or more terminal devices.

For other information that can be received and/or sent by the processor through the communication interface, refer to the description in the twelfth aspect. Details are not described herein again.

According to a nineteenth aspect not covered by the claims, a communication method is provided. An execution body of the method may be a base station, a CU, or an apparatus that can support the base station or the CU in implementing this function, for example, a chip. This is not limited. The method includes: sending information about one or more tasks to a terminal device by using an application layer, an artificial intelligence control AIC layer, radio resource control RRC signaling, a system information block SIB, a master information block MIB, a paging message, a media access control MAC control element CE, or physical layer information, where the AIC layer is above a packet data convergence protocol PDCP layer, or the AIC layer is above an RRC layer, and an execution body of each of the one or more tasks is one or more terminal devices.

According to the foregoing method, an AI function can be implemented in a RAN, for example, in a base station, so that AI can be effectively introduced in the RAN, to implement an efficient RAN. For example, efficiency of network planning, network configuration, resource scheduling, and/or the like can be improved. When AI is introduced in the RAN according to this method, an existing network can be better compatible, and a new AI function is easy to introduce.

In a possible implementation, for each of the one or more tasks, information of the task is used to indicate one or more of the following content of the task: a task identifier ID, a task type, task content, a task execution body, and a task status. For detailed description of the method, refer to the description in the first aspect. Details are not described herein again.

In a possible implementation, the method further includes: receiving information about the terminal device from the terminal device, where the information about the terminal device includes one or more of the following: capability information of the terminal device, configuration information of the terminal device, and status information of the terminal device.

According to this method, the information about the terminal device may be obtained, to perform AI model training and/or inference on a base station side.

In a possible implementation, the one or more tasks include at least one data collection task, and the method further includes: receiving collected data from the terminal device.

In a possible implementation, the method further includes: sending an inference result to the terminal.

In a possible implementation, the one or more tasks include at least one model training task, and the method further includes: receiving model parameter gradient information from the terminal device.

According to a twentieth aspect not covered by the claims, a communication method is provided. An execution body of the method may be a terminal device or an apparatus that can support the terminal device in implementing this function, for example, a chip. This is not limited. The method includes: receiving information about one or more tasks from a base station by using an application layer, an artificial intelligence control AIC layer, radio resource control RRC signaling, a system message, a master information block MIB, a paging message, a MAC CE, or physical layer information, where the AIC layer is above a packet data convergence protocol PDCP layer, or the AIC layer is above an RRC layer, and an execution body of each of the one or more tasks is one or more terminal devices.

In a possible implementation, the method further includes: sending information about the terminal device to the base station, where the information about the terminal device includes one or more of the following: capability information of the terminal device, configuration information of the terminal device, and status information of the terminal device.

In a possible implementation, the one or more tasks include at least one data collection task, and the method further includes: sending collected data to the base station.

In a possible implementation, the method further includes: receiving an inference result from the base station.

In a possible implementation, the one or more tasks include at least one model training task, and the method further includes: sending model parameter gradient information to the base station.

According to a twenty-first aspect not covered by the claims, an apparatus is provided. The apparatus may be a base station, or may be another apparatus that can implement the method described in the nineteenth aspect. The another apparatus can be installed in the base station, or can match the base station for use. In a design, the apparatus may include a module one-to-one corresponding to the method/operation/step/action described in the nineteenth aspect. The module may be a hardware circuit, software, or a combination of a hardware circuit and software. In a design, the apparatus may include a processing module and a communication module.

In a possible implementation, the communication module sends information about one or more tasks to a terminal device through the processing module by using an application layer, an artificial intelligence control AIC layer, radio resource control RRC signaling, a system information block SIB, a master information block MIB, a paging message, a media access control MAC control element CE, or physical layer information, where the AIC layer is above a packet data convergence protocol PDCP layer, or the AIC layer is above an RRC layer, and an execution body of each of the one or more tasks is one or more terminal devices.

For other information that can be received and/or sent by the communication module, refer to the description in the nineteenth aspect. Details are not described herein again.

According to a twenty-second aspect not covered by the claims, an apparatus is provided. The apparatus may be a terminal device, or may be another apparatus that can implement the method described in the twentieth aspect. The another apparatus can be installed in the terminal device, or can match the terminal device for use. In a design, the apparatus may include a module one-to-one corresponding to the method/operation/step/action described in the twentieth aspect. The module may be a hardware circuit, software, or a combination of a hardware circuit and software. In a design, the apparatus may include a processing module and a communication module.

In a possible implementation, the communication module receives information about one or more tasks from a base station through the processing module by using an application layer, an artificial intelligence control AIC layer, radio resource control RRC signaling, a system information block SIB, a master information block MIB, a paging message, a MAC CE, or physical layer information, where the AIC layer is above a packet data convergence protocol PDCP layer, or the AIC layer is above an RRC layer, and an execution body of each of the one or more tasks is one or more terminal devices.

For other information that can be received and/or sent by the communication module, refer to the description in the twentieth aspect. Details are not described herein again.

According to a twenty-third aspect not covered by the claims, an embodiment of this application provides an apparatus. The apparatus includes a processor, configured to implement the method described in the nineteenth aspect. The apparatus may further include a memory, configured to store instructions. The memory is coupled to the processor, and when executing the instructions stored in the memory, the processor can implement the method described in the nineteenth aspect. The apparatus may further include a communication interface, and the communication interface is used by the apparatus to communicate with another device.

In a possible design, the apparatus includes:
the memory, configured to store program instructions; and
the processor, configured to send information about one or more tasks to a terminal device through the communication interface by using an application layer, an artificial intelligence control AIC layer, radio resource control RRC signaling, a system information block SIB, a master information block MIB, a paging message, a media access control MAC control element CE, or physical layer information, where the AIC layer is above a packet data convergence protocol PDCP layer, or the AIC layer is above an RRC layer, and an execution body of each of the one or more tasks is one or more terminal devices.

For other information that can be received and/or sent by the processor through the communication interface, refer to the description in the nineteenth aspect. Details are not described herein again.

According to a twenty-fourth aspect not covered by the claims, an embodiment of this application provides an apparatus. The apparatus includes a processor, configured to implement the method described in the twentieth aspect. The apparatus may further include a memory, configured to store instructions. The memory is coupled to the processor, and when executing the instructions stored in the memory, the processor can implement the method described in the twentieth aspect. The apparatus may further include a communication interface, and the communication interface is used by the apparatus to communicate with another device.

In a possible design, the apparatus includes:
the memory, configured to store program instructions; and
the processor, configured to receive information about one or more tasks from a base station through the communication interface by using an application layer, an artificial intelligence control AIC layer, radio resource control RRC signaling, a system information block SIB, a master information block MIB, a paging message, a MAC CE, or physical layer information, where the AIC layer is above a packet data convergence protocol PDCP layer, or the AIC layer is above an RRC layer, and an execution body of each of the one or more tasks is one or more terminal devices.

For other information that can be received and/or sent by the processor through the communication interface, refer to the description in the twentieth aspect. Details are not described herein again.

According to a twenty-fifth aspect not covered by the claims, an apparatus is provided, including an artificial intelligence application AIA module, a model and policy information repository MPIR, an operation status information base OSIB, and an artificial intelligence procedure management AIPM module.

The AIA module includes at least one application, and an application is used to perform model training or model update by using one or more of the following content: model information corresponding to the application, policy information of the application, operation status information of a terminal device, and operation status information of a radio access network RAN.

The MPIR is configured to store policy information and corresponding model information of each of the at least one application.

The OSIB is configured to store the operation status information of the terminal device and the operation status information of the RAN.

The AIPM is configured to manage a model training or model update procedure.

Each of the foregoing modules may be a software module, a hardware circuit, or a combination of a software module and a hardware circuit. This is not limited.

According to a twenty-sixth aspect not covered by the claims, an apparatus is provided, including an artificial intelligence application AIA module, a model and policy information repository MPIR, an operation status information base OSIB, and an artificial intelligence procedure management AIPM module.

The AIA module includes at least one application, and an application is used to perform inference by using one or more of the following content: model information corresponding to the application, policy information of the application, operation status information of a terminal device, and operation status information of a radio access network RAN.

The MPIR is configured to store policy information and corresponding model information of each of the at least one application.

The OSIB is configured to store the operation status information of the terminal device and the operation status information of the RAN.

The AIPM is configured to manage an inference procedure.

In the foregoing method embodiments in the first aspect to the twenty-fourth aspect, a subject (for example, a RIC or a base station) that publishes task configuration information or task information may include the apparatus in the twenty-sixth aspect and/or the apparatus in the twenty-seventh aspect. For example, obtained information may be correspondingly stored in the OSIB. A task publishing procedure may be triggered or managed by the AIPM.

According to a twenty-seventh aspect not covered by the claims, a method is provided, including: for an application, performing model training or model update by using one or more of the following content:
model information corresponding to the application;
policy information of the application;
operation status information of a terminal device; and
operation status information of a radio access network RAN.

Each of the foregoing modules may be a software module, a hardware circuit, or a combination of a software module and a hardware circuit. This is not limited.

According to a twenty-eighth aspect not covered by the claims, a method is provided, including: for an application, performing inference by using one or more of the following content:
model information corresponding to the application;
policy information of the application;
operation status information of a terminal device; and
operation status information of a radio access network RAN.

According to a twenty-ninth aspect not covered by the claims, a communication system is provided, including:
the apparatus in the fourth aspect, the apparatus in the fifth aspect, and the apparatus in the sixth aspect;
the apparatus in the fourth aspect, the apparatus in the fifth aspect, the apparatus in the sixth aspect, and the apparatus in the twenty-first aspect;
the apparatus in the seventh aspect, the apparatus in the eighth aspect, and the apparatus in the ninth aspect;
the apparatus in the seventh aspect, the apparatus in the eighth aspect, the apparatus in the ninth aspect, and the apparatus in the twenty-third aspect;
the apparatus in the seventh aspect, the apparatus in the ninth aspect, and the apparatus in the twenty-third aspect;
the apparatus in the thirteenth aspect, the apparatus in the fourteenth aspect, and the apparatus in the fifteenth aspect;
the apparatus in the thirteenth aspect, the apparatus in the fourteenth aspect, the apparatus in the fifteenth aspect, and the apparatus in the twenty-first aspect;
the apparatus in the sixteenth aspect, the apparatus in the seventeenth aspect, and the apparatus in the eighteenth aspect;
the apparatus in the sixteenth aspect, the apparatus in the seventeenth aspect, the apparatus in the eighteenth aspect, and the apparatus in the twenty-third aspect;
the apparatus in the twenty-first aspect and the apparatus in the twenty-second aspect; or
the apparatus in the twenty-third aspect and the apparatus in the twenty-fourth aspect.

According to a thirtieth aspect, a computer-readable storage medium is provided, including instructions. When the instructions are run on a computer, the computer is enabled to perform the method in any one of the foregoing method embodiments.

According to a thirty-first aspect, a computer program product is provided, including instructions. When the computer program product is run on a computer, the computer is enabled to perform the method in any one of the foregoing method embodiments.

According to a thirty-second aspect, a chip system is provided. The chip system includes a processor, and may further include a memory, configured to implement the method in any one of the foregoing method embodiments. The chip system may include a chip, or may include a chip and another discrete device.

### BRIEF DESCRIPTION OF DRAWINGS

FIG. 1(a) and FIG. 1(b) each are an example diagram of a protocol stack according to an embodiment of this application;
FIG. 2 is an example diagram of a structure of a RAN according to an embodiment of this application;
FIG. 3 is an example diagram of a structure of a gNB according to an embodiment of this application;
FIG. 4 is an example diagram of an air interface protocol stack according to an embodiment of this application;
FIG. 5 is an example diagram of a structure of a RIC module according to an embodiment of this application;
FIG. 6(a) to FIG. 6(c) each are an example diagram of a network architecture according to an embodiment of this application;
FIG. 7(a) to FIG. 7(d) each are an example diagram of a protocol stack according to an embodiment of this application;
FIG. 8(a) shows an example 1 of an architecture according to an embodiment of this application, and FIG. 8(b) is an example diagram of a procedure of exchanging information by using the architecture in FIG. 8(a), wherein FIG. 8(b) is covered by the claims;
FIG. 9(a) shows an example 2 of an architecture according to an embodiment of this application, and FIG. 9(b) is an example diagram of a procedure of exchanging information by using the architecture in FIG. 9(a);
FIG. 10 shows an example 3 of an architecture according to an embodiment of this application;
FIG. 11 shows an example 4 of an architecture according to an embodiment of this application; and
FIG. 12 and FIG. 13 each are an example diagram of a structure of an apparatus according to an embodiment of this application.

### DESCRIPTION OF EMBODIMENTS

Technical solutions provided in embodiments of this application may be applied to various communication systems, for example, a long term evolution (long term evolution, LTE) system, a 5th generation (5th generation, 5G) mobile communication system, a wireless fidelity (wireless fidelity, Wi-Fi) system, a future 6th generation mobile communication system, or a system integrating a plurality of types of communication systems. This is not limited in embodiments of this application. 5G may also be referred to as new radio (new radio, NR).

The technical solutions provided in embodiments of this application may be applied to various communication scenarios, for example, may be applied to one or more of the following communication scenarios: enhanced mobile broadband (enhanced Mobile Broadband, eMBB) communication, ultra-reliable low-latency communication (ultra-reliable low-latency communication, URLLC), machine type communication (machine type communication, MTC), massive machine type communications (massive machine type communications, mMTC), device-to-device (device-to-device, D2D) communication, vehicle-to-everything (vehicle to everything, V2X) communication, vehicle-to-vehicle (vehicle to vehicle, V2V) communication, the internet of things (internet of things, IoT), and the like.

The technical solutions provided in embodiments of this application may be applied to communication between communication devices, and in particular, may be applied to communication between communication devices in a mobile communication network. Communication between communication devices may include: communication between a network device and a terminal device, communication between network devices, and/or communication between terminal devices. In embodiments of this application, the term "communication" may also be described as "transmission", "information transmission", "data transmission", "signal transmission", or the like. Transmission may include sending and/or receiving. In embodiments of this application, communication between a network device and a terminal device is used as an example to describe the technical solutions. A person skilled in the art may also use the technical solutions for communication between another scheduling entity and a subordinate entity, for example, communication between a macro base station and a micro base station, and/or communication between a first terminal device and a second terminal device. For example, the scheduling entity may perform radio resource management (radio resource management, RRM) on the subordinate entity. In embodiments of this application, "a plurality of" may be two, three, four, or more. This is not limited in embodiments of this application. "At least one" may be one or more. This is not limited in embodiments of this application.

In embodiments of this application, communication between a network device and a terminal device includes: The network device sends downlink data, a downlink signal, or downlink information to the terminal device, and/or the terminal device sends uplink data, an uplink signal, or uplink information to the network device.

In embodiments of this application, "/" may indicate an "or" relationship between associated objects. For example, A/B may indicate A or B. "And/or" may be used to describe three relationships between associated objects. For example, A and/or B may indicate three cases: Only A exists, both A and B exist, and only B exists. A and B may be singular or plural. In embodiments of this application, words such as "first", "second", "A", and "B" may be used to distinguish between technical features with same or similar functions. Terms such as "first", "second", "A", and "B" do not limit a quantity and an execution sequence, and the terms such as "first" and "second" do not indicate a definite difference. In embodiments of this application, words such as "example" or "for example" are used to represent giving an example, an illustration, or a description, and an embodiment or a design scheme described as "example" or "for example" should not be construed as being more preferred or advantageous than another embodiment or design scheme. The words such as "example" or "for example" are used to present a related concept in a specific manner for ease of understanding.

The terminal device in embodiments of this application may also be referred to as a terminal, and may be a device with wireless sending and receiving functions. The terminal may be deployed on land, and include an indoor terminal, an outdoor terminal, a handheld terminal, and/or a vehicle-mounted terminal; or may be deployed on a water surface (for example, on a ship); or may be deployed in the air (for example, on an aircraft, a balloon, or a satellite). The terminal device may be user equipment (user equipment, UE). The UE includes a handheld device, a vehicle-mounted device, a wearable device, or a computing device with a wireless communication function. For example, the UE may be a mobile phone (mobile phone), a tablet computer, or a computer with wireless sending and receiving functions. The terminal device may alternatively be a virtual reality (virtual reality, VR) terminal device, an augmented reality (augmented reality, AR) terminal device, a wireless terminal in industrial control, a wireless terminal in self driving, a wireless terminal in telemedicine, a wireless terminal in a smart grid, a wireless terminal in a smart city (smart city), a wireless terminal in a smart home (smart home), and/or the like.

In embodiments of this application, an apparatus configured to implement a function of a terminal device may be a terminal device, or may be an apparatus that can support the terminal device in implementing the function, for example, a chip system. The apparatus can be installed in the terminal device, or can match the terminal device for use. In embodiments of this application, the chip system may include a chip, or may include a chip and another discrete component. In the technical solutions provided in embodiments of this application, the apparatus configured to implement a function of a terminal device is a terminal device. The technical solutions provided in embodiments of this application are described by using an example in which the terminal device is UE.

The network device in embodiments of this application includes a base station (base station, BS), and may be a device that is deployed in a radio access network (radio access network, RAN) and that can communicate with a terminal device. Optionally, the radio access network may be referred to as an access network for short. There may be a plurality of forms of base stations, such as a macro base station, a micro base station, a relay node, or an access point. The base station in embodiments of this application may be a base station in a 5G system, a base station in an LTE system, or a base station in another system. This is not limited. The base station in the 5G system may also be referred to as a transmission reception point (transmission reception point, TRP) or a next-generation NodeB (generation NodeB, gNB or gNodeB).

In embodiments of this application, an apparatus configured to implement a function of a network device may be a network device, or may be an apparatus that can support the network device in implementing the function, for example, a chip system. The apparatus can be installed in the network device, or can match the network device for use. In the technical solutions provided in embodiments of this application, the apparatus configured to implement a function of a network device is a network device. The technical solutions provided in embodiments of this application are described by using an example in which the network device is a base station.

For example, the base station is a gNB. The gNB and UE may communicate with each other through an air interface. A network architecture and/or a protocol stack used when another type of base station communicates with UE is similar to or the same as a network architecture and/or a protocol stack used when the gNB communicates with the UE. Details are not described again.

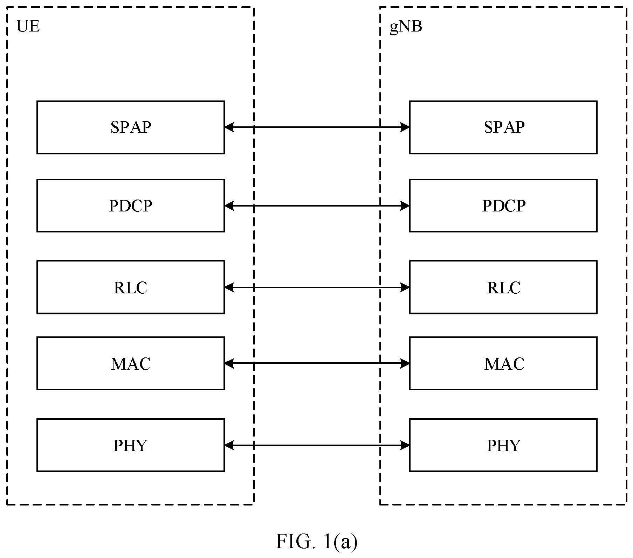

FIG. 1(a) is an example diagram of a protocol stack used when a gNB and UE perform user plane (user plane) data exchange. User plane data exchange between the gNB and the UE relates to a service data adaptation protocol (service data adaptation protocol, SDAP) layer, a packet data convergence protocol (packet data convergence protocol, PDCP) layer, a radio link control (radio link control, RLC) layer, a media access control (media access control, MAC) layer, and a physical layer (physical layer, PHY) on each of a gNB side and a UE side.

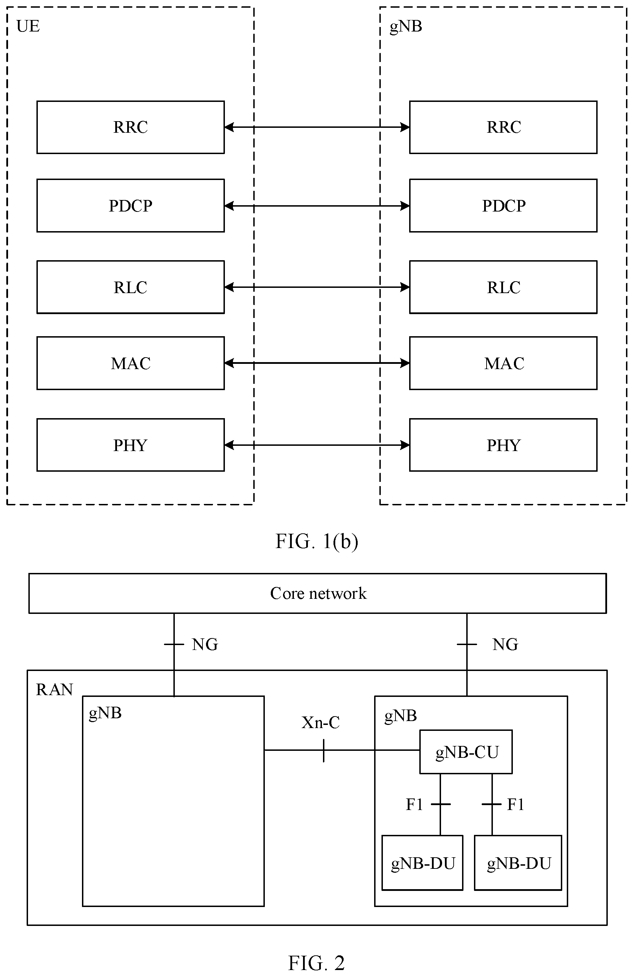

FIG. 1(b) is an example diagram of a protocol stack used when a gNB and UE perform control plane (control plane) data exchange. Control plane data exchange between the gNB and the UE relates to a radio resource control (radio resource control, RRC) layer, a PDCP layer, an RLC layer, a MAC layer, and a PHY layer on each of a gNB side and a UE side.

In embodiments of this application, the RRC layer may be configured to control an air interface radio resource and an air interface connection. The SDAP layer may be configured to perform mapping between a quality of service (quality of service, QoS)-flow (flow) and a data radio bearer (data radio bearer, DRB). The QoS-flow is a service data flow that has a specific QoS requirement.

In embodiments of this application, for a network side (such as a gNB side) or a UE side, when a control plane and a user plane include protocol layers with a same name, for example, PDCP layers, RLC layers, MAC layers, or PHY layers, it indicates that the corresponding protocol layer supports both a user plane function and a control plane function.

A base station is a part of a RAN and is configured to perform wireless communication with UE. For example, FIG. 2 is an example diagram of a structure of a possible RAN (for example, a RAN in a 5G system). Optionally, the RAN in the 5G system may be referred to as a next generation radio access network (next generation radio access network, NG-RAN). As shown in FIG. 2, the RAN may communicate or exchange data with a core network (core network, CN) through an NG interface. For example, a name of a base station is gNB, and the RAN may include one or more gNBs. Different gNBs may communicate or exchange data through an Xn-C interface. For any gNB, the gNB may be an integrated gNB, that is, the gNB is a complete module, entity, network element, or apparatus; or the gNB may include a plurality of modules, entities, network elements, or apparatuses. For example, the gNB may include two parts: a central unit (central unit, CU) and a distributed unit (distributed unit, DU). This design may be referred to as CU and DU separation, or CU/DU separation. The CU of the gNB may further be denoted as a gNB-CU, and the DU of the gNB may further be denoted as a gNB-DU. The CU and the DU of the gNB may communicate, exchange data, or exchange information through an F1 interface. One gNB may include one or more CUs. One gNB may include one or more DUs. One DU may be connected to one CU. One CU may be connected to one or more DUs. For another gNB, a core network, and/or UE, a combination of components of a gNB may be considered as the gNB. For example, if a gNB includes a CU and a DU, for another gNB, a core network, and/or UE, a combination of the CU and the DU of the gNB may be considered as the gNB.

In embodiments of this application, an interface between any two network elements or any two entities in a RAN may be in a wired or wireless form. In other words, the interface may be a wired interface such as an optical fiber or a cable, or may be a wireless interface. This is not limited in embodiments of this application. Different interfaces may be in a same form or different forms. This is not limited.

In embodiments of this application, an interface between any two network elements or any two entities in a RAN is configured to exchange data or information between the two network elements or the two entities. In embodiments of this application, a name of the interface is not limited. For example, the interface may be referred to as a z^{th} interface, where z is a positive integer. Values of z of different interfaces are different.

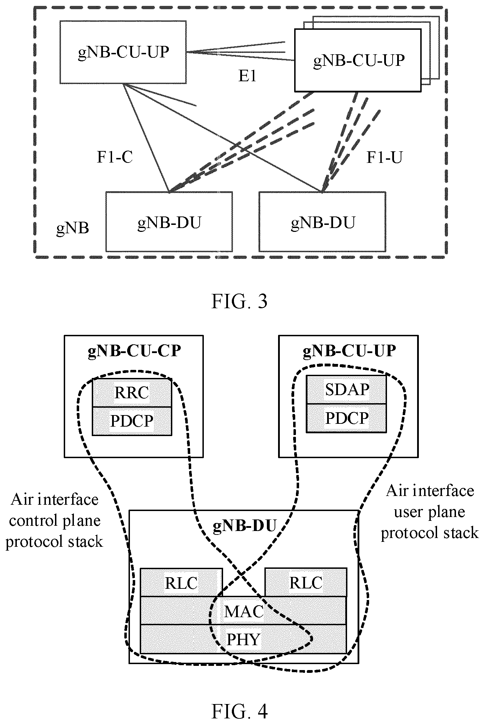

Optionally, for a CU in a gNB, the CU may be a complete module, entity, network element, or apparatus, or the CU may include a plurality of modules, entities, network elements, or apparatuses. For example, the CU may include a CU-CP (control plane, control plane) and a CU-UP (user plane, user plane). This design may be referred to as CP and UP separation, or CP/UP separation. The CU-CP of the gNB may further be denoted as a gNB-CU-CP, and the CU-UP of the gNB may further be denoted as a gNB-CU-UP. For example, FIG. 3 is an example diagram of a structure of a gNB. As shown in FIG. 3, one gNB may include one CU-CP. One gNB may include one or more CU-UPs. One CU-UP may be connected to one CU-CP, and one CU-CP may be connected to one or more CU-UPs. An interface between a CU-UP and a CU-CP may be referred to as an E1 interface. One DU may be connected to one CU-CP, and one CU-CP may be connected to one or more DUs. An interface between a DU and a CU-CP may be referred to as an F1-C interface. One DU may be connected to one or more CU-UPs. One CU-UP may be connected to one or more DUs. An interface between a DU and a CU-UP may be referred to as an F1-U interface.

FIG. 4 is an example diagram of an air interface protocol stack on a gNB side in a case of CP/UP separation. As shown in FIG. 4, two RLC layers in a DU respectively implement a control plane function and a user plane function, a MAC layer and a PHY layer in the DU each can implement both a control plane function and a user plane function, an RRC layer and a control plane PDCP layer are in a CU-CP, and an SDAP layer and a user plane PDCP layer are in a CU-UP.

New requirements, new scenarios, and new features of mobile communication networks pose unprecedented challenges to network planning, and operation and maintenance. In this case, if manual experience or a simple algorithm is still applied to a communication network, an efficiently running mobile communication network may not be implemented. For example, one or more of the following disadvantages may be caused for network planning, network configuration optimization, and/or resource scheduling in a network: high time consumption, high costs, poor optimization algorithm adaptability, and poor scheduling algorithm adaptability. As a result, the new challenges for the mobile communication networks may fail to be dealt with.

To resolve the foregoing problem, an artificial intelligence (artificial intelligence, AI) technology may be introduced into a mobile communication network. The AI technology aims to enable a machine to have a learning capability and accumulate experience, to resolve problems such as natural language understanding, image recognition, and/or playing chess that can be resolved by human beings based on experience. The AI technology in embodiments of this application mainly relates to machine learning. Machine learning may be considered as a method. The method can provide a learning capability for a machine, to enable the machine to complete a function that cannot be completed through only direct programming. In machine learning, a machine may train or learn training data to obtain an AI model. The AI model may be used to predict a test sample to obtain a prediction result. In embodiments of this application, the AI model may be briefly referred to as a model, a machine learning (machine learning, ML) model, an AI/ML model, an AI network, or another name. This is not limited in embodiments of this application. In embodiments of this application, prediction performed by using a model may also be referred to as inference performed by using the model. This is not limited in embodiments of this application.

To enable a RAN to cope with new challenges, the AI technology may be introduced into the RAN to improve efficiency of network planning, network configuration, resource scheduling, and/or the like, to implement network intelligence and implement an efficient RAN. For example, a multiple-input multiple-output (multiple input multiple output, MIMO) algorithm in the RAN is used as an example. Commonly used MIMO algorithms mainly include a linear operation of a matrix, and are based on assumptions such as Gaussian distribution. However, an actual channel environment is complex and changeable, and these commonly used algorithms have a limited capability for adapting to the actual channel environment. For example, a complex non-linear environment cannot be simulated, and it is difficult to reach an upper limit of theoretical performance. However, the AI technology can simulate a nonlinear model, to effectively adapt to the actual channel environment and approach a performance limit. For example, according to the AI technology, a machine can obtain training data, perform model training by using a machine learning algorithm and the training data, and perform inference on inference data by using a trained model to obtain an inference result. For example, the AI technology can predict or infer a service data amount in a future period of time.

Based on the foregoing consideration, how to introduce the AI technology into the RAN is a main problem to be resolved. In a RAN-related protocol, including but not limited to a 3rd generation partnership project (3rd generation partnership project, 3GPP)-related protocol, a new function may be introduced into the RAN in a patched manner, to meet a new network optimization requirement. However, a disadvantage of this manner is poor scalability.

To introduce an AI function that is easy to extend in the RAN, embodiments of this application provide the following four parts: Part 1 is a function module, configured to implement the AI function. Part 2 is a network architecture used when the function module is applied to the RAN. Part 3 is a protocol stack for implementing the AI function. Part 4 is a communication method for implementing the AI function between the RAN and UE. The following separately provides detailed description.

The method provided in embodiments of this application is not limited to a specific machine learning algorithm, and for example, may be supervised learning, unsupervised learning, a neural network, and/or enhanced learning. The supervised learning may include one or more of the following specific algorithms: a support vector machine (support vector machine, SVM), a decision tree (decision tree), naive Bayesian classification (naive bayesian classification), and k-nearest neighbor (k-nearest neighbor, KNN). The unsupervised learning may include one or more of the following specific algorithms: principal component analysis (principal component analysis, PCA), singular value decomposition (singular value decomposition, SVD), and k-means clustering.

Optionally, in embodiments of this application, for an AI model, learning of the AI model may be implemented in a RAN. This method can save a processing resource on a UE side, and reduce power consumption on the UE side.

Alternatively, optionally, in embodiments of this application, for an AI model, federated learning may be used for learning of the AI model. Federated learning may be considered as a distributed AI training method. In federated learning, a training procedure of the AI model may be performed on a plurality of UEs, instead of being aggregated onto a base station or a server on a RAN side. This method can reduce learning duration and signaling overheads. In some specific scenarios, a federated learning algorithm helps protect user privacy. For example, a specific process of federated learning is that a central node (for example, a base station or another network element in a RAN) sends an AI model to a plurality of participant nodes (for example, UE), and the participant nodes perform AI model training based on the AI model and data collected or measured by the participant nodes, and report AI models trained by the participant nodes to the central node in a gradient manner. The central node processes gradient information fed back by the participant nodes (for example, performs averaging or another operation) to obtain a new AI model. Optionally, the central node may send the new AI model to a plurality of participant nodes, so that the plurality of participant nodes may perform AI model training based on the AI model and data collected or measured by the participant nodes. The central node may obtain an updated AI model again based on gradient information fed back by the participant nodes. In federated learning, participant nodes in all training procedures may be the same or may be different. This is not limited in embodiments of this application.

In embodiments of this application, learning manners of different AI models may be the same or different. This is not limited.

Part 1: Description of a module for implementing an AI function

In embodiments of this application, a module for implementing an AI function may be referred to as a radio intelligence control (radio intelligence control, RIC) module, an AI module, an intelligent module, a machine learning module, or another name. This is not limited in embodiments of this application. For ease of description, an example in which a name of a module for implementing an AI function is a RIC module is used for description. In embodiments of this application, the AI function may also be referred to as a RIC function, and the AI function includes but is not limited to one or more of the following functions: data collection, model downloading, model training, model update, model publishing, and inference. Collected data may be used to perform one or more of the following functions: model training, model update, and inference. Data used to perform model training or model update may also be referred to as training data, a training sample, or another name. This is not limited in embodiments of this application. Data used to perform inference may also be referred to as a test sample, a prediction sample, or another name. This is not limited in embodiments of this application.

In embodiments of this application, to implement an AI function in a RAN, information may be transmitted between different network elements. The information may be referred to as AI data, AI information, RIC data, RIC information, or another name. This is not limited. For example, information stored in the following RIC module may be collectively referred to as AI information.

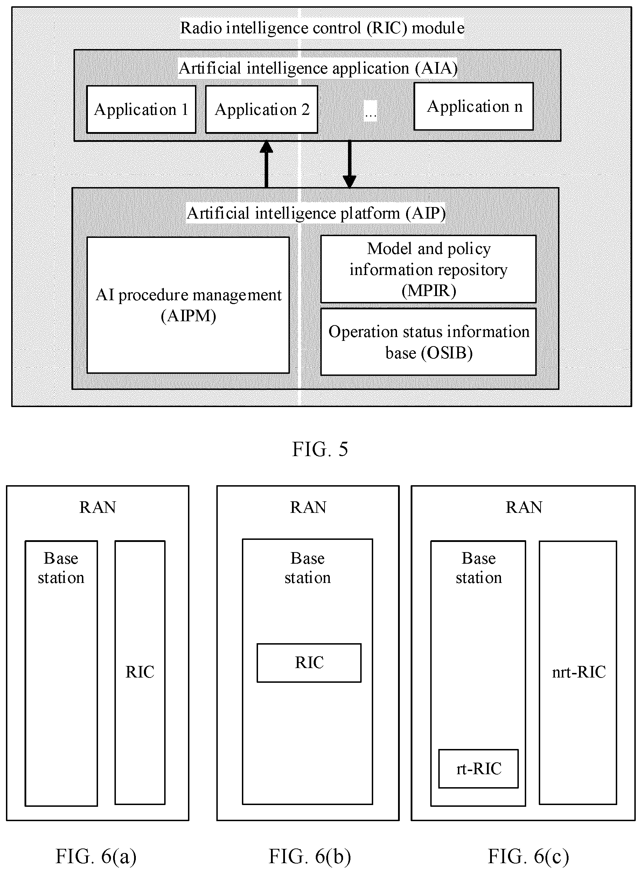

The RIC module may be an integrated module, or may include a plurality of modules. In a possible implementation, FIG. 5 is an example diagram of a structure in which a RIC module includes a plurality of modules.

The RIC module includes a first module and a second module.

The first module in the RIC module is configured to perform model training, model update, and/or inference. For ease of description, model training and model update may be collectively referred to as model training below. An output of the first module is at least one of information about a model obtained through training, information about an updated model obtained through training, and an inference result. The first module may also be referred to as another name. This is not limited in embodiments of this application. For example, as shown in FIG. 5, the first module may be referred to as an artificial intelligence application (artificial intelligence application, AIA) module. For ease of description, embodiments of this application may be described by using an example in which a name of the first module is the AIA module.

In embodiments of this application, the AIA module may include one or more application instances (instances), and one application instance corresponds to (is used to implement or is used to assist in implementing) one or more network functions. For example, one application instance may be corresponding to one or more of the following network functions: radio access technology (radio access technology, RAT) selection, load balancing, mobility management, network energy saving, coverage optimization, flow control, scheduling, channel coding, modulation, or the like. This is not limited in embodiments of this application. For example, one application instance may alternatively be corresponding to a plurality of network functions, and aims to implement comprehensive optimization of the plurality of network functions according to a specific policy. In embodiments of this application, the application instance may also be collectively referred to as an application, an AI application instance, an AI application, a RAN application, or another name. This is not limited. In embodiments of this application, for an application with a specific function, a specific name of the application is not limited. For example, an application used to implement RAT selection may be referred to as a RAT selection application, an r^{th} application, or the like. Herein, r is a positive integer, and values of r may be different for different applications.

In embodiments of this application, a difference between different application instances may be: implementing different network functions; or implementing functions of a same type for different nodes, such as different UEs, different base stations, different DUs, different CUs, or UE and a base station. This is not limited.

When implementing a network function, an application in the AIA module needs to obtain model information, policy information, and/or AI operation status information of the application, and use the information as an input parameter to perform model training or inference. The information may be obtained and stored by the second module in the RIC module. A model of an application may be referred to as a model corresponding to the application. An application may be configured to be capable of performing model training but incapable of performing inference, capable of performing inference but incapable of performing model training, or capable of performing model training and capable of performing inference. This is not limited in embodiments of this application.

Different applications differ in terms of one or more of the following information: model information, policy information, AI operation status information, and targeted nodes. One application corresponds to one model. One model may correspond to one application. Alternatively, one module may correspond to a plurality of different applications at the same time, but the different applications differ in terms of one or more of the following information: policy information, AI operation status information, and targeted nodes.

The second module in the RIC module is configured to store AI information, and/or manage an AI-related procedure. The second module may also be referred to as another name. This is not limited in embodiments of this application. For example, as shown in FIG. 5, the second module may be referred to as an artificial intelligence platform (artificial intelligence platform, AIP) module. For ease of description, embodiments of this application may be described by using an example in which a name of the second module is the AIP module.

The AIP module may be an integrated module, or may include a plurality of function modules. This is not limited in embodiments of this application. In a possible implementation, the AIP module includes a first submodule, a second submodule, and a third submodule.

The first submodule of the AIP module is configured to store model information of one or more models. Model information of a model may be obtained by the AIA module, and is used by a corresponding application in the AIA module to perform model training and/or inference. The first submodule may also be referred to as another name, for example, a model repository (model repository, MR) or a model information repository (model information repository, MIR). This is not limited in embodiments of this application. For ease of description, embodiments of this application may be described by using an example in which a name of the first submodule is the MIR. For example, the RIC module obtains model information of one or more models from a CN, a network management device (which may also be referred to as operation, administration, and maintenance (OAM, operation, administration, and maintenance)), or a third-party application, and the model information may be stored in the MIR. For another example, after performing model training or model update, an application in the AIA module stores model information in the MIR.

Optionally, the MIR may be further configured to store policy information. The policy information may also be referred to as decision information, a parameter, a condition, auxiliary information, or another name. This is not limited in embodiments of this application. In this case, the MIR may also be referred to as a model and policy information repository (model and policy information repository, MPIR) or another name. As described above, for an application, the AIA module may obtain related policy information stored in the MPIR, and the related policy information is used by the application to perform model training or inference. In this case, the related policy information may also be referred to as policy information of the application. The policy information of the application may be used as an input parameter of a model, and is used to perform model update and training and/or inference. Optionally, the MPIR may store specific policy information of each of one or more applications. For example, the MPIR may store information about one or more of the following policies: a handover decision policy of a mobility load balancing application, priority information of a plurality of RATs of a RAT application, and shutdown priority information of a plurality of RATs of a network energy saving application. Optionally, the MPIR may store common policy information of a plurality of applications. For example, the MPIR stores a conflict processing policy for optimization targets of a plurality of applications, to resolve a conflict when optimization targets of a plurality of applications conflict.

Optionally, the policy information may be stored in another module that is in the RIC module and that is different from the MIR. This is not limited in embodiments of this application.

The second submodule of the AIP module is configured to store status information of UE and/or a RAN (for example, a base station). The status information may also be referred to as operation status information, a parameter, or another name. This is not limited in embodiments of this application. The second submodule may also be referred to as another name, for example, a status information base (status information base, SIB) or an operation status information base (operation status information base, OSIB). This is not limited in embodiments of this application. For ease of description, as shown in FIG. 5, embodiments of this application may be described by using an example in which a name of the second submodule is the OSIB. For example, the RIC obtains operation status information of UE and/or a RAN from a CN, an OAM, a third-party application, the UE, and/or the RAN, and the operation status information may be stored in the OSIB. As described above, for an application, the AIA module may obtain operation status information stored in the OSIB, and the operation status information is used by the application to perform model training and/or inference.

The operation status information of the UE or the RAN may include one or more of the following information of the UE or the RAN: AI capability information, AI configuration information, and AI status information.

### AI capability information (capability information):

The AI capability information of the UE may include one or more of the following information of the UE: AI application support capability information, AI data collection capability information, and an AI result application capability.

Specifically, the AI application support capability information of the UE includes one or more of the following information: a computing capability of the UE, a storage capability of the UE, an AI application supported by the UE (where for example, the AI application may be represented as an application identifier, an application name, an application index, or an application type in embodiments of this application), an AI/ML model supported by the UE (where for example, the AI/ML model may be represented as a model identifier, a model name, a model index, or a model type in embodiments of this application), an AI working mode supported by the UE, and the like.

In embodiments of this application, the AI working mode includes one or more of the following content: performing AI training, performing AI inference, performing centralized AI training or distributed AI training, and performing centralized AI inference or distributed AI inference.

In embodiments of this application, centralized AI training means that a single node (for example, UE or a base station) performs AI training, and distributed AI training means that a single node performs a part of an AI training procedure. For example, a distributed AI training procedure may include a plurality of training phases, each of a plurality of different nodes performs partial training, and the plurality of nodes jointly complete the entire training procedure. Training procedures of these nodes may be serial, or may be parallel, or may be serial and parallel. This is not limited. For example, federated training is a type of distributed training.

In embodiments of this application, centralized AI inference means that a single node performs AI inference, and distributed AI inference means that a single node performs a part of an AI inference procedure. For example, a distributed AI inference procedure may include a plurality of inference phases, each of a plurality of different nodes performs partial inference, and the plurality of nodes jointly complete the entire inference procedure. Inference procedures of these nodes may be serial, or may be parallel, or may be serial and parallel. This is not limited.

The AI data collection capability information of the UE includes one or more of the following information: a UE type, a slice type supported by the UE, a data collection-related measurement type or method supported by the UE (refer to related description in the 3GPP protocol TS 37.320, but it is not limited to a measurement type defined in the protocol), a positioning method supported by the UE, a RAT type supported by the UE (that is, a specific RAT whose data is supported to be collected by the UE), a clock type supported by the UE, clock precision supported by the UE, a quality of experience (quality of experience, QoE) measurement type or method supported by the UE, a power control method supported by the UE, a layer 1 (physical layer) measurement method supported by the UE, a band range supported by the UE, a latency measurement manner supported by the UE, a latency measurement granularity or step supported by the UE, and the like.

The AI result application capability information of the UE includes one or more of the following information: a power saving solution supported by the UE, a mobility solution supported by the UE, a RAT supported by the UE (that is, a specific RAT to which the UE supports application of an AI result), maximum transmit power supported by the UE, a quantity of multiple-input multiple-output (multiple input multiple output, MIMO) layers supported by the UE, and the like.

The AI capability information of the RAN includes one or more of the following information: a supported network slice type, a supported measurement type (refer to related description in the 3GPP protocol TS 37.320, but it is not limited to a measurement type defined in the protocol), a supported positioning method, a supported RAT type, a type of a clock, precision of a clock, a measurement type supported when QoE measurement is performed, a supported layer 1 measurement method, a supported power control method, a band range, a frequency, a latency measurement type, a latency measurement granularity, and the like. The layer 1 measurement method includes: whether beam granularity measurement such as RSRP measurement and/or RSRQ measurement is supported; and/or whether zero power interference measurement is supported. The latency measurement type includes: RLC/MAC segment latency measurement, and/or total latency measurement. The latency measurement granularity includes: a data packet (packet), a QoS flow (flow), and/or a bearer RB.

In embodiments of this application, the RAT may be a global system for mobile communications (global system for mobile communications, GSM), a universal mobile telecommunications system (universal mobile telecommunications system, UMTS), LTE, 5G, Wi-Fi, bluetooth (bluetooth), or the like. This is not limited in embodiments of this application. The RAT type supported by the RAN or the UE includes at least one of the plurality of types of RATs.

### AI configuration information (configuration information):

The AI configuration information of the UE may include one or more of the following information configured for the UE: an AI application (where for example, the AI application may be represented as a configured application identifier, application name, application index, or application type in embodiments of this application), an AI/ML model corresponding to the AI application (where for example, the AI/ML model may be represented as a model identifier, a model name, a model index, or a model type in embodiments of this application), an AI working mode, a power saving solution, a service parameter (where for example, the service parameter may include a data radio bearer (data radio bearer, DRB) configuration, a protocol data unit (protocol data unit, PDU) session (session) configuration, and the like in embodiments of this application), a serving base station, a serving cell, and/or the like.

The AI configuration information of the RAN may include one or more of the following information: a network slice type used by a base station, a working frequency of a subordinate cell, bandwidth of the subordinate cell, synchronization signal and PBCH block (synchronization signal and PBCH block, SSB) downlink transmit power of the subordinate cell, an SSB cycle of the subordinate cell, a private network configuration in the RAN, a network sharing configuration (RAN sharing related configuration), information about a node (such as a Wi-Fi access point (access point, AP), a non-standalone base station, a small cell, an IAB node, and/or a relay node) in the RAN, and the like. The SSB may also be replaced with a synchronization signal, a broadcast channel, a downlink reference signal, or the like.

### AI status information (status information):

When an application in an AIA module uses corresponding AI status information to perform model training, the corresponding AI status information may be considered as training data. When an application in an AIA module uses corresponding AI status information to perform inference, the corresponding AI status information may be considered as test data, prediction data, or inference data.

The AI status information of the UE may include one or more of the following information of the UE: service status information, resource usage status information, radio channel state information, location information, a moving speed, a moving track, an RRC connection status of the UE, user/UE preference information, and the like.

In embodiments of this application, the service status information may include one or more of the following information: a running service, an average data rate, an average air interface transmission latency, a packet loss rate, a QoE satisfaction level, a traffic pattern (traffic pattern), and the like.

In embodiments of this application, the resource usage status information may include one or more of the following information: a used computing resource, a used storage resource, an air interface resource usage percentage, and the like.

In embodiments of this application, the radio channel state information may include one or more of the following information: reference signal received power (reference signal received power, RSRP) of a serving cell measured by the UE, reference signal received quality (reference signal received quality, RSRQ) of the serving cell measured by the UE, uplink receiving interference measured by a base station or an integrated access and backhaul (integration of access and backhaul, IAB) node, a downlink shared spectrum resource conflict probability measured by the base station or the IAB node, and the like. One UE may have one or more serving cells. This is not limited in embodiments of this application. UE-related uplink receiving interference may be measured on a network side.

In embodiments of this application, user/UE preferences include one or more of the following content: a preference for a power saving mode, a RAT selection preference, an operator selection preference, a preference for an AI working mode, and the like. The user/UE preference information may be set by a user that uses the UE. For example, the user may set one or more of the following content: a power saving mode, an operator network selection sequence, a RAT selection sequence, and the like. The UE or the RAN node may set different preferences based on a change in a battery level of the UE or the RAN node. Alternatively, the user/UE preference information may be stored in an MPIR as policy information. Alternatively, some information (for example, preference information set in subscription information, where such preference information rarely changes) in the user/UE preference information is stored in an MPIR, and the other information is stored in an OSIB. For example, user/UE preference information obtained by a RIC from a CN, an OAM, or a third-party application is stored in an MPIR, and user/UE preference information reported by the UE or the RAN node to the RIC is stored in an OSIB.

The AI status information of the RAN may include one or more of the following information: service status information, resource usage status information, radio channel state information, location information of a RAN node (such as a base station, an IAB, or a relay node), a moving speed, a moving track, load of a subordinate cell, a cell shutdown status of the subordinate cell, a service QoS guarantee status of the subordinate cell, a network slice type used by a base station, and the like.

The third submodule of the AIP module is configured to manage or implement one or more of the following AI functions: initialization, model publishing, data collection, model training, inference, and inference result publishing. The third submodule may also be referred to as another name, for example, a procedure management (procedure management, PM) module, an AI procedure management (AI procedure management, AIPM) module, or an AI processing module. This is not limited in embodiments of this application. For ease of description, embodiments of this application may be described by using an example in which a name of the third submodule is the AIPM.

For example, the AIPM may trigger or manage an initialization procedure of the RIC module. This procedure may occur during RIC module setup (for example, power-on). In this case, the RIC module may obtain the AI capability information and the AI configuration information of the UE from the CN, the UE, the base station, and/or the like. The RIC module may obtain the AI capability information and the AI configuration information of the RAN from the CN and/or the base station. Optionally, when the AI capability information or the AI configuration information of the UE changes, the UE may notify the RIC module of updated AI capability information or AI configuration information through the base station or the CN. When the AI capability information or the AI configuration information of the RAN changes, the RAN may notify the RIC module of updated AI capability information or AI configuration information through the base station or the CN. The RIC module may store obtained AI capability information and AI configuration information in the OSIB.

For example, the AIPM may trigger or manage a data collection procedure. This procedure may occur during RIC module running. The AIPM may trigger the RIC module to obtain the AI status information of the UE and/or the RAN periodically, based on an event trigger, and/or based on a request. Optionally, a manner agreed on in a protocol or a manner of assigning a data collection task by using the RIC module may be used to enable the UE and/or the RAN to learn of a type of AI status information that the RIC module expects to collect. The RIC module may store obtained AI status information in the OSIB.

For example, the AIPM may trigger or manage a model publishing function. This procedure may occur during RIC module running, and is used by the RIC module to publish model information to the base station and/or the UE. The model information is stored in the MPIR.

For example, the AIPM may trigger or manage a model training (including model update) procedure. This procedure may occur during RIC module running. For example, for an application, the AIPM may trigger the AIA module to obtain, from the RIC module, one or more of the following information used when the application performs model training: model information, policy information, and operation status information of the UE and/or the RAN. The application performs model training based on the information. The AIA module may store model information obtained through training or updated model information in the MPIR.

For example, the AIPM may trigger or manage an inference procedure. This procedure may occur during RIC module running. For example, for an application, the AIPM may trigger the AIA module to obtain, from the RIC module, one or more of the following information used when the application performs inference: model information, policy information, and operation status information of the UE and/or the RAN. The application performs inference based on the information. Optionally, the AIPM may trigger an inference result publishing procedure, to publish an inference result of the application to the RAN and/or the UE. The inference result may also be published to the CN, the OAM, and/or the third-party application. This is not limited in embodiments of this application.

Optionally, any two of the first submodule, the second submodule, and the third submodule may be combined into one submodule. For example, the first submodule and the second submodule may be combined into one submodule. Information stored in the first submodule and information stored in the second submodule may be collectively referred to as AI information. The AI information includes but is not limited to the foregoing related information.

Part 2: Network architecture used when a RIC module is applied to a RAN

In embodiments of this application, a RIC module may be a physical network element or a function module. This is not limited in embodiments of this application. The function module may be a software module, a hardware circuit, or a combination of a software module and a hardware circuit. When the RIC module is a physical network element, a hardware circuit, or a combination of a software module and a hardware circuit, the RIC module may also be referred to as a radio intelligence controller (radio intelligence controller, RIC). For ease of description, in embodiments of this application, the RIC module may also be referred to as a RIC for short. The RIC module may exist in a RAN but does not exist in UE, or the RIC may exist in both a RAN and UE. The following separately describes the RIC module from a network side and a UE side.

When the RIC module exists on the network side, there may be three types of network architectures shown in FIG. 6(a) to FIG. 6(c).

FIG. 6(a) shows an independent RIC architecture.

In this network architecture, a RIC module and a base station are separated network elements (network element). This network architecture is applicable to an integrated base station, a CU/DU separated base station, and a CP/UP separated base station.

In this architecture, the RIC module is logically a network element or a logical entity (logical entity) independent of the base station. For example, the RIC module may be an independent RIC node, RIC network element, AI node, or AI network element, or may be a software module and/or a hardware circuit included in at least one node. The at least one node is a node separated from the base station. This is not limited in this embodiment of this application.

FIG. 6(b) shows an embedded RIC network architecture.

In this network architecture, a RIC module is a component of a base station. This network architecture is applicable to an integrated base station, a CU/DU separated base station, and a CP/UP separated base station.

For the CU/DU separated base station, the RIC module may be included in a CU but not included in a DU; or may be included in a DU but not included in a CU; or may be partially included in a CU and partially included in a DU.

The RIC module in the CU may be referred to as a non-real-time radio intelligence control (non-real time RIC, nrt-RIC) module, a module A, a CU intelligent module, a CU AI module, or another name. This is not limited in this embodiment of this application. For a CP/UP separation scenario, the nrt-RIC module may be included in a CU-CP but not included in a CU-UP; or may be included in a CU-UP but not included in a CU-CP; or may be partially included in a CU-UP and partially included in a CU-CP. This is not limited in this embodiment of this application.

In this embodiment of this application, the nrt-RIC module may be an integrated module, or may include a plurality of separated submodules. This is not limited. For example, the nrt-RIC module includes an AIA module, and an application in the AIA module is used to implement or assist in implementing a radio resource management (radio resource management, RRM) function. The RRM function may be considered as a network function or a network optimization function that has a relatively low requirement on real-time performance, that is, a non-real-time function. A layer 3 function may be considered as the RRM function. Model information and policy information corresponding to an application in the nrt-RIC module are stored in an MPIR in the nrt-RIC module, and operation status information to be used by the application in the nrt-RIC module is stored in an OSIB in the nrt-RIC module. The nrt-RIC module further includes an AIPM module. The AIPM module is configured to manage one or more of the following AI procedures of the application in the AIA module in the nrt-RIC module: data collection, model training, model downloading, model publishing, inference, and inference result publishing.

The nrt-RIC module may be a software module, a hardware circuit, or a combination of a software module and a hardware module. This is not limited in this embodiment of this application.

The RIC module in the DU may be referred to as a real-time radio intelligence control (real time RIC, rt-RIC) module, a module B, a DU intelligent module, a DU AI module, or another name. This is not limited in this embodiment of this application.

In this embodiment of this application, the rt-RIC module may be an integrated module, or may include a plurality of separated submodules. This is not limited. For example, the rt-RIC module includes an AIA module, and an application in the AIA module is used to implement or assist in implementing a layer 1 function and/or a layer 2 function. These functions are functions that have a relatively high requirement on real-time performance, that is, real-time functions. For example, the application in the AIA module is used to implement or assist in implementing one or more of the following functions: channel state information (channel status information, CSI) compression, power control, precoding, modulation, channel coding, and the like. Model information and policy information corresponding to an application in the rt-RIC module are stored in an MPIR in the rt-RIC module, and operation status information to be used by the application in the rt-RIC module is stored in an OSIB in the rt-RIC module. Optionally, the rt-RIC module further includes an AIPM module, and the AIPM module is configured to manage the following procedures of the application in the AIA module in the rt-RIC module: data collection, model downloading, model training, model publishing, and inference result publishing. Alternatively, at least one of the following procedures of the application in the AIA module in the rt-RIC module may be managed by the AIPM module in the foregoing nrt-RIC module: model training, model downloading, and model publishing.

In this embodiment of this application, layer 1 is a physical layer, layer 2 is an SDAP layer, a PDCP layer, an RLC layer, and/or a MAC layer, and layer 3 is an RRC layer.

The rt-RIC module may be a software module, a hardware circuit, or a combination of a software module and a hardware module. This is not limited in this embodiment of this application.

FIG. 6(c) shows a hybrid RIC architecture.

In this architecture, some RIC modules and a base station are separated network elements, and the other RIC modules are components of the base station. This network architecture is applicable to an integrated base station, a CU/DU separated base station, and a CP/UP separated base station. In a possible implementation, as shown in FIG. 6(c), an nrt-RIC module is independent of the base station, and an rt-RIC is included in the base station. In another possible implementation, an rt-RIC module is independent of the base station, and an nrt-RIC is included in the base station.

The RIC module may exist in UE, or may not exist in UE.

When existing in the UE, the RIC module may be a software module, a hardware circuit, or a combination of a software module and a hardware module. This is not limited in this embodiment of this application. In this case, the UE may implement one or more of the following AI functions: data collection, model downloading, model training, model update, model publishing, inference, and inference result publishing.

When the RIC module does not exist in the UE, the UE may be triggered to perform data collection and inference result application. For example, the UE may report collected data to a network side, so that the network side implements an AI function. For another example, the UE may receive and apply an inference result published by a network, and/or may receive and apply network reconfiguration triggered by the inference result.

In a communication system, the RAN and the UE communicate based on a protocol architecture. The following describes a protocol architecture in which an AI function is introduced.

Part 3: Protocol stack for implementing an AI function

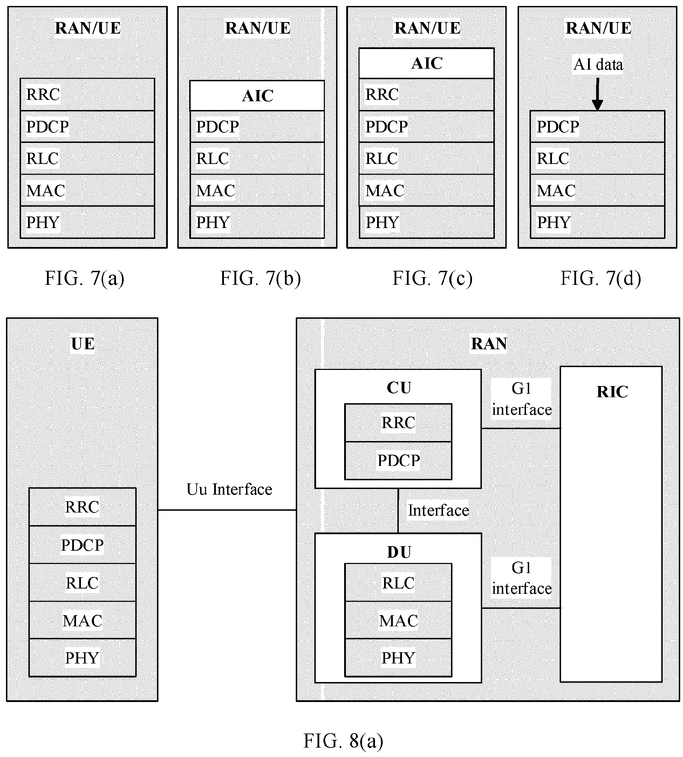

When an AI function is implemented in a RAN or UE, there may be four types of protocol stacks shown in FIG. 7(a) to FIG. 7(d). A protocol stack in the RAN corresponds to a protocol stack on a UE side. To be specific, the RAN and the UE may communicate by using a same protocol stack in FIG. 7(a) to FIG. 7(d). Each protocol stack is applicable to any network architecture in FIG. 6(a) to FIG. 6(c).

FIG. 7(a) shows RRC layer enhancement.

In this protocol architecture, the RRC layer implements an AI function that is a non-real-time network (optimization) function. In this embodiment of this application, a non-real-time network (optimization) function may be referred to as a non-real-time function for short. Specific description is the same as that in Part 2, and details are not described herein again. For example, a new RRC message is defined or a new information element (information element, IE) is added to an RRC message to trigger or manage one or more of the following AI procedures of non-real-time functions: data collection, model training, model downloading, model publishing, inference, and inference result publishing. In addition, the method of defining a new RRC message or adding a new information element to an RRC message may further be used to implement one or more of the following AI functions in real-time network (optimization) functions: model training, model downloading, and model publishing. In this embodiment of this application, a real-time network (optimization) function may be referred to as a real-time function for short. Specific description is the same as that in Part 2, and details are not described herein again. The foregoing new RRC message or new information element may be referred to as nrt-AI data.

At a transmitting end, nrt-AI data at an RRC layer is successively delivered to a PDCP layer, an RLC layer, a MAC layer, and a physical layer for processing, and is sent by the transmitting end to a receiving end at the physical layer. After a physical layer of the receiving end receives the data, the data is successively delivered to a MAC layer, an RLC layer, a PDCP layer, and an RRC layer for processing, so that the receiving end can obtain the nrt-AI data at the RRC layer.

In this protocol architecture, layer 1 and/or layer 2 implement/implements an AI function that is a real-time function. For example, one or more of the following AI functions in real-time functions are implemented by using a physical layer data channel, a physical layer control channel, or a MAC control element (control element, CE) to carry information: data collection, model training, inference, and inference result publishing. The information may be referred to as rt-AI data.

At a transmitting end, rt-AI data at layer 1 is sent to a receiving end, and the receiving end obtains the rt-AI data at layer 1. At a transmitting end, rt-AI data at layer 2 is delivered to a physical layer for processing, and is sent by the transmitting end to a receiving end at the physical layer. After the physical layer of the receiving end receives the data, the data is delivered to layer 2 for processing, so that the receiving end can obtain the it-AI data at layer 2.

FIG. 7(b) shows that an artificial intelligence control (artificial intelligence control, AIC) layer that is parallel to an RRC layer is added.

That the AIC layer is parallel to the RRC layer may also be described as that data at the AIC layer does not pass through the RRC layer, or may be described as that the AIC layer is above a PDCP layer. Unlimitedly, there may be no other protocol layer between the AIC layer and the PDCP layer, or there may be another protocol layer, for example, a protocol layer introduced in the future.

In this protocol architecture, the AIC layer is configured to implement one or more of the following AI functions in non-real-time functions: data collection, model training, model downloading, model publishing, inference, and inference result publishing. In addition, the AIC layer may be further configured to implement one or more of the following AI functions in real-time functions: model training, model downloading, and model publishing. Information or data used to implement these two types of functions may be referred to as nrt-AI data or an AIC (layer) message.

At a transmitting end, nrt-AI data is successively delivered to a PDCP layer, an RLC layer, a MAC layer, and a physical layer for processing, and is sent by the transmitting end to a receiving end at the physical layer. After a physical layer of the receiving end receives the data, the data is successively delivered to a MAC layer, an RLC layer, a PDCP layer, and an AIC layer for processing, so that the receiving end can obtain the nrt-AI data at the AIC layer.

In a possible implementation, in this protocol architecture, one or more of the following AI functions in real-time functions are implemented by layer 1 and/or layer 2: data collection, model training, inference, and inference result publishing. Information or data used to implement the functions may be referred to as rt-AI data. For details, refer to the corresponding description in FIG. 7(a).

In a possible implementation, in this protocol architecture, one or more of the following AI functions in real-time functions are implemented by the AIC layer: data collection, model training, inference, and inference result publishing. Information or data used to implement the functions may be referred to as rt-AI data or an AIC (layer) message. At a transmitting end, the rt-AI data is successively delivered to a PDCP layer, an RLC layer, a MAC layer, and a physical layer for processing, and is sent by the transmitting end to a receiving end at the physical layer. After a physical layer of the receiving end receives the data, the data is successively delivered to a MAC layer, an RLC layer, a PDCP layer, and an AIC layer for processing, so that the receiving end can obtain the rt-AI data at the AIC layer.

Optionally, in this implementation, to ensure real-time performance of the rt-AI data, a transmission mode at a PDCP layer and an RLC layer for a radio bearer (radio bear, RB) used to carry the rt-AI data may be configured as a transparent mode (transparent mode, TM). For example, when the transmitting end sends the rt-AI data, exchanged information is not processed at the PDCP layer or the RLC layer, but is directly delivered to a subsequent protocol layer. For details about the RB, refer to the following description.

FIG. 7(c) shows that an AIC layer above an RRC layer is added.

Unlimitedly, there may be no other protocol layer between the AIC layer and the RRC layer, or there may be another protocol layer, for example, a protocol layer introduced in the future.

In this protocol architecture, the AIC layer is above the RRC layer as a new control plane protocol layer. The AIC layer implements one or more of the following AI functions in non-real-time functions: data collection, model training, model downloading, model publishing, inference, and inference result publishing. Optionally, the AIC layer may further implement one or more of the following AI functions in real-time functions: model training, model downloading, and model publishing. Information or data used to implement these two types of functions may be referred to as nrt-AI data or an AIC (layer) message. At a transmitting end, the nrt-AI data is successively delivered to an RRC layer, a PDCP layer, an RLC layer, a MAC layer, and a physical layer for processing, and is sent by the transmitting end to a receiving end at the physical layer. After a physical layer of the receiving end receives the data, the data is successively delivered to a MAC layer, an RLC layer, a PDCP layer, an RRC layer, and an AIC layer for processing, so that the receiving end can obtain the nrt-AI data at the AIC layer.

In this protocol architecture, one or more of the following AI functions in real-time functions are implemented by layer 1 and/or layer 2: data collection, model training, inference, and inference result publishing. For details, refer to the corresponding description in FIG. 7(a).

FIG. 7(d) shows that an application layer performs some AI functions.

In this protocol architecture, the application layer is a user plane protocol layer, and the application layer may perform a model publishing function. At a transmitting end, model publishing function-related data is successively delivered to an SDAP layer (optional), a PDCP layer, an RLC layer, a MAC layer, and a physical layer for processing, and is sent by the transmitting end to a receiving end at the physical layer. After a physical layer of the receiving end receives the data, the data is successively delivered to a MAC layer, an RLC layer, a PDCP layer, an SDAP layer (optional), and an application layer for processing, so that the receiving end can obtain the model publishing function-related data at the application layer.

Any one of the manners in FIG. 7(a) to FIG. 7(c) may be used for another AI function other than the model publishing function. For example,
in a first possible implementation (FIG. 7(d) + FIG. 7(a)), an application layer performs a model publishing function in real-time functions and a model publishing function in non-real-time functions. Implementation of another AI function is the same as that described in FIG. 7(a).

In a second possible implementation (FIG. 7(d) + FIG. 7(b)), an application layer performs a model publishing function in real-time functions and a model publishing function in non-real-time functions. Implementation of another AI function is the same as that described in FIG. 7(b).

In a third possible implementation (FIG. 7(d) + FIG. 7(c)), an application layer performs a model publishing function in real-time functions and a model publishing function in non-real-time functions. Implementation of another AI function is the same as that described in FIG. 7(c).

Based on the foregoing protocol layer, AI information may be exchanged between the RAN and the UE, to implement RAN intelligence. When the AI information is transmitted between the RAN and the UE, the AI information may be carried by using an RB. For an RB, a parameter or information of each protocol layer corresponding to the RB may be configured.

In this embodiment of this application, the RB is used to carry data exchanged between the RAN and the UE through an air interface. Different types of data may be mapped to different RBs, and sent by a transmitting end to a receiving end.

In a possible implementation, the RB between the RAN and the UE includes two types of RBs: a signal radio bearer (signal radio bearer, SRB) and a data radio bearer (data radio bearer, DRB). The SRB mainly carries control plane data, and the carried data passes through an RRC layer, a PDCP layer, an RLC layer, a MAC layer, and a physical layer. The DRB mainly carries user plane data, and the carried data passes through an SDAP layer, a PDCP layer, an RLC layer, a MAC layer, and a physical layer. For example, an RRC layer message or a non-access stratum NAS (non-access stratum, NAS) message may be carried on the SRB, and data from an application layer may be carried on the DRB. One RB may correspond to one QoS requirement. One or more SRBs may exist and/or one or more DRBs may exist between one UE and a RAN.

In this embodiment of this application, based on a QoS requirement of the AI information, the AI information may be carried in an SRB (for example, used to carry the nrt-AI data in FIG. 7(a), the nrt-AI data in FIG. 7(b) (optional), and the nrt-AI data in FIG. 7(c)) and/or a DRB (for example, used to carry the model publishing function-related data in FIG. 7(d) and the nrt-AI data in FIG. 7(b) (optional)). Alternatively, a new RB may be defined for the AI information, that is, an RB dedicated to carrying the AI information may be established between the RAN and the UE.

### AI information (or data) includes common AI information and AI information dedicated to specific UE.

In a possible implementation, a common RB may be established between the RAN and UE, to carry common AI information that is broadcast or multicast by the RAN to a plurality of UEs. The common RB may also be referred to as an artificial intelligence-common radio bearer (artificial intelligence-common radio bearer, AI-CRB) or another name. This is not limited in embodiments of this application. Configuration information of the AI-CRB may be notified to the corresponding UE by using system information or L1/L2/L3 dedicated signaling. The dedicated signaling is signaling dedicated to the UE. For example, a base station sends system information to UE, and the system information is used to indicate configuration information of an AI-CRB. The configuration information of the AI-CRB may indicate a radio network temporary identifier (radio network temporary identifier, RNTI) used to scramble a PDCCH, time-frequency location information of the PDCCH (for example, search space and/or a control resource set (control resource set, CORESET) of the PDCCH), and/or the like. The PDCCH is used to schedule AI information carried on the AI-CRB. For another example, a base station sends a PDCCH to UE, and control information on the PDCCH is scrambled by using an artificial intelligence (AI)-radio network temporary identifier (radio network temporary identifier, RNTI). The control information schedules a PDSCH, and the PDSCH carries configuration information of an AI-CRB.

For example, when common A1 information needs to be transmitted, for example, when information used to implement an AI model update function of federated learning is transmitted, an AI-CRB may be configured, and the AI-CRB carries the common AI information. When there are a plurality of QoS requirements because there are a plurality of types of common AI information, a plurality of AI-CRBs may be configured to separately carry RIC common data with different QoS requirements.

One or more AI-CRBs may be established between the RAN and the UE. Each AI-CRB may have a corresponding QoS requirement. In this embodiment of this application, the QoS requirement includes scheduling priority information.

For example, a specific RB may be established between a RAN and UE to carry AI information sent by the RAN to the specific UE. The specific RB may also be referred to as an artificial intelligence data radio bearer (artificial intelligence data radio bearer, AI-DRB) or another name. This is not limited in embodiments of this application.

The nrt-AI data in FIG. 7(d) may be carried on the AI-DRB.

One or more AI-DRBs may be established between a RAN and one UE. Each AI-DRB may have a corresponding QoS requirement.

Establishment of the RB between the RAN and the UE may be triggered by the RAN, or may be triggered by the RAN according to an indication of the RIC. This is not limited in embodiments of this application.

### Part 4: Communication method between a RAN and UE

With reference to the foregoing description, the following describes in detail an AI information exchange procedure between a RAN and UE.

### Example 1: Independent RIC architecture (FIG. 6(a)) + RRC layer enhancement (FIG. 7(a))

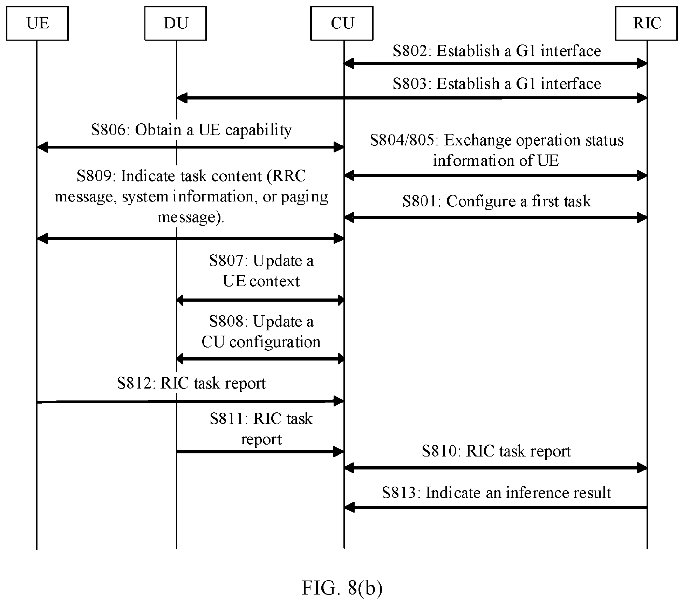

FIG. 8(a) shows an example 1 of an architecture (network architecture + protocol stack) between a base station and UE. FIG. 8(b) is an example diagram of an information exchange procedure between a RAN and UE based on the architecture shown in FIG. 8(a). In example 1, there is no independent AIC protocol layer, and an RRC layer performs a non-real-time function, an AI initialization function of an rt-RIC, and/or an AI model distribution function.

In this embodiment of this application, an execution sequence of operations in the exchange procedure is not limited.

In the architecture shown in FIG. 8(a), a RIC module independent of the base station exists in the RAN. In this architecture, the RIC module of the RAN performs at least one of the following operations: model downloading, model training, data collection, inference, and inference result publishing.

When the UE does not support a RIC function (that is, does not have a RIC module), the RIC module of the RAN may request the base station to collect data and/or publish an inference result to the base station. The RIC module of the RAN may further indicate the UE to collect data or send an inference result to the UE through the base station, for example, by sending a new RRC message or a new IE to the UE through an RRC layer of the base station. The data that needs to be collected by the UE may be RRC layer data, layer 2 data, or physical layer data. This is not limited. In this embodiment of this application, a model used to perform inference may be a downloaded original model, or may be an updated model obtained through training based on training data. This is not limited. Training data used by the RIC module to perform model training may be collected from the base station and/or the UE, or obtained from a CN. This is not limited. Inference data used by the RIC module to perform inference may be collected from the base station and/or the UE.

In this embodiment of this application, that the UE does not support the RIC function may be described as that there is no RIC module in the UE. For ease of description, the following RIC module refers to a RIC module on a RAN side, unless otherwise stated.

When the UE supports a RIC function, the RIC module of the RAN may request the base station to collect data and/or publish an inference result to the base station. The RIC module of the RAN may further indicate the UE to collect data, indicate the UE to perform federated learning, publish a model (to be used by the UE to perform inference or federated learning) to the UE, indicate the UE to perform inference, or send an inference result to the UE through the base station, for example, by sending a new RRC message or a new IE to the UE through an RRC layer of the base station. The data that needs to be collected by the UE may be RRC layer data, layer 2 data, or physical layer data. This is not limited. In this embodiment of this application, a model used to perform inference may be a downloaded original model, or may be an updated model obtained through training based on training data. This is not limited. Training data used by the RIC module to perform model training may be collected from the base station and/or the UE, or obtained from a CN. This is not limited. Inference data used by the RIC module to perform inference may be collected from the base station and/or the UE.

In this embodiment of this application, the base station may be an integrated base station, or may be a CU/DU separated base station. This is not limited in this embodiment of this application. The following architecture diagram shows the base station in a form of CU/DU separation. Optionally, when a CU and a DU of the base station are separated, the base station may be a CP/UP separated base station.

In this embodiment of this application, when the RIC module is separated from the base station, that is, when the RIC module is not included in the base station, the base station and the RIC module may communicate with each other through an interface. The interface between the base station and the RIC module includes one or more of the following interfaces: an interface between an integrated base station and a RIC module, an interface between a CU and a RIC module, an interface between a CU-CP and a RIC module, an interface between a CU-UP and a RIC module, and an interface between a DU and a RIC module. In this embodiment of this application, the interface between the base station and the RIC module may be denoted as a G1 interface, or an interface with another name, such as a first interface. This is not limited in this embodiment of this application. For ease of description, the G1 interface is used as an example in this embodiment of this application. The G1 interface may be an interface of a wired connection, or may be an interface of a wireless connection, or may be an interface of a connection in another form. This is not limited in this embodiment of this application. In this embodiment of this application, the wired connection may be a connection using a cable, an optical fiber, or another medium. This is not limited.

For example, based on the architecture shown in FIG. 8(a), on the RAN side, the RIC module implements an AI function in non-real-time functions by using the RRC layer in the base station, and implements some AI functions in real-time functions by using layer 1 and/or layer 2 in the base station. Some configuration information of the some AI functions in the real-time functions may be sent by the base station to the UE by using RRC layer signaling. For example, the base station implements at least one of the following by using a new RRC message or a new network element: indicating the UE to collect RRC layer data, indicating the UE to collect layer 2 data (for example, a data transmission latency between two peer protocol layers: a PDCP layer of the base station and a PDCP layer of the UE), indicating the UE to collect physical layer data, indicating configuration information of an RB that carries AI data or AI information, publishing an RRC layer inference result (parameter value) to the UE, publishing a physical layer inference result (parameter value) to the UE, indicating parameter configuration related to layer 1 and/or layer 2 AI functions, publishing model information to the UE, and indicating the UE to perform model training (such as federated training). For another example, the base station implements at least one of the following by using a physical layer channel and/or a MAC CE: indicating the UE to collect physical layer data and publishing a physical layer inference result (parameter value) to the UE.

In this embodiment of this application, the RRC layer signaling may be a message (such as a master information block (master information block, MIB)) carried on a broadcast channel, a system message (such as a system information block (system information block, SIB)), or an RRC message. This is not limited in this embodiment of this application.

For example, on a UE side, correspondingly, an AI function in non-real-time functions and an AI function in real-time functions are assisted to be implemented based on information received from the base station. For example,
if the base station indicates the UE to collect RRC layer data, the UE reports collected data to the base station by using an RRC message.

If the base station indicates, by using an RRC message, the UE to collect physical layer data, the UE reports collected data to the base station by using an RRC message, a MAC CE, or a physical layer channel.

If the base station indicates, by using a MAC CE, the UE to collect physical layer data, the UE reports collected data to the base station by using a MAC CE or a physical layer channel.

If the base station indicates, by using a physical layer channel, the UE to collect physical layer data, the UE reports collected data to the base station by using a MAC CE or a physical layer channel.

If the base station indicates, to the UE, configuration information of an RB that carries AI data or AI information, the UE establishes the RB with the base station based on the configuration information of the RB.

If the base station publishes an RRC layer inference result (parameter value) and/or a physical layer inference result to the UE, the UE may apply the inference result to the UE side.

If the base station indicates, to the UE, parameter configuration related to layer 1 and/or layer 2 AI functions, the UE sets, based on the parameter configuration, parameters related to these functions.

If the base station publishes information about a model to the UE, the UE may perform inference by using the model. The UE may apply an inference result and/or report the inference result to the RAN side.

If the base station indicates the UE to perform federated training, the UE may report model parameter gradient information obtained through training to the RIC module.

FIG. 8(b) is an example diagram of a procedure in which the RAN and the UE exchange information by using the architecture shown in FIG. 8(a). The procedure mainly includes: The RIC module publishes a task to the base station, and/or the RIC module publishes a task to the UE through the base station; and the UE and/or the base station perform/performs the corresponding task. Optionally, when the task published by the RIC module includes data collection, the base station reports collected data to the RIC module, and/or the UE reports collected data to the RIC module through the base station. Optionally, after training or updating a model based on the collected data, the RIC module may perform inference by using the model. Optionally, after performing an inference function based on the collected data, the RIC module may publish an inference result to the UE and/or the base station. The following describes in detail a method shown in FIG. 8(b).

S801: The RIC module sends first task configuration information to the base station, and the base station receives the first task configuration information.

In this method, the first task configuration information is used by the RIC module to publish a new task to the base station, or is used by the RIC module to publish a new task to the UE through the base station. In this embodiment of this application, a name of a message that carries the first task configuration information is not limited. For example, in this embodiment of this application, the message that carries the first task configuration information may be referred to as a y^{th} message, a RIC TASK ADDITION message, or a RIC TASK ADDITION REQUEST message. Herein, y is a positive integer. In this embodiment of this application, values of y are different for different messages. This embodiment of this application is shown by using an example in which the name of the message is RIC TASK ADDITION REQUEST.

In this embodiment of this application, a task may also be referred to as an operation, a transaction, an item, or another name. This is not limited in this application. In this embodiment of this application, a type of a task may be one of at least two task types. The at least two task types may be at least two of the following plurality of types: collecting data (or referred to as data collection), model publishing, model training, inference, and inference result publishing. In this embodiment of this application, a type of a task may also be referred to as a name of the task or the like. This is not limited in this embodiment of this application.

When the first task configuration information is used by the RIC module to publish a new task to the base station, the base station may perform the corresponding task according to an indication of the configuration information. When the first task configuration information is used by the RIC module to publish a new task to the UE through the base station, as described above, the base station sends, to the UE in a form of RRC layer signaling, one or more tasks published to the UE, and/or sends, to the UE in a form of MAC CE signaling, one or more tasks published to the UE. Correspondingly, as described above, the UE may report collected data to the RIC module through the base station according to an indication of the base station.

Optionally, when the first task configuration information can configure a plurality of tasks (in this case, an actually sent message may include one or more tasks), the RIC TASK ADDITION REQUEST message includes one or more of information elements (information element, IE) shown in the first column of Table 1. The second column of Table 1 shows description of each IE in the first column.

In this embodiment of this application, an IE in a message may be explicitly included in the message, or may be implicitly indicated by using the message. This is not limited in this embodiment of this application. A name of each IE in the message is not limited in this embodiment of this application. For example, an IE may be replaced with an x^{th} IE, where x is a positive integer. For different IEs, values of x may be different. In this embodiment of this application, when an IE in a table is not included in a corresponding message, information configured by using the IE may be agreed on in a protocol.

**Table 1**

| IE | IE description |
|---|---|
| Message type | The message type is used to indicate a type of the message. |
| | For example, the message type indicates that the type of the message is a RIC TASK ADDITION REQUEST message. |
| Transaction (transaction) identifier (identifier, ID) | The transaction identifier is used to identify a RIC TASK ADDITION procedure. For example, after receiving the following RIC TASK ADDITION RESPONSE message, the RIC learns which RIC TASK ADDITION REQUEST message is responded to. |
| | Alternatively, the transaction identifier is used to identify a first task configured by using the message, that is, used to distinguish a task request published from the RIC module. In this case, the identifier may also be referred to as a first ID or another name of the task. This is not limited in this embodiment of this application. |
| Task list, including one or more pieces of task configuration information TASK CONFIGURATION INFORMATION (referring to Table 2). | The task list is used to indicate configuration information TASK CONFIGURATION INFORMATION of each of one or more tasks. |
| Base station ID or base station address | The base station ID or base station address is used to indicate an address of the message. that is, indicate a specific network element to which the message is sent by the RIC module. |
| | (1) When a CU and a DU of the base station are separated, if the message is sent to the DU, and an interface exists between the DU and the RIC module, the base station identifier or the base station address may be replaced with a DU identifier or a DU address. |
| | (2) When a CU and a DU of the base station are separated, if the message is sent to the DU, no interface exists between the DU and the RIC module, and an interface exists between the CU and the RIC module, the base station identifier or the base station address may be replaced with a CU identifier or a CU address, and the CU may deliver the message to the DU. |
| | (3) When a CU and a DU of the base station are separated, if the message is sent to the CU, and an interface exists between the CU and the RIC module, the base station identifier or the base station address may be replaced with a CU identifier or a CU address. |
| | (4) When a CP and an UP of the base station are separated, if the message is sent to a CU-CP, and an interface exists between the CU-CP and the RIC module, the base station identifier or the base station address may be replaced with a CU-CP identifier or a CU-CP address. |
| | (5) When a CP and an UP of the base station are separated, if the message is sent to a CU-UP, and an interface exists between the CU-UP and the RIC module, the base station identifier or the base station address may be replaced with a CU-UP identifier or a CU-UP address. |
| | (6) When a CP and an UP of the base station are separated, if the message is sent to a CU-UP, no interface exists between the CU-UP and the RIC module, and an interface exists between a CU-CP and the RIC module, the base station identifier or the base station address may be replaced with a CU-CP identifier or a CU-CP address, and the CU-CP may deliver the message to the CU-UP. |

The foregoing TASK CONFIGURATION INFORMATION message includes one or more of IEs in the first column of Table 2.

**Table 2**

| IE | IE description |
|---|---|
| Task ID | The task ID is used to identify a task. |
| | The identifier may also be referred to as a second ID or another name of the task. This is not limited in this embodiment of this application. |
| Task type | The task type is used to indicate a (task) type of the task. The task type may be data collection, inference result publishing, model publishing, or model training. |
| | For example, the task type IE is used to indicate the type of the task from a plurality of task types, and the plurality of task types may include at least one of the following: data collection, inference result publishing, model publishing, and model training. Optionally, the plurality of task types may further include another task type, for example, indicating to perform inference. This is not limited. |
| Task content | When the task type is data collection, and data does not need to be obtained through measurement, the task content is used to indicate one or more of the following content: a data type (for example, a location or a moving speed of UE) and a report manner. The report manner may be time-based triggering, one-time reporting, or periodic reporting. |
| | When the task type is data collection, and data needs to be obtained through measurement, the task content is used to indicate one or more of the following content: a data measurement type (for example, one or more data measurement types in M1 to M9 defined in section 5.2.1.1 in TS 37.320, for example, at least one of the following: cell/beam quality, power headroom, interference power, an uplink/downlink data amount, an uplink/downlink throughput, a data latency, an uplink/downlink packet loss rate, a round-trip time (round-trip time, RTT), a received signal strength indicator (received signal strength indicator, RSSI), and the like), a measurement condition, and a report manner. For example, the measurement type may be a measurement type listed in the 3GPP standard protocol TS 37.320. TS 37.320 may be an existing release or a future formulated release. This is not limited. The measurement condition may be used to indicate one or more of the following information: a measurement execution body (for example, a type or a satisfied condition of UE that performs measurement and/or a type or a satisfied condition of a base station that performs measurement), an area corresponding to the measurement, a service corresponding to the measurement, a measurement trigger condition, and the like. The report manner may be referred to as a measurement report manner, a data report manner, a measurement result report manner, or the like. The measurement report manner may be time-based triggering, event-based triggering, one-time reporting, or periodic reporting. |
| | When the task type is inference result publishing, the task content is used to indicate an inference result. In this embodiment of this application, the inference result is used to indicate a parameter configuration, for example, indicate one or more of the following information: a handover threshold for performing cell handover by UE, a random access channel (random access channel, RACH) configuration of a cell, maximum uplink transmit power of the cell, a serving cell of the UE, a discontinuous reception (discontinuous reception, DRX) configuration of the UE, a DRB configuration of the UE, and the like. |
| | When the task type is model publishing, the task content is used to indicate information about a model, for example, a configuration parameter of the model and/or specific content of the model. |
| | When the task type is model training, for example, indicates to perform federated training (federate training or federate learning), the task content is used to indicate one or more of the following information: a condition for reporting model parameter information or reporting a model parameter gradient, neural network reference ((neural networks) NN reference) information, and a neural network training data set. These parameters may be used for model training. The neural network reference may also be referred to as a reference neural network (referred NN). The reference neural network may be considered as an initial neural network model for further model update training. Information about the reference neural network may indicate one or more of the following content: a neural network topology, a weight, and an offset. The neural network training data set is a data set used to perform neural network model (update) training, and is used to ensure that a same training data set can be used between different bodies, for example, between a network side and a terminal side, or between a plurality of terminals, so as to obtain a same neural network model as much as possible. The model parameter is a model parameter obtained after training. The model parameter gradient is a variation of a model parameter obtained after the (t+1)^{th} time of model training relative to a model parameter obtained after the t^{th} time of model training in a federated training procedure. |
| | In specific implementation, there may be another name, for example, a model parameter offset (offset). This is not limited in this application. The condition for reporting the model parameter information or reporting the model parameter gradient information may also be referred to as a report condition of the model parameter information or the model parameter gradient information, and means that the model parameter information or the model parameter gradient information is reported when a specific condition is met. The condition may include, for example, periodic reporting, and/or a condition that a gradient or gradients of a model parameter or some model parameters is/are greater than a specified threshold. |
| Task execution body | The task execution body may be agreed on in a protocol, may be notified by using the IE, or may be specified by using another parameter (for example, the foregoing data measurement type). |
| | The task execution body may be a base station, a CU, a DU, a CU-CP, a CU-UP, or UE. For example, the IE is used to indicate that the task execution body may be one of a plurality of bodies. The plurality of bodies may be at least two of the following bodies: a base station, a CU, a DU, a CU-CP, a CU-UP, or UE. For example, the IE is used to indicate whether the task execution body is the base station or the UE, or the IE is used to indicate whether the task execution body is the CU or the DU, or the IE is used to indicate whether the task execution body is the UE, the CU, or the DU, or the IE is used to indicate whether the task execution body is the UE, the CU-CP, the CU-UP, or the DU. Examples are not listed one by one. |
| | For example, the IE is used to indicate whether the task execution body is the base station or the UE. When the CU and the DU of the base station are separated, the IE may indicate whether the task execution body is the CU or the UE, or indicate whether the task execution body is the DU or the UE, or indicate which one of the CU, the DU, and the UE is the task execution body. |
| | When the task execution body is the UE, the target UE may be indicated in any one of the following manners: |
| | (1) Indicate an ID of one or more UEs. |
| | (2) Indicate a group ID of one or more groups of UEs. Any group of UEs includes one or more UEs. Quantities of UEs included in different groups of UEs may be the same or may be different. This is not limited in this embodiment of this application. |
| | (3) Indicate a condition met by the UE that performs the task. For example, a condition met by a type of the UE is indicated, a condition met by a location of the UE is indicated, a condition met by an RRC connection status of the UE is indicated, a condition met by an AI capability of the UE is indicated, a condition met by a service status of the UE is indicated, a condition met by a measurement amount of the UE is indicated, and/or a condition met by a network connection status of the UE is indicated. |
| | This IE is optional. If the TASK CONFIGURATION INFORMATION message does not include this IE, the task execution body is the base station or the central unit CU of the base station. |
| Task status | The task status is used to configure or update a status of the task, and indicate the status of the task as an activated state or a deactivated state, or indicate the status of the task as an activated state, a deactivated state, or a released state. When this IE does not exist, it may be considered by default that the task is activated. When this IE exists, if the task is activated, the task may be executed; or if the task is deactivated, the task is not executed. "Activate" may further be replaced with "start" or "continue", and "deactivate" may further be replaced with "suspend". |
| | "Release" is to delete the task. |

Optionally, S801 may further include: The base station sends first task acknowledgement information to the RIC module, and the RIC receives the first task acknowledgement information.

The first task acknowledgement information is used by the base station to acknowledge the RIC TASK ADDITION REQUEST message to the RIC module. In this embodiment of this application, a name of a message that carries the first task acknowledgement information is not limited. For example, in this embodiment of this application, the message that carries the first task acknowledgement information may be referred to as a RIC TASK ADDITION RESPONSE message, a y^{th} message, or another name. Herein, y is a positive integer.

In this embodiment of this application, S801 may be referred to as a task addition procedure, a task configuration procedure, or another name.

Optionally, to exchange information between the RIC module and the base station, an interface between the RIC module and the base station may be set up. In this embodiment of this application, there are the following several possible scenarios for the interface between the RIC module and the base station.

Scenario 1: The base station is an integrated base station, and there is an interface between the base station and the RIC module. In this scenario, setting up the interface between the RIC module and the base station includes: setting up an interface between the RIC module and the integrated base station.

Scenario 2: The base station is a CU/DU separated base station, there is an interface between a CU and the RIC module, and there is an interface between a DU and the RIC module. In this scenario, setting up the interface between the RIC module and the base station includes: setting up an interface between the RIC module and the CU, and setting up an interface between the RIC module and the DU.

Sub-scenario 1 of scenario 2: The base station is a CP/UP separated base station, there is an interface between a CU-CP and the RIC module, and there is an interface between a CU-UP and the RIC module. In this scenario, setting up the interface between the RIC module and the CU includes: setting up an interface between the RIC module and the CU-CP, and setting up an interface between the RIC module and the CU-UP.

Sub-scenario 2 of scenario 2: The base station is a CP/UP separated base station, there is an interface between a CU-CP and the RIC module, and there is no interface between a CU-UP and the RIC module. In this scenario, setting up the interface between the RIC module and the CU includes: setting up an interface between the RIC module and the CU-CP. Data may be exchanged between the RIC module and the CU-UP by using a forwarding function of the CU-CP.

In this embodiment of this application, forwarding data includes: transparently forwarding the data (the data is not processed), or processing the data and then forwarding processed data.

Scenario 3: The base station is a CU/DU separated base station, there is an interface between a CU and the RIC module, and there is no interface between a DU and the RIC module. In this scenario, setting up the interface between the RIC module and the base station includes: setting up an interface between the RIC module and the CU. Data may be exchanged between the RIC module and the DU by using a forwarding function of the CU.

Sub-scenario 1 of scenario 3 is the same as sub-scenario 1 of scenario 2.

Sub-scenario 2 of scenario 3 is the same as sub-scenario 1 of scenario 2.

To simplify description, an example in which the base station is a CU/DU separated base station and there is an interface between the RIC module and each of the CU and the DU is used in FIG. 8(b). A method in another scenario is similar, and details are not described again. As described above, to establish the interface between the CU and the RIC module, the method shown in FIG. 8(b) may further include S802: The CU sends a G1 interface setup request message to the RIC module. The G1 interface setup request message may be referred to as a first G1 interface setup request message or a first interface setup request message. Optionally, the method in S802 further includes: The RIC module returns a G1 interface setup acknowledgement message to the CU. The G1 interface setup acknowledgement message may be referred to as a first G1 interface setup acknowledgement message or a first interface setup acknowledgement message.

In this embodiment of this application, the G1 interface setup request message is used to establish a connection to the RIC module, and a name thereof is not limited. For example, the message may be referred to as a y^{th} message, a G1 SETUP REQUEST message, or another name. Herein, y is a positive integer.

In this embodiment of this application, the G1 interface setup acknowledgement message is used by the RIC module to acknowledge establishment of the connection to the RIC module, and a name thereof is not limited. For example, the message may be referred to as a y^{th} message, a G1 SETUP RESPONSE message, a G1 interface setup response message, or another name. Herein, y is a positive integer.

S802 may be referred to as a G1 interface setup procedure between the CU and the RIC module. After this procedure, a G1 interface between the RIC module and the CU is set up.

In this embodiment of this application, the CU may report AI operation status information of the base station to the RIC module through the G1 interface. The AI operation status information of the base station or AI operation status information related to the CU of the base station may be reported. The AI operation status information of the base station is a part of AI operation status information of the RAN. In addition to reporting the AI operation status information of the base station in which the CU is located, optionally, AI operation status information of another base station in the RAN may further be reported in this operation. For example, the CU may control a plurality of DUs, and has a subordinate IAB and non-standalone (non-standalone) base station. The CU, the DU controlled by the CU, the IAB subordinate to the CU, and the non-standalone base station subordinate to the CU may be considered as a RAN. The CU may report a part or all of AI operation status information of the RAN.

For example, the G1 SETUP REQUEST message sent by the CU to the RIC includes one or more of IEs shown in the first column of Table 3.

**Table 3**

| IE | IE description |
|---|---|
| Message type | The message type is used to indicate a type of the message. |
| | For example, the message type indicates that the type of the message is a G1 SETUP REQUEST message. |
| CU identifier or name | The CU identifier or name is used to identify the CU that sends the message. |
| CU capability information | The CU capability information is used to indicate AI capability information of the base station or the CU, where the base station includes the CU that sends the message. Optionally, when an interface exists between the RIC module and the DU, this IE indicates AI capability information related to the CU, and capability information related to the DU is indicated by the DU to the RIC module in S803. |
| | Alternatively, this IE further indicates AI capability information related to the DU. |
| | The AI capability information of the CU may be AI capability information related to a non-real-time function at layer 3, and the AI capability information of the DU may be AI configuration information related to a real-time function at layer 1 and/or layer 2. |
| | For example, the CU capability information is used to indicate one or more of the following information of the base station or the CU: a supported network slice type, a supported measurement type (refer to related description in the 3GPP protocol TS 37.320, but it is not limited to a measurement type defined in the protocol), a supported positioning method, a supported RAT type, a type of a clock, precision of a clock, a measurement type supported when QoE measurement is performed, and the like. |
| CU configuration information | The CU configuration information is used to indicate AI configuration information of the base station or the CU. The base station includes the CU that sends the message. Optionally, when an interface exists between the RIC module and the DU, this IE indicates AI configuration information related to the CU, and AI configuration information related to the DU is indicated by the DU to the RIC |
| | module in S803. Alternatively, this IE further indicates AI configuration information related to the DU. |
| | For example, the CU configuration information is used to indicate one or more of the following information of the base station or the CU: a used network slice type, a working frequency of a subordinate cell, bandwidth of the subordinate cell, SSB downlink transmit power of the subordinate cell, an SSB cycle of the subordinate cell, and the like. The SSB may also be replaced with a synchronization signal, a broadcast channel, a downlink reference signal, or the like. The subordinate cell includes a direct subordinate cell, and optionally, may further include an indirect subordinate cell such as an IAB node. |
| CU status information | The CU status information is used to indicate AI status information of the base station or the CU, where the base station includes the CU that sends the message. Optionally, when an interface exists between the RIC module and the DU, this IE indicates AI status information related to the CU, and AI status information related to the DU is indicated by the DU to the RIC module in S803. Alternatively, this IE simultaneously indicates AI status information related to the DU. |
| | For example, the CU status information is used to indicate one or more of the following information of the base station or the CU: load of a subordinate cell, a cell shutdown status of the subordinate cell, a service QoS guarantee status of the subordinate cell, a used network slice type, and the like. The subordinate cell includes a direct subordinate cell, and optionally, may further include an indirect subordinate cell such as an IAB node. |

Optionally, the capability information, the configuration information, and/or the status information of the CU may be reported by using another message after the interface between the CU and the RIC is set up. This is not limited in this embodiment of this application. The another message may include one or more of the IEs shown in the first column of Table 3. This is not limited. In this case, the message type is a type of the another message.

Optionally, the method shown in FIG. 8(b) further includes S803: The DU sends a G1 interface setup request message to the RIC module. The G1 interface setup request message may be referred to as a second G1 interface setup request message, another name, or a second interface setup request message. Optionally, the method in S803 further includes: The RIC module returns a G1 interface setup acknowledgement message to the DU. The G1 interface setup acknowledgement message may be referred to as a second G1 interface setup acknowledgement message or a second interface setup acknowledgement message.

S803 may be referred to as a G1 interface setup procedure between the DU and the RIC module. After this procedure, a G1 interface between the RIC module and the DU is set up.

The G1 SETUP REQUEST message sent by the DU to the RIC includes one or more of IEs shown in the first column of Table 4.

**Table 4**

| IE | IE description |
|---|---|
| Message type | The message type is used to indicate a type of the message. |
| | For example, the message type indicates that the type of the message is a G1 SETUP REQUEST message. |
| DU identifier or name | The DU identifier or name is used to identify the DU that sends the message. |
| DU capability information | The DU capability information is used to indicate AI capability information of the base station or the DU, where the base station includes the DU that sends the message. |
| | For example, the DU capability information is used to indicate one or more of the following information of the base station or the DU: a supported power control method, a supported layer 1 (physical layer) measurement method, a supported positioning method, a band range, a frequency, a latency measurement type, and a latency measurement granularity. The layer 1 measurement method includes: whether beam granularity measurement such as RSRP measurement and/or RSRQ measurement is supported; and/or whether zero power interference measurement is supported. The latency measurement type includes: RLC/MAC segment latency measurement, and/or total latency measurement. The latency measurement granularity includes: a data packet (packet), a QoS flow (flow), and/or a bearer RB. |
| DU configuration information | The DU configuration information is used to indicate AI configuration information of the base station or the DU, where the base station includes the DU that sends the message. |
| | For example, the DU configuration information is used to indicate a quantity of subordinate cells included in the base station or the DU, configuration information of each subordinate cell, and/or the like. |
| DU status information | The DU status information is used to indicate AI status information of the base station or the DU, where the base station includes the DU that sends the message. |
| | For example, the DU status information is used to indicate a quantity of subordinate cells of the base station or the DU that are in a shutdown state, load of each subordinate cell, and/or the like. |

Optionally, the capability information, the configuration information, and/or the status information of the DU may be reported by using another message after the interface between the DU and the RIC is set up. This is not limited in this embodiment of this application. The another message may include one or more of the IEs shown in the first column of Table 4. This is not limited. In this case, the message type is a type of the another message.

When the base station is an integrated base station, the base station sends one G1 SETUP REQUEST message to the RIC, where the message specifically includes functions of the G1 SETUP REQUEST messages shown in Table 3 and Table 4, for example, as shown in Table 5.

**Table 5**

| IE | IE description |
|---|---|
| Message type | The message type is used to indicate a type of the message. |
| | For example, the message type indicates that the type of the message is a G1 SETUP REQUEST message. |
| Base station identifier | The base station identifier is used to identify the base station that sends the message. |
| Base station capability information | The base station capability information is used to indicate AI capability information of the base station. |
| | For example, at least one piece of the AI capability information listed in Table 3 and Table 4 is indicated. |
| Base station configuration information | The base station configuration information is used to indicate AI configuration information of the base station. |
| | For example, at least one piece of the AI configuration information listed in Table 3 and Table 4 is indicated. |
| Base station status information | The base station status information is used to indicate AI status information of the base station. |
| | For example, at least one piece of the AI status information listed in Table 3 and Table 4 is indicated. |

Optionally, the capability information, the configuration information, and/or the status information of the base station may be reported by using another message after the interface between the base station and the RIC is set up. This is not limited in this embodiment of this application. The another message may include one or more of the IEs shown in the first column of Table 5. This is not limited. In this case, the message type is a type of the another message.

After the RIC module obtains the AI capability information of the base station, that is, after the RIC module obtains the AI capability information of the CU and/or the DU, the RIC module may trigger a procedure of establishing an AI-CRB on an air interface. By using the AI-CRB, the base station may notify data collection of a broadcast or multicast type to the UE through the air interface. A possible implementation in which the RIC module triggers the procedure of establishing the AI-CRB on the air interface is as follows: The RIC module indicates the CU and/or the DU to establish one or more AI-CRBs on the air interface. Alternatively, the CU and/or the DU receive/receives a task delivered by the RIC module, where the task indicates to establish one or more AI-CRBs on the air interface when all UEs or a group of UEs in a cell perform data collection.

In this embodiment of this application, for the CU/DU separated base station, there may be an interface between the CU and the DU, and data exchange may be performed. Therefore, the method shown in FIG. 8(b) may include: establishing a connection between the CU and the DU. For example, the interface between the CU and the DU is referred to as an F1 interface, and an F1 interface setup procedure between the CU and the DU is used to establish the connection between the CU and the DU. Subsequently, information may be exchanged between the CU and the DU. The F1 interface setup procedure between the CU and the DU includes: The DU sends an F1 setup request message to the CU, and the CU returns an F1 setup response message to the DU. The F1 setup request message is used to indicate one or more of the following information: a message type, a DU identifier, and information about a list of subordinate cells of the DU. The F1 setup response message is used to indicate one or more of the following information: a message type, a list of activated cells, and system information.

The foregoing describes a case in which the RIC module may send, to the base station, a task to be executed by the UE. In some scenarios, the RIC module may learn of operation status information of the UE in a manner agreed on in a protocol, so that the RIC module determines a task of the UE for the UE. In some scenarios, the RIC module needs to obtain operation status information of the UE through the base station or a CN, so that the RIC module determines a task of the UE for the UE.

Therefore, optionally, the method shown in FIG. 8(b) includes S804: The CU sends the operation status information of the UE to the RIC module. The operation status information may be included in the foregoing G1 SETUP REQUEST message, or may be included in another message. This is not limited in this embodiment of this application. For example, the operation status information is included in a UE context setup request message. In this method, if the base station is an integrated base station, the CU may be replaced with the base station. In a CP/UP separation scenario, the CU in this method may further be replaced with a CU-CP.

In this embodiment of this application, the UE context setup request message is used to trigger establishment of an AI context corresponding to the UE in the RIC, so that the RIC performs an AI-related operation on the UE. A name thereof is not limited. For example, the message may be referred to as a y^{th} message, a UE AI CONTEXT SETUP REQUEST message, or another name. Herein, y is a positive integer.

The UE context setup request message includes one or more of IEs shown in the first column of Table 6.

**Table 6**

| IE | IE description |
|---|---|
| Message type | The message type is used to indicate a type of the message. |
| | For example, the message type indicates that a type of the message is a UE context setup request message. |
| UE **identifier** | The UE identifier is used to identify the UE. |
| AI capability information of the UE | Refer to the corresponding description in Part 1. Details are not described herein again. |
| AI configuration information of the UE | Refer to the corresponding description in Part 1. Details are not described herein again. |
| AI status information of the UE | Refer to the corresponding description in Part 1. Details are not described herein again. |

Optionally, the UE context setup request sent by the CU to the RIC module may include information about one or more UEs.

Optionally, the method in S804 further includes: The RIC module returns a UE context setup acknowledgement message to the CU.

In this embodiment of this application, the UE context setup acknowledgement message is used by the RIC to acknowledge that the RIC sets up an AI context corresponding to the UE or is used to determine the foregoing UE AI CONTEXT SETUP REQUEST message. A name thereof is not limited. For example, the message may be referred to as a y^{th} message, a UE AI CONTEXT SETUP RESPONSE message, or another name. Herein, y is a positive integer.

S804 may be referred to as a UE context setup procedure, a UE AI context setup procedure, or the like. This is not limited in this embodiment of this application.

Optionally, after the operation status information of the UE changes, the method shown in FIG. 8(a) further includes S805: The CU sends updated operation status information of the UE to the RIC module. In this method, if the base station is an integrated base station, the CU may be replaced with the base station. In a CP/UP separation scenario, the CU in this method may further be replaced with a CP and/or an UP.

In this embodiment of this application, a name of a message including the updated operation status information may be a UE context setup request message or a UE context modification request message. This is not limited in this embodiment of this application. The UE context modification request message is used to notify the RIC module of the updated operation status information of the UE. A name thereof is not limited. For example, the message may be referred to as a y^{th} message, a UE AI CONTEXT MODIFICATION REQUEST message, or another name. Herein, y is a positive integer. A message structure of the UE context modification request message may be the same as that of the UE context setup request message, or includes updated information but does not include non-updated information (for example, includes one or more of IEs shown in Table 7). This is not limited in this embodiment of this application.

Optionally, S805 may further include: The RIC module sends a UE context modification acknowledgement message to the CU. In this embodiment of this application, the UE context modification acknowledgement message is used by the RIC module to respond to the UE context modification request message, and a name thereof is not limited. For example, the message may be referred to as a y^{th} message, a UE AI CONTEXT MODIFICATION RESPONSE message, or another name. Herein, y is a positive integer.

Optionally, S805 may be referred to as a UE context modification procedure or a UE AI context modification procedure. This is not limited in this embodiment of this application.

**Table 7**

| IE | IE description |
|---|---|
| Message type | The message type is used to indicate a type of the message. |
| | For example, the message type indicates that a type of the message is a UE context modification request message. |
| UE **identifier** | The UE identifier is used to identify the UE. |
| Updated operation status information of the UE | This IE is used to indicate the updated operation status information of the UE. |

Optionally, after the UE enters an RRC idle state or an RRC inactive state, the UE goes offline, or the UE is handed over to a cell of another base station, the method shown in FIG. 8(a) further includes: The CU sends a UE operation status information release request message to the RIC module. Optionally, the method may further include: The RIC module sends a UE operation status information release acknowledgement message to the CU.

In this method, if the base station is an integrated base station, the CU may be replaced with the base station. In a CP/UP separation scenario, the CU in this method may further be replaced with a CP and/or an UP.

In this embodiment of this application, the UE operation status information release request message is used to notify the operation status information of the UE that is to be released or deleted, and a name thereof is not limited. For example, the message may be referred to as a y^{th} message, a UE context release message, a UE AI CONTEXT RELEASE REQUEST message, or another name. Herein, y is a positive integer. The UE operation status information release request message may include one or more of IEs shown in Table 8. This is not limited in this embodiment of this application.

In this embodiment of this application, the UE operation status information release acknowledgement message is used by the RIC module to respond to the UE operation status information release request message, and a name thereof is not limited. For example, the message may be referred to as a y^{th} message, a UE context release acknowledgement message, a UE AI CONTEXT RELEASE RESPONSE message, or another name. Herein, y is a positive integer.

Optionally, the foregoing method may be referred to as a UE context release procedure, a UE operation status information release procedure, or a UE AI context release procedure. This is not limited in this embodiment of this application.

**Table 8**

| IE | IE description |
|---|---|
| Message type | The message type is used to indicate a type of the message. |
| | For example, the message type indicates that the type of the message is a UE status information release request message. |
| UE **identifier** | The UE identifier is used to identify the UE. One or more UEs may be identified. |

To report the operation status information of the UE to the RIC module, the CU needs to obtain the operation status information of the UE. As described above, the operation status information of the UE may include one or more of the following information of the UE: AI capability information, AI configuration information, and AI status information.

In a possible implementation, the UE may report the AI capability information of the UE to the base station or the CU. That the UE reports the AI capability information of the UE to the CU is used as an example. The report method includes: The UE sends the AI capability information of the UE to the CU, where the AI capability information indicates an AI capability of the UE. Optionally, the report method may be triggered by the CU by sending a UE capability enquiry (UECapabilityEnquiry) message to the UE. After receiving the UE capability enquiry message, the UE reports the capability information of the UE to the CU. This procedure may be referred to as a UE capability obtaining procedure S806. Optionally, the report method may be performed during an RRC connection establishment procedure between the UE and the CU. For example, the UE reports the AI capability information of the UE to the CU in the RRC connection establishment procedure.

In a possible implementation, the UE is handed over from a source base station to a target base station. If the target base station has obtained the AI capability information of the UE from a core network or from the source base station, the UE does not need to report the AI capability information of the UE to the target base station, that is, the target base station and the UE do not need to perform a capability obtaining procedure. Alternatively, in the procedure of establishing an RRC connection to the target base station, the UE reports the AI capability information of the UE to the target base station.

Optionally, the AI configuration information of the UE may be configured for the UE by the RAN (for example, the CU). Therefore, the CU may not need to obtain the configuration information of the UE from the UE. The CU knows the AI configuration information of the UE, or may obtain the AI configuration information of the UE from another network element or node (such as the DU or another CU) in the RAN.

Optionally, the AI status information of the UE is information in an operation procedure. The AI status information of the UE may be reported by the UE to the CU, monitored or measured by the CU, or monitored or measured by another network element (such as the DU or another CU) in the RAN and then notified by the another network element to the CU.

The foregoing describes a detailed procedure in which the RIC module publishes a task to the base station in S801. Optionally, in the method shown in FIG. 8(b), the RIC module may perform S801 a plurality of times, to publish a plurality of first tasks to the base station. In addition, as described below, the RIC module may further delete a task or update a task.

In the method shown in FIG. 8(b), the RIC module may further delete or terminate, by using a task deletion procedure, a task that has been published to the base station. For example, the method includes: The RIC module publishes a task release message to the base station. The task release message is used to release or terminate one or more tasks, and a name of the message is not limited, for example, may be a task release request message or a y^{th} message, where y is a positive integer. Optionally, the method may further include: The base station sends a task release acknowledgement message to the RIC module. The task release acknowledgement message is used to acknowledge releasing or termination of one or more tasks, and a name of the message is not limited, for example, may be a y^{th} message, where y is a positive integer.

In a possible implementation, the task release message includes one or more of the following information:
a message type;
a message ID; and
a task identifier, used to indicate one or more tasks to be released, where this identifier is similar to the task ID shown in Table 2.

In another possible implementation, the task release message includes one or more of the following information:
a message type;
a message ID; and
a transaction (transaction) identifier, used to indicate a task to be released, where this identifier is similar to the transaction identifier shown in Table 1, and is used to release one or more tasks configured in a procedure that carries the transaction identifier. The message may include one or more transaction identifiers.

In the method shown in FIG. 8(b), the RIC module may further publish a to -be-added, modified, and/or deleted task to the base station by using a task modification procedure. For example, the RIC module publishes a task modification message to the base station, to add one or more tasks, modify one or more tasks, and/or release one or more tasks. In this embodiment of this application, a name of the task modification message is not limited, for example, may be a task modification request (TASK MODIFICATION REQUEST) message or a y^{th} message, where y is a positive integer. Optionally, the method may further include: The base station sends a task modification acknowledgement message to the RIC module. The task modification acknowledgement message is used to acknowledge update of one or more tasks, and a name of the message is not limited, for example, may be a y^{th} message, where y is a positive integer.

For example, the task modification message includes one or more of the following information:
a message type;
a message ID;
information about one or more tasks to be added;
information about one or more tasks to be modified; and
identifiers of one or more tasks to be released.

In the information about the one or more tasks to be added, information about each task is shown as the foregoing TASK CONFIGURATION INFORMATION message. Details are not described herein again. In the information about the one or more tasks to be added, information about each task is shown as the foregoing TASK CONFIGURATION INFORMATION message, or information about each task includes an updated parameter in the foregoing TASK CONFIGURATION INFORMATION message. Details are not described herein again. Optionally, the foregoing RIC TASK ADDITION REQUEST message may be considered as a special task modification message.

The identifiers of the one or more tasks to be released may be similar to the task ID shown in Table 2, or similar to the transaction identifier shown in Table 1, and used to release one or more tasks configured by using information that carries the transaction identifier.

The foregoing describes in detail procedures in which the RIC module publishes a new task to the base station, publishes an updated task to the base station, and indicates to release a task. If the base station is an integrated base station, for each of the first tasks, there are the following cases.
(1) When an execution body of the task is the base station, the base station executes the task. In this embodiment of this application, for example, the RIC module indicates the base station to collect an uplink data packet loss rate of the UE.
(2) When an execution body of the task is the UE, the base station publishes the task to the UE by using an RRC layer message. In this embodiment of this application, for example, the base station or the CU may establish, with the UE based on QoS information of the task, PDCP and RLC instances corresponding to an SRB, an AI-CRB, or an AI-DRB, and use the SRB, AI-CRB, or AI-DRB instances to carry information about the task.

If the CU and the DU of the base station are separated, and the configuration information is received by the CU, for each of the first tasks, there are the following cases.
(1) When an execution body of the task is the DU, the CU forwards the task to the DU, and the DU executes the task. Optionally, if a G1 interface exists between the DU and the RIC, a task for the DU may be sent by the RIC module to the DU through the G1 interface without forwarding by the CU.

In this embodiment of this application, for example, the RIC module indicates the CU to collect an uplink data packet loss rate of the UE. The CU may perform a UE context modification (UE context modification) procedure (S807) with the DU, to indicate the DU to collect the uplink data packet loss rate of the UE. The DU may send collected data to the CU. In this embodiment of this application, the UE context modification procedure between the CU and the DU may be used to update UE information.

In this embodiment of this application, for example, an inference result published by the RIC module to the DU or the base station indicates at least one of the following information: handover threshold configuration information, RACH configuration information of a cell, downlink reference signal transmit power of the cell, maximum uplink transmit power information of the cell, a serving cell configuration of the UE, a DRX configuration of the UE, a DRB configuration of the UE, and the like.

For example, the RIC module indicates the downlink reference signal transmit power of the cell, and the CU may send a CU configuration update message (CU CONFIGURATION UPDATE) to the DU, where the message carries a downlink reference signal transmit power value of the cell. That is, the CU and the DU may apply the inference result to the DU by using a CU configuration update procedure S808. In this embodiment of this application, the CU configuration update procedure between the CU and the DU may be used to update cell information.

(2) When an execution body of the task is the CU, the CU executes the task. In this embodiment of this application, for example, an inference result published by the RIC module to the CU or the base station indicates at least one of the following: downlink synchronization signal transmit power of a cell, a handover decision threshold, and an RRC connection status of the UE.

(3) When an execution body of the task is the UE, the CU publishes the task to the UE through an RRC layer. Optionally, the CU may establish, with the UE based on QoS information of the task, PDCP and RLC instances corresponding to an SRB, an AI-CRB, or an AI-DRB, and use the SRB, AI-CRB, or AI-DRB instances to carry information about the task.

(4) When the CP and the UP of the base station are separated, and the CU-CP receives the configuration information, if an execution body of the task is the CU-CP, the CU-CP executes the task; or if an execution body of the task is the CU-UP, the CU-CP forwards the task to the CU-UP, and the CU-UP executes the task. Optionally, if an interface exists between the CU-UP and the RIC module. a task for the CU-UP may be sent by the RIC module to the CU-UP through the interface without forwarding by the CU-CP.

In this embodiment of this application, if a task published by the RIC module to the base station, the CU, the DU, the CU-CP, and/or the CU-UP is an inference result, the corresponding module applies the result. Optionally, if the inference result needs to be notified by the base station to the UE, the base station further indicates the inference result to the UE in a form of a parameter by using signaling. For example, task content is adjusting a time-frequency resource location of a sounding reference signal (sounding reference signal, SRS) of the UE, adjusting maximum uplink transmit power of the UE, or the like.

For any AI task published by the RIC module, if an execution body of the task is the UE, the method shown in FIG. 8(b) further includes S809, to publish the task to the UE. For example, the base station or the CU (the CU is used as an example for description in FIG. 8(b)) may send the task to the UE in a broadcast, multicast, or unicast form. The base station may directly send the task content to the UE, or send the task content to the UE after processing. This is not limited.

In this embodiment of this application, if the task published by the RIC module to the UE is data collection, the base station may directly send the task content to the UE, or send the task content to the UE after processing. If the task published by the RIC module to the UE is an inference result, the base station may indicate the inference result to the UE in a form of a parameter.

In a possible implementation, for an AI task, if an execution body of the AI task is all UEs, a group of UEs, or UE that meets a specific condition in a cell, the CU may broadcast the task to the UE by using system information, a paging message, or an AI-CRB. In a possible implementation, if the execution body of the task is specific UE, the CU may publish the task to the specific UE by using a specific RRC message, a paging message, or an AI-DRB.

Optionally, when the execution body of the AI task is UE that meets a specific condition, for example, a condition met by the UE that is indicated in Table 2 and that executes a task, the CU may determine, based on the condition and corresponding information of the UE, for example, one or more of the following information: an AI capability, a service status, a location, and an RRC connection status, specific UE for executing the task.

Optionally, when the execution body of the AI task is UE that meets a specific condition, for example, a condition met by the UE that is indicated in Table 2 and that executes a task, the CU may indicate the condition to the UE in the cell in a broadcast form, and each UE may determine, based on the condition and one or more of the following information of the UE: an AI capability, a service status, a location, and an RRC connection status, whether the UE executes the AI task.

In S809, the CU may publish one or more tasks to the UE in any one of the following manner AI to manner A3.

Manner A1: The CU publishes or indicates content of the one or more tasks to the UE by using a system message or a MIB.

This manner is applicable to a case in which an execution body of the one or more tasks is all UEs or a plurality of UEs in a cell.

For example, the CU may broadcast an updated system message to the UE by using a system message update procedure, where the system message is used to indicate the content of the one or more tasks to the UE. In this embodiment of this application, from a perspective of an air interface, that the CU indicates the content of the one or more tasks to the UE may be considered as that the CU configures a parameter for the UE. For example, the system message includes one or more of IEs shown in the first column of Table 9.

**Table 9**

| IE | IE content |
|---|---|
| Task execution body/target UE information | In a possible implementation, IDs of a plurality of UEs are indicated. In a possible implementation, a group ID of one or more groups of UEs is indicated. Any group of UEs includes one or more UEs. Quantities of UEs included in different groups of UEs may be the same or may be different. This is not limited in this embodiment of this application. |
| | In a possible implementation, a condition met by the UE that executes the task is indicated. For example, a condition met by a type of the UE is indicated, a condition met by a location of the UE is indicated, a condition met by an RRC connection status of the UE is indicated, a condition met by an AI capability of the UE is indicated, a condition met by a service status of the UE is indicated, a condition met by a measurement amount of the UE is indicated, and/or a condition met by an RRC connection status of the UE is indicated. |
| Information about the 1^{st} task (parameter) | The information about the 1^{st} task (parameter) includes one or more of the following information: |
| | a task ID (optional); |
| | a task type (a function is similar to that of the task type in Table 2); task content (a function is similar to that of the task content in Table 2); and a task status (a function is similar to that of the task status in Table 2). |
| ... | ... |
| Information about the T^{th} task, where T is a positive integer greater than or equal to 1 | Same as the above |

Manner A2: The CU publishes or indicates content of the one or more tasks to the UE by using a paging message.

This manner is applicable to a case in which an execution body of the one or more tasks is a plurality of UEs or specific UE in a cell.

Manner A3: The CU publishes or indicates content of the one or more tasks to the UE by using an RRC message.

This manner is applicable to a case in which an execution body of the one or more tasks is a plurality of UEs or specific UE in a cell.

In a possible implementation, the CU indicates the task content to the UE by using an RRC reconfiguration message through an RRC reconfiguration procedure. Optionally, the UE may reply to the CU with an RRC reconfiguration complete message.

In another possible implementation, the CU indicates the task content to the UE by using a new RRC message, such as a new RIC reconfiguration message. Optionally, the UE may reply to the CU with a response message of the new RRC message, for example, a new RIC reconfiguration complete message.

For example, in manner A2 or A3, the paging message or the RRC message sent by the CU to the UE includes one or more of IEs shown in the first column of Table 10.

**Table 10**

| IE | IE content |
|---|---|
| Information about the 1^{st} task | Same as Table 9 |
| ... | ... |
| Information about the T^{th} task, where T is a positive | Same as Table 9 |
| integer greater than or equal to 1 | |

The CU may publish different tasks to the UE in a same manner or different manners. This is not limited in this embodiment of this application.

For a higher-layer message exchanged in manner A3, the CU may determine RB configuration information of the higher-layer message, and notify the DU of the RB configuration information by using, for example, a downlink RRC message transfer (DL RRC MESSAGE TRANSFER) message or a CU reconfiguration (CU CONFIGURATION UPDATE) message. The DU sends the higher-layer message to corresponding UE based on the RB configuration information by using a physical channel corresponding to the RB. In this method, optionally, after receiving a CU CONFIGURATION UPDATE message, the DU may feed back a CU CONFIGURATION UPDATE ACK message to the CU.

In the method shown in FIG. 8(b), for any task, if a type of the task is data collection, the base station further reports collected information to the RIC. Specifically, there are the following scenarios.

Scenario B1: For a data collection task, if an execution body of the task is the base station, and the base station is an integrated base station, the base station reports collected data to the RIC.

Scenario B2: For a data collection task, if an execution body of the task is the CU, and a G1 interface exists between the RIC module and the CU, the CU reports collected data to the RIC module through the G1 interface.

Scenario B3: For a data collection task, if an execution body of the task is the CU-CP, and a G1 interface exists between the RIC module and the CU-CP, the CU-CP reports collected data to the RIC module through the G1 interface.

Scenario B4: For a data collection task, if an execution body of the task is the CU-UP, and a G1 interface exists between the RIC module and the CU-UP, the CU-UP reports collected data to the RIC module through the G1 interface.

Scenario B5: For a data collection task, if an execution body of the task is the CU-UP, no G1 interface exists between the RIC module and the CU-UP, and a G1 interface exists between the RIC and the CU-CP, the CU-UP forwards collected data to the CU-CP, and the CU-CP reports, to the RIC module through the G1 interface, the data collected by the CU-UP.

Scenario B6: For a data collection task, if an execution body of the task is the DU, and a G1 interface exists between the RIC module and the DU, the DU reports collected data to the RIC module through the G1 interface.

Scenario B7: For a data collection task, if an execution body of the task is the DU, no G1 interface exists between the RIC module and the DU, and a G1 interface exists between the RIC module and the CU, the DU forwards collected data to the CU through an F1 interface, and the CU reports, to the RIC module through the G1 interface, the data collected by the DU.

When reporting the collected data to the RIC module, the base station may report the data by using a task report message in S810. The task report message is used to report the collected data to the RIC module. The data may be operation status information. For example, the task report message may be referred to as a RIC TASK REPORT message, a data report message, a y^{th} message, or another name. Herein, y is a positive integer. For example, the task report message may include one or more of IEs shown in the first column of Table 11 or Table 12.

Optionally, when an execution object of the task is the DU, and there is no interface between the DU and the RIC module, after the task is received, the DU executes the task based on the task content and sends a RIC TASK REPORT message to the CU when a report condition is met (S811). The CU may report the data collected by the DU to the RIC module by using the RIC TASK REPORT message. The condition may be a cycle, an event, or the like. This is not limited. The message includes a RIC task execution result.

**Table 11**

| IE | IE content |
|---|---|
| Message type | The message type is used to indicate a type of the message. |
| | For example, the message type is used to indicate that the message is a RIC TASK REPORT message. |
| Message ID | The message ID is used to identify the message. |
| Transaction (transaction) ID | The transaction ID is similar to the transaction ID in Table 1, and is used to indicate one or more transaction IDs. |
| Report information of one or more tasks | Report information of each data collection task in each transaction ID includes one or more of the following content: |
| | a task ID (task ID in Table 2); and |
| | reported content (where when the task type is data collection, the reported content includes collected data; or when the task type is model training, the reported content includes information such as a gradient of an AI model parameter) |

**Table 12**

| IE | IE content |
|---|---|
| Message type | The message type is used to indicate a type of the message. |
| | For example, the message type is used to indicate that the message is a RIC TASK REPORT message. |
| Message ID | The message ID is used to identify the message. |
| Report information of one or more tasks | Report information of each task includes one or more of the following content: a task ID (task ID in Table 2); and |
| | reported content (where when the task type is data collection, the reported content includes collected data; or when the task type is model training, the reported content includes information such as a gradient of an AI model parameter) |

In the method shown in FIG. 8(b), for any task, if a type of the task is data collection, and an execution body is the UE, the base station further reports, to the RIC, information collected by the UE.

In a possible implementation, that the base station is a CU/DU separated base station is used as an example. The UE may report the operation status information of the UE to the CU by using the foregoing method, and the CU forwards the operation status information of the UE to the RIC module by using S804 and/or S805. The operation status information includes data that the RIC module requires the UE to collect.

In another possible implementation, after the UE receives the task content or receives the task content and determines that the UE needs to execute a RIC task, the UE executes the task based on the task content and sends a RIC TASK REPORT message to the DU when a task report condition is met (S812). Optionally, before sending the message, the UE determines, according to a protocol agreement or task priority information, an RB that carries the message, and sends RIC TASK REPORT to the DU by using the RB. The DU receives the message and transfers the message to the CU by using an uplink RRC message transfer (UL RRC MESSAGE TRANSFER) message.

After receiving, from the CU, the data collected by the base station and/or the UE, the RIC module may perform inference by using the data and publish an inference result to the base station and/or the UE.

In a possible implementation, the RIC module publishes the inference result by using the RIC TASK ADDITION REQUEST message or the task modification message in S801. A task type of a task that is in the message and that is used to publish the inference result is inference result publishing. Optionally, the message may alternatively include another type of task. This is not limited.

In another possible implementation, the RIC module sends an inference result indication message to the base station, the CU, or the DU by using an inference result indication procedure S813, to publish the inference result to the base station. The inference result indication message is used to publish the inference result, and a name thereof is not limited, for example, may be a RIC RESULT INDICATION message or a y^{th} message. Herein, y is a positive integer. For example, the inference result indication message includes one or more of IEs shown in Table 13.

For example, after the RIC receives data collected by the UE and/or a gNB, a related AI application outputs an inference result (operation result) after an AI operation in a period of time. If an AI operation result is that parameter configuration needs to be performed on the RAN or the UE, for example, a handover decision threshold needs to be adjusted, downlink synchronization signal transmit power of a cell needs to be adjusted, or an RRC connection status of the UE needs to be changed, the RIC sends an AI inference result to the CU by using a RIC RESULT INDICATION message. When there is a G1 interface between the RIC and the CU-UP, the AI inference result of the RIC may be directly published to the CU-UP. When there is a G1 interface between the RIC and the DU, the AI inference result of the RIC may be directly published to the DU.

**Table 13**

| IE | IE content |
|---|---|
| Inference result information of the 1^{st} parameter | One or more of the following content is indicated: a parameter identifier or name; |
| | a target application object (a method is similar to indicating the task execution body in Table 2, where the target application object may be one or more of a plurality of application objects, and the plurality of application objects may be at least two of the following: the base station, the CU, the DU, the CU-CP, the CU-UP, or the UE); and |
| | a parameter value (for example, handover threshold configuration information, RACH configuration information of a cell, maximum uplink transmit power information of the cell, serving cell configuration information of the UE, a DRX configuration of the UE, or a DRB configuration of the UE). |
| ... | ... |
| Inference result information of the W^{th} parameter (where W is a positive integer) | Same as the above |

Optionally, if the AI inference result is a new AI model or modifying an original AI data collection task, the RIC module may send a RIC TASK MODIFICATION REQUEST message to the CU by using the foregoing task modification procedure, where the message includes the new AI model or an updated AI data collection task. When there is a G1 interface between the RIC and the CU-UP, the RIC may directly send CU-UP-oriented RIC TASK MODIFICATION REQUEST to the CU-UP. When there is a G1 interface between the RIC and the DU, the RIC may directly send DU-oriented RIC TASK MODIFICATION REQUEST to the DU.

After a related node receives an AI inference result published to the related node, the related node applies the result, for example, adjusts a handover decision threshold, or adjusts downlink synchronization signal transmit power of a cell.

For example, in the foregoing method, if an application object of an inference result is the UE, similar to that in the method described in S807, the base station may publish the inference result to the UE by using a system message, a MIB, a paging message, or the like, and the UE uses the inference result. For example, if an application object of the inference result is the base station, a corresponding network element in the base station uses the inference result.

For example, in the foregoing method, when the RIC module publishes, to the base station, an inference result to be applied by the base station, there are the following scenarios. An inference result in the following scenarios may be replaced with inference result indication information.

Scenario C1: If the base station is an integrated base station, the base station applies the inference result.

Scenario C2: If the base station is a CU/DU separated base station, an application object of the inference result is the CU, and a G1 interface exists between the RIC module and the CU, the CU receives the inference result through the G1 interface, and applies the inference result.

Scenario C3: If the base station is a CU/DU separated base station, an application object of the inference result is the CU-CP, and a G1 interface exists between the RIC module and the CU-CP, the CU-CP receives the inference result through the G1 interface, and applies the inference result.

Scenario C4: If the base station is a CU/DU separated base station, an application object of the inference result is the CU-UP, and a G1 interface exists between the RIC module and the CU-UP, the CU-UP receives the inference result through the G1 interface, and applies the inference result.

Scenario C5: If the base station is a CU/DU separated base station, an application object of the inference result is the CU-UP, and no G1 interface exists between the RIC module and the CU-UP, the CU-CP receives the inference result through a G1 interface and forwards the inference result to the CU-UP, and the CU-UP applies the inference result.

Scenario C6: If the base station is a CU/DU separated base station, an application object of the inference result is the DU, and a G1 interface exists between the RIC module and the DU, the DU receives the inference result through the G1 interface, and applies the inference result.

Scenario C7: If the base station is a CU/DU separated base station, an application object of the inference result is the DU, and no G1 interface exists between the RIC module and the DU, the CU receives the inference result through a G1 interface and forwards the inference result to the DU, and the DU applies the inference result.

Example 2: Independent RIC architecture (FIG. 6(a)) + AIC layer parallel to RRC layer (FIG. 7(b))

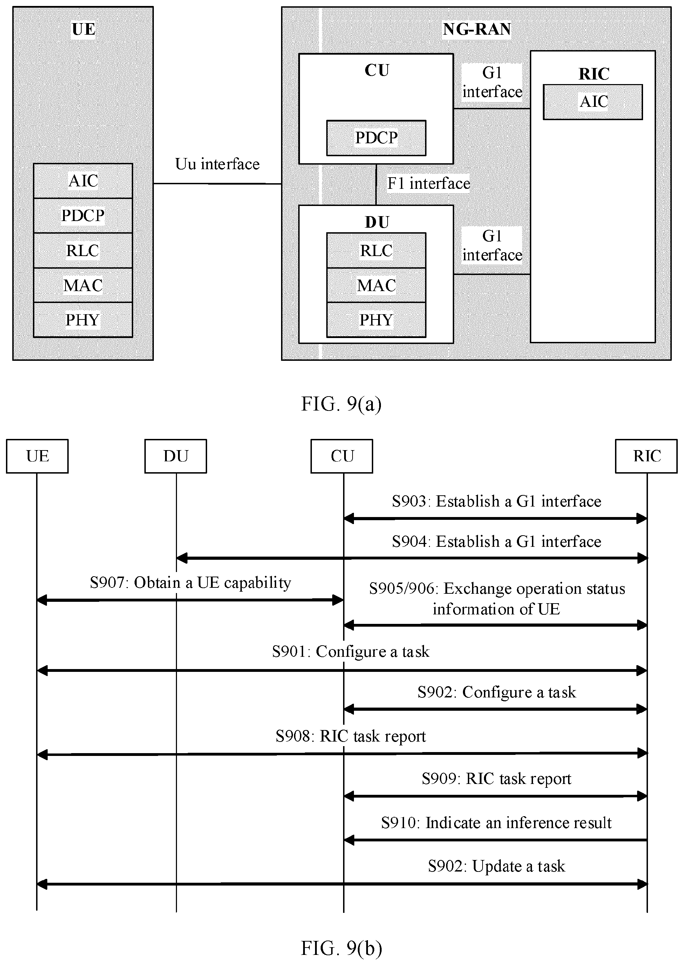

FIG. 9(a) shows an example 2 of an architecture (network architecture + protocol stack) between a base station and UE. FIG. 9(b) is an example diagram of an information exchange procedure between a RAN and UE based on the architecture shown in FIG. 9(a). In example 2, there is an independent AIC protocol layer. As described in the foregoing description of FIG. 7(b), the AIC layer performs an AI function in non-real-time functions. In addition, the AIC layer may further perform rt-RIC AI initialization and/or some AI functions in real-time functions, for example, at least one of model training, model downloading, and model publishing.

In the architecture shown in FIG. 8(a), a RIC module exists in the RAN. In this architecture, the RIC module of the RAN performs at least one of the following operations: model downloading, model training, data collection, inference, and inference result publishing.

When the UE does not support a RIC function (that is, does not have a RIC module), the RIC module of the RAN may request the base station to collect data and/or publish an inference result to the base station. The RIC module of the RAN may further indicate the UE to collect data or send an inference result to the UE by using AIC layer signaling (or referred to as an AIC layer message). The AIC layer is a protocol layer that is parallel to the RRC layer. As described in the foregoing description of FIG. 7(b), the AIC layer signaling may be sent to the UE through lower protocol layers in the base station successively. The data that the RIC module requires the UE to collect may be RRC layer data or physical layer data. This is not limited. In this embodiment of this application, a model used to perform inference may be a downloaded original model, or may be an updated model obtained through training based on training data. This is not limited. Training data used by the RIC module to perform model training may be collected from the base station and/or the UE. Inference data used by the RIC module to perform inference may be collected from the base station and/or the UE.

When the UE supports a RIC function, the RIC module of the RAN may request the base station to collect data and/or publish an inference result to the base station. The RIC module of the RAN may further indicate the UE to collect data, indicate the UE to perform federated learning, publish a model (to be used by the UE to perform inference) to the UE, or send an inference result to the UE through the AIC layer. The data that needs to be collected by the UE may be RRC layer data or physical layer data. This is not limited. In this embodiment of this application, a model used to perform inference may be a downloaded original model, or may be an updated model obtained through training based on training data. This is not limited. Training data used by the RIC module to perform model training may be collected from the base station and/or the UE. Inference data used by the RIC module to perform inference may be collected from the base station and/or the UE.

For ease of description, the following RIC module refers to a RIC module on a RAN side, unless otherwise stated.

For example, based on the architecture shown in FIG. 9(a), on the RAN side, the RIC module implements an AI function in non-real-time functions by using the AIC layer, and implements some AI functions in real-time functions by using layer 1 and/or layer 2 in the base station. Some configuration information of the some AI functions in the real-time functions may be sent to the UE by using AIC layer signaling. For example, the RIC module implements at least one of the following by using an AIC layer message: indicating the UE to collect data, indicating configuration information of an AI-related RB, publishing an inference result (parameter value) to the UE, indicating parameter configuration related to layer 1 and/or layer 2 AI functions, publishing model information to the UE, and indicating the UE to perform model training (such as federated training).

For example, on a UE side, correspondingly, an AI function in non-real-time functions and an AI function in real-time functions are assisted to be implemented based on information received from the RAN side.

FIG. 9(b) is an example diagram of a procedure in which the RAN and the UE exchange information by using the architecture shown in FIG. 9(a). The procedure mainly includes: The RIC module publishes a task to the UE, and the UE executes the corresponding task. Optionally, when the task published by the RIC module includes data collection, the UE reports collected data to the RIC module. Optionally, after training or updating a model based on the collected data, the RIC module may perform inference by using the model. Optionally, after performing an inference function based on the collected data, the RIC module may publish an inference result to the UE. Optionally, when the task published by the RIC module is model publishing, the UE receives information about a model. The UE may perform inference by using the model. Optionally, when the task published by the RIC module is model training, the UE reports model parameter gradient information obtained through training to the RIC module. The following describes in detail a method shown in FIG. 9(b).

S901: The RIC sends second task configuration information to the UE, and the UE receives the second task configuration information.

In this method, the second task configuration information is used by the RIC module to publish a new task to the UE. The information is carried by using an AIC layer message or AIC layer signaling. In this embodiment of this application, a name of a message that carries the second task configuration information is not limited. For example, in this embodiment of this application, the message that carries the second task configuration information may be referred to as a y^{th} message, a RIC TASK ADDITION message, or a RIC TASK ADDITION REQUEST message. Herein, y is a positive integer. This embodiment of this application is shown by using an example in which the name of the message is RIC TASK ADDITION REQUEST. The UE may execute the corresponding task according to an indication of the configuration information.

Optionally, S901 includes: The UE returns an acknowledgement message of the second task configuration information to the RIC module. The second task acknowledgement information is used by the UE to acknowledge the RIC TASK ADDITION REQUEST message in S901 to the RIC module. In this embodiment of this application, a name of a message that carries the second task acknowledgement information is not limited. For example, in this embodiment of this application, the message that carries the second task acknowledgement information may be referred to as a RIC TASK ADDITION RESPONSE message, a y^{th} message, or another name. Herein, y is a positive integer.

Optionally, when the second task configuration information can configure a plurality of tasks (in this case, an actually sent message may include one or more tasks), the RIC TASK ADDITION REQUEST message includes one or more of IEs shown in the first column of Table 14.

**Table 14**

| IE | IE description |
|---|---|
| Message type | The message type is used to indicate a type of the message. |
| | For example, the message type indicates that the type of the message is a RIC TASK ADDITION REQUEST message. |
| Transaction (transaction) identifier (identifier, ID) | The transaction identifier is used to identify a RIC TASK ADDITION procedure. For example, after receiving the following RIC TASK ADDITION RESPONSE message, the RIC learns which RIC TASK ADDITION REQUEST message is responded to. |
| | Alternatively, the transaction identifier is used to identify a task configured by using the message, that is, used to distinguish a task request published from the RIC module. In this case, the identifier may also be referred to as a first ID or another name of the task. This is not limited in this embodiment of this application. |
| Task list, including one or more pieces of task configuration information TASK CONFIGURATION INFORMATION (referring to Table 15). | The task list is used to indicate configuration information TASK CONFIGURATION INFORMATION of each of one or more tasks. |

**Table 15**

| IE | IE description |
|---|---|
| Task ID | Same as the corresponding description in Table 2 |
| Task type | Same as the corresponding description in Table 2 |
| Task content | Same as the corresponding description in Table 2 |
| Task execution body | The task execution body is used to indicate UE that executes the task. |
| | The target UE may be indicated in any one of the following manners: |
| | (1) Indicate an ID of one or more UEs. |
| | (2) Indicate a group ID of one or more groups of UEs. Any group of UEs includes one or more UEs. Quantities of UEs included in different groups of UEs may be the same or may be different. This is not limited in this embodiment of this application. |
| | (3) Indicate a condition met by the UE that performs the task. For example, a condition met by a type of the UE is indicated, a condition met by a location of the UE is indicated, a condition met by an RRC connection status of the UE is indicated, a condition met by an AI capability of the UE is indicated, a condition met by a service status of the UE is indicated, a condition met by a measurement amount of the UE is indicated, and/or a condition met by a network connection status of the UE is indicated. |
| Task status | Same as the corresponding description in Table 2 |

In this embodiment of this application, S901 may be referred to as a task addition procedure, a task configuration procedure, or another name.

Similar to that in the method shown in FIG. 8(b), in the method shown in FIG. 9(b), the RIC module may perform S901 a plurality of times, to publish a plurality of second tasks to the UE. In addition, as described below, the RIC module may further delete a task or update a task.

For example, the RIC module may delete or terminate, by using a task deletion procedure, a task that has been published to the UE. For example, the method includes: The RIC module publishes a task release message to the UE. The task release message may be referred to as a RIC TASK RELEASE REQUEST message. For specific content of the RIC TASK RELEASE REQUEST message, refer to the method shown in FIG. 8(b). Details are not described herein again.

For example, the RIC module may further publish a to-be-added, modified, and/or deleted task to the UE by using a task modification procedure S902. For example, the RIC module publishes a task modification message to the UE, to add one or more tasks, modify one or more tasks, and/or release one or more tasks. The task modification message may be referred to as a RIC TASK MODIFICATION REQUEST message. Specific content of the RIC TASK MODIFICATION REQUEST message may be similar to the method shown in FIG. 8(b). Details are not described herein again.

In the method in FIG. 9(b), an AIC layer message sent by the RIC module to the UE, such as a RIC TASK ADDITION REQUEST message, a RIC TASK RELEASE REQUEST message, and a RIC TASK MODIFICATION REQUEST message sent by the RIC module to the UE, may be sent to the UE through the base station. As described in the foregoing description for FIG. 7(b), the AIC layer message may successively pass through a PDCP layer, an RLC layer, a MAC layer, and a physical layer of the base station, be sent by the physical layer of the base station to a physical layer of the UE, successively pass through a MAC layer, an RLC layer, a PDCP layer, and an AIC layer on the UE side, and be parsed by the AIC layer of the UE. For example, a CU receives the message from the RIC module through a G1 interface, and may determine, based on priority information corresponding to the message, an RB that carries the message and configuration at each protocol layer based on the RB. Then, a DU sends the message to the UE.

Similar to the method shown in FIG. 8(b), the method shown in FIG. 9(b) may include S802 (referred to as S903 in this method), S803 (referred to as S904 in this method), S804/S805 (referred to as S905/S906 in this method), and an F1 interface establishment procedure.

Similar to S806 in the method in FIG. 8(b), the method in FIG. 9(b) may include S907: The CU may obtain AI capability information of the UE by using a UE capability obtaining procedure. Alternatively, the CU obtains AI capability information of the UE from a core network or a source base station. The CU may send the information to the RIC module by using the foregoing procedure in S905 and/or S906. After obtaining the AI capability information of the UE, the RIC module may initiate, based on a QoS requirement and the like, a procedure of establishing an RB on one or more air interfaces, to carry uplink and downlink AIC layer data or signaling in AI-related procedures such as AI data collection, AI model downloading, and AI model update.

Optionally, the method shown in FIG. 9(b) may further include S902: The RIC module publishes a task to the base station, where content of the task is data collection or an inference result. A specific configuration method is similar to the corresponding method in FIG. 8(b). A difference from the method in FIG. 8(b) is that the task published by the RIC module to the base station in S902 does not include a task published by the RIC module to the UE. A reason is as follows: As described above, in the method shown in FIG. 9(b), an AIC layer of the RIC module publishes a task to an AIC layer of the UE.

The RIC module may publish a task to at least one of a CU, a DU, a CU-CP, and a CU-UP. For example, a data collection task published by the RIC module to the CU or the DU is: requesting to measure an uplink transmission latency of the UE.

Optionally, the method shown in FIG. 9(b) may further include: The RIC and the base station perform a configuration update procedure.

The foregoing describes a case in which the RIC module publishes a task to the UE or the base station, and the RIC module may require the CU and/or the DU to perform a corresponding operation to cooperate to complete or assist in completing the published RIC task. A procedure used to perform the operation may be referred to as a configuration update procedure. For example, if the RIC module indicates a plurality of UEs to collect data, the RIC module may configure an uplink transmission parameter such as an uplink resource for the base station, and the base station may indicate the uplink transmission parameter to the UE through an air interface, so that the UE anonymously reports collected data by using the uplink transmission parameter. For another example, if the RIC module indicates the UE to perform federated learning, the RIC module may configure an uplink transmission parameter such as an uplink resource for the base station, and the base station may indicate the uplink transmission parameter to the UE through an air interface, so that the UE reports model parameter gradient information by using the uplink transmission parameter. For example, the base station configures, on the air interface by using system information, a time-frequency resource, a dedicated preamble (preamble), and the like to be used by the UE to send an anonymous data collection or federated learning uplink report, so that the UE performs uplink sending by using these radio resources when the UE has data to be reported. The RIC module may send a configuration update (CONFIGURATION UPDATE) message to the CU to request the CU to perform a corresponding operation. After accepting, the CU returns a configuration update acknowledgement (CONFIGURATION UPDATE ACK) message to the RIC module. Similarly, optionally, a configuration update procedure may be performed between the RIC module and the DU. Optionally, a configuration update procedure may be performed between the RIC module and the CU-UP.

In the method shown in FIG. 9(b), after receiving the task published by the RIC module, the UE executes the task based on task content, and sends a RIC TASK REPORT message to the RIC module when a task report condition is met (S908). This message is an AIC layer message. Optionally, before sending the message, the UE determines, according to a protocol agreement or task priority information, an RB that carries the message, and sends information to the base station by using the RB, where the information includes the RIC TASK REPORT message. The base station or the CU of the base station may deliver the information to the RIC module, and the RIC module obtains, at the AIC layer, the RIC TASK REPORT message sent by the UE. For description of the RIC TASK REPORT message, refer to Table 11. Details are not described herein again. Optionally, after successfully receiving the RIC TASK REPORT message, the RIC module may return an acknowledgement message to the UE, where the message may be referred to as a RIC TASK REPORT ACKNOWLEDGE message. This message is an AIC layer message.

Similar to that in the method shown in FIG. 8(b), after receiving the task published by the RIC module, the CU and/or the DU execute/executes the task based on task content, and send/sends a RIC TASK REPORT message to the RIC module when a task report condition is met (S909). Optionally, after successfully receiving the RIC TASK REPORT message, the RIC module may return an acknowledgement message to the CU and/or the DU, where the message may be referred to as a RIC TASK REPORT ACKNOWLEDGE message.

After receiving, from the CU, the data collected by the base station and/or the UE, the RIC module may perform inference by using the data and publish an inference result to the base station and/or the UE.

In a possible implementation, similar to the method shown in FIG. 8(b), the method shown in FIG. 9(b) may include S910: The RIC module publishes the inference result to the base station. The RIC module may publish an AI inference result to the base station (the CU, the DU, the CU-CP, and/or the CU-UP).

In a possible implementation, the RIC module may publish an updated model, publish an inference result, and/or publish an updated data collection task to the UE in S902 by using a RIC TASK MODIFICATION REQUEST message.

### Example 3: Independent RIC architecture (FIG. 6(a)) + AIC layer above RRC layer (FIG. 7(c))

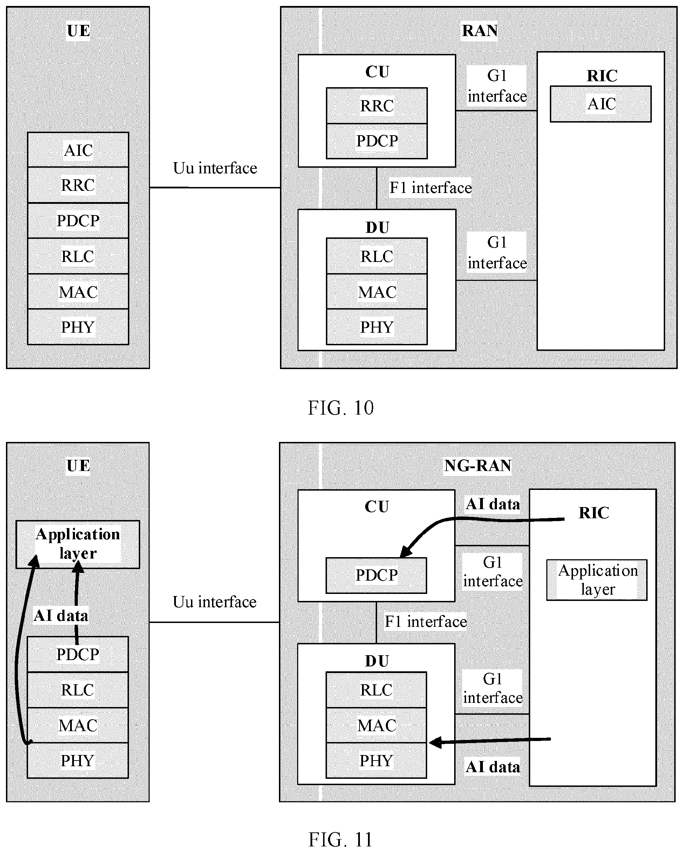

FIG. 10 shows an example 3 of an architecture (network architecture + protocol stack) between a base station and UE. In example 3, there is an independent AIC protocol layer. For example, the AIC layer performs an AI function in non-real-time functions. In addition, the AIC layer may further perform rt-RIC AI initialization and/or some AI functions in real-time functions, for example, at least one of model training, model downloading, and model publishing.

When the architecture shown in FIG. 10 is used, an example diagram of an information exchange procedure between a RAN and UE is the same as that in FIG. 9(b) except for the following difference. A same point between the two procedures is not described.

In example 2 and example 3, a difference between the information exchange procedures between the RAN and the UE is as follows:

As described in FIG. 7(b) and FIG. 7(c), in example 2, the AIC layer message sent by the RIC module is delivered by the AIC layer to the PDCP layer of the CU, and in this architecture, the AIC layer message may be mapped to an RB on a G1 interface according to an application layer protocol. In example 3, the AIC layer message sent by the RIC module is delivered by the AIC layer to the RRC layer, and in this architecture, the AIC layer message is mapped to an RB at the RRC layer.

### Example 4: Independent RIC architecture (FIG. 6(a)) + application layer (FIG. 7(d))

FIG. 11 shows an example 4 of an architecture (network architecture + protocol stack) between a base station and UE. In example 4, for function description of each protocol layer, refer to FIG. 7(d). Details are not described herein again.

When the architecture shown in FIG. 10 is used, except for the following difference, an example diagram of an information exchange procedure between a RAN and UE is the same as that in example 1, example 2, or example 3. For a specific same example, refer to the corresponding description in FIG. 7(d). Details are not described herein again. A same point between the two procedures is not described.

In example 4, a RIC TASK ADDITION REQUEST message is not used to publish a model, that is, a task type indicated by RIC TASK ADDITION REQUEST does not include model publishing. When the RIC module publishes a model publishing task to the UE, the function is implemented by using an application layer of the RIC module and an application layer of the UE. When the RIC module publishes a model, model information is carried in a data RB, for example, an AI-CRB, and sent to the UE.

Further, different from the F1 interface setup procedure in the foregoing example, in an F1 interface setup procedure in example 4, a general packet radio service (general packet radio service, GPRS) tunnel protocol-user plane (tunnel protocol-user plane, GTP-u) common tunnel is created, to transmit AI common signaling/data between the RIC module and the UE. For example, the tunnel is used to carry an AI model published by the RIC module to the UE, a published updated AI model, or an AI model gradient reported by the UE to the RIC module. Only one GTP-u common tunnel may be established between the RIC module and the UE. Priority information is carried by using a GTP-u header to distinguish between data with different QoS requirements, to map the data to a corresponding AI-CRB on an air interface. Alternatively, one GTP-u common tunnel may be established for each priority, one GTU-u common tunnel corresponds to one AI-CRB, and data on different GTP-u common tunnels is directly carried on corresponding AI-CRBs.

Different from the foregoing example, in example 4, if a task received by the UE is model training, the UE sends model parameter gradient information to an application layer of the RIC module by using an application layer. For example, the UE sends a gradient of an AI model parameter to a CU by using an AI-CRB, and then the CU sends the gradient of the AI model parameter to the RIC module by using a GTP-u common tunnel of a G1 interface.

### Example 5: Embedded RIC architecture (FIG. 6(b)) + various possible protocol layers (FIG. 7(a) to FIG. 7(d))

In example 5, the embedded RIC architecture is used, that is, a RIC module is a part of a base station, and there is no RIC module independent of the base station.

A transmission procedure using this architecture is similar to that in the foregoing described example 1 to example 4. A difference lies in that in example 5, a procedure and an operation that are related to a G1 interface are changed to a corresponding procedure and operation inside the base station, so that an implementation of example 5 can be obtained.

### Example 6: Hybrid RIC architecture (FIG. 6(c)) + various possible protocol layers (FIG. 7(a) to FIG. 7(d))

In example 6, the hybrid RIC architecture is used, that is, an nrt-RIC module is a part of a base station, and an rt-RIC module is independent of the base station.

For an AI function in non-real-time functions, a transmission procedure using this architecture is similar to that in the foregoing described example 1 to example 4. For an AI function in real-time functions, a difference between a transmission procedure using this architecture and that in the foregoing described example 1 to example 4 is as follows: In procedures such as publishing a model to the UE and reporting a gradient of an AI model parameter by the UE, corresponding AI information is carried by using an AI-CRB on an air interface. For another AI procedure, corresponding AI information may be carried by using a MAC CE, DCI, or uplink control information (uplink control information, UCI).

In the foregoing embodiments provided in this application, the method provided in embodiments of this application is described from a perspective of each network element and a perspective of interaction between different network elements. To implement functions in the foregoing method provided in embodiments of this application, each network element may include a hardware structure and/or a software module, and the foregoing functions are implemented in a form of a hardware structure, a software module, or a combination of a hardware structure and a software module. Whether one of the foregoing functions is performed in a manner of a hardware structure, a software module, or a hardware structure and a software module depends on a specific application and design constraints of the technical solutions.

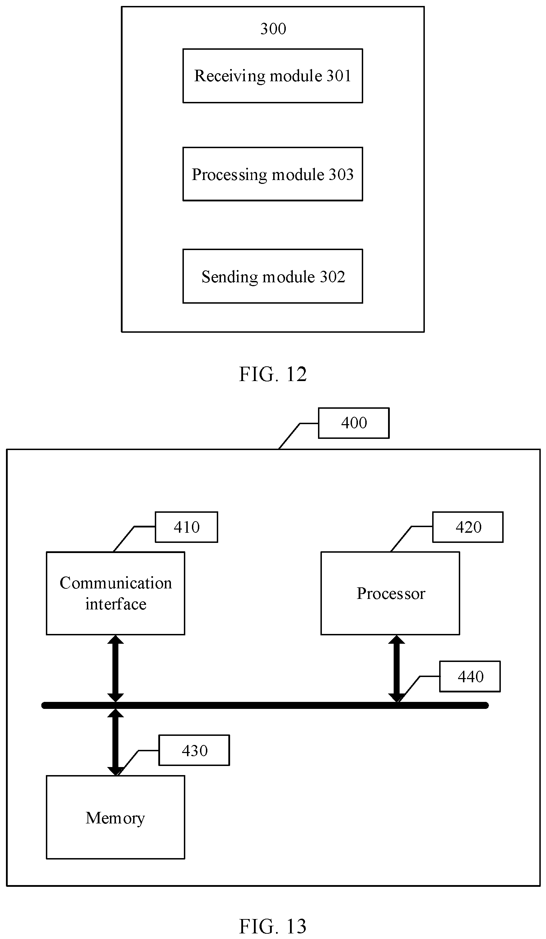

FIG. 12 is an example diagram of a structure of an apparatus 300 according to an embodiment of this application.

In a possible implementation, the apparatus 300 is configured to implement a function of the RIC in the foregoing method. The apparatus may be a RIC, or may be another apparatus that can implement a function of the RIC. The another apparatus can be installed in the RIC, or can match the RIC for use.

In a possible implementation, the apparatus 300 is configured to implement a function of the base station in the foregoing method. The apparatus may be a base station, or may be another apparatus that can implement a function of the base station. The another apparatus can be installed in the base station, or can match the base station for use.

In a possible implementation, the apparatus 300 is configured to implement a function of the terminal device in the foregoing method. The apparatus may be a terminal device, or may be another apparatus that can implement a function of the terminal device. The another apparatus can be installed in the terminal device, or can match the terminal device for use.

The apparatus 300 includes a receiving module 301, configured to receive a signal or information. The apparatus 300 includes a sending module 302, configured to send a signal or information. The apparatus 300 includes a processing module 303, configured to process the received signal or information, for example, configured to decode the signal or information received by the receiving module 301. The processing module 303 may further generate a signal or information to be sent, for example, may be configured to generate a signal or information to be sent by using the sending module 302.

In this embodiment of this application, module division is an example, and is a logical function division. In actual implementation, another division manner may be used. For example, the receiving module 301 and the sending module 302 may further be integrated into a transceiver module or a communication module. In addition, functional modules in each embodiment of this application may be integrated into one processing module, or each of the modules may exist alone physically, or two or more modules are integrated into one module. The integrated module may be implemented in a form of hardware, or may be implemented in a form of a software functional module.

FIG. 13 is an example diagram of a structure of an apparatus 400 according to an embodiment of this application.

In a possible implementation, the apparatus 400 is configured to implement a function of the RIC in the foregoing method. The apparatus may be a RIC, or may be another apparatus that can implement a function of the RIC. The another apparatus can be installed in the RIC, or can match the RIC for use. For example, the apparatus 400 may be a chip system. In embodiments of this application, the chip system may include a chip, or may include the chip and another discrete component. For example, the apparatus 400 includes at least one processor 420, configured to implement a function of the RIC in the method provided in embodiments of this application.

In a possible implementation, the apparatus 400 is configured to implement a function of the base station in the foregoing method. The apparatus may be a base station, or may be another apparatus that can implement a function of the base station. The another apparatus can be installed in the base station, or can match the base station for use. For example, the apparatus 400 may be a chip system. For example, the apparatus 400 includes at least one processor 420, configured to implement a function of the base station in the method provided in embodiments of this application.

In a possible implementation, the apparatus 400 is configured to implement a function of the terminal device in the foregoing method. The apparatus may be a terminal device, or may be another apparatus that can implement a function of the terminal device. The another apparatus can be installed in the terminal device, or can match the terminal device for use. For example, the apparatus 400 may be a chip system. For example, the apparatus 400 includes at least one processor 420, configured to implement a function of the terminal device in the method provided in embodiments of this application.

The apparatus 400 may further include at least one memory 430, configured to store program instructions and/or data. The memory 430 is coupled to the processor 420. The coupling in this embodiment of this application is indirect coupling or a communication connection between apparatuses, units, or modules, may be electrical, mechanical, or in another form, and is used for information exchange between the apparatuses, the units, or the modules. The processor 420 may cooperate with the memory 430 to implement the functions described in the foregoing method embodiments. The processor 420 may execute the program instructions stored in the memory 430. At least one of the at least one memory may be included in the processor 420.

The apparatus 400 may further include a communication interface 410, configured to communicate with another device by using a transmission medium, so that an apparatus in the apparatus 400 can communicate with the another device. The processor 420 receives and sends signals through the communication interface 410, to implement the functions described in the foregoing method embodiments. In this embodiment of this application, the communication interface may be a transceiver, a circuit, a bus, a module, a pin, or another type of communication interface.

A specific connection medium between the communication interface 410, the processor 420, and the memory 430 is not limited in this embodiment of this application. In this embodiment of this application, the memory 430, the processor 420, and the transceiver 410 are connected by using a bus 440 in FIG. 13. The bus is represented by a thick line in FIG. 13. A connection manner between other components is merely an example for description, and constitutes no limitation. The bus may be classified into an address bus, a data bus, a control bus, or the like. For ease of representation, only one thick line is used to represent the bus in FIG. 13, but this does not mean that there is only one bus or only one type of bus.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in embodiments of this application. The general-purpose processor may be a microprocessor, or may be any conventional processor or the like. The steps of the method disclosed with reference to embodiments of this application may be directly performed by a hardware processor, or may be performed by a combination of hardware and software modules in the processor.

In embodiments of this application, the memory may be a non-volatile memory, such as a hard disk drive (hard disk drive, HDD) or a solid-state drive (solid-state drive, SSD), or may be a volatile memory (volatile memory), such as a random access memory (random access memory, RAM). The memory is any other medium that can carry or store expected program code in a form of an instruction structure or a data structure and that can be accessed by a computer, but is not limited thereto. The memory in embodiments of this application may alternatively be a circuit or any other apparatus that can implement a storage function, and is configured to store program instructions and/or data.

All or some of the technical solutions provided in embodiments of this application may be implemented by software, hardware, firmware, or any combination thereof. When software is used to implement embodiments, all or a part of embodiments may be implemented in a form of a computer program product. The computer program product includes one or more computer instructions. When the computer program instructions are loaded and executed on a computer, the procedure or functions according to embodiments of the present invention are all or partially generated. The computer may be a general-purpose computer, a dedicated computer, a computer network, a network device, a terminal device, a RIC, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium that can be accessed by the computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium, or the like.

In embodiments of this application, on the premise that there is no logical contradiction, embodiments may be mutually referenced. For example, methods and/or terms in method embodiments may be mutually referenced. For example, functions and/or terms in apparatus embodiments may be mutually referenced. For example, functions and/or terms in an apparatus embodiment and a method embodiment may be mutually referenced.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A communication method, comprising:
sending (S801), by a radio intelligence controller, RIC, first task configuration information to a base station, wherein the first task configuration information indicates configuration information of one or more artificial intelligence, AI, tasks, wherein
for each of the one or more tasks, the configuration information of the task is used to indicate one or more of the following content of the task: a task identifier, ID, a task type, task content, a task execution body, and a task status, wherein the task is executed by a terminal device or the base station.

2. The method according to claim 1, wherein the task type is data collection, inference result publishing, model publishing, or model training.

3. The method according to claim 1 or 2, wherein
when the task type is data collection, the task content indicates one or more of the following content: a data measurement type, a measurement condition, and a measurement result report;
when the task type is inference result publishing, the task content indicates an inference result;
when the task type is model publishing, the task content indicates model information; or
when the task type is model training, the task content indicates one or more of the following content: a condition for reporting model parameter information or reporting model parameter gradient information, information about a reference neural network, and a neural network training data set.

4. The method according to any one of claims 1 to 3, wherein the task status comprises an activated state or a deactivated state, or the task status comprises an activated state, a deactivated state, or a released state.

5. The method according to any one of claims 1 to 4, wherein the method further comprises:
receiving (S802) a first interface establishment request message from a central unit, CU, of the base station, wherein the first interface establishment request message indicates one or more of the following content:
a message type;
an ID of the CU;
CU capability information;
CU configuration information; and
CU status information.

6. The method according to any one of claims 1 to 5, wherein the method further comprises:
receiving (S803) a second interface establishment request message from a distributed unit, DU, of the base station, wherein the second interface establishment request message indicates one or more of the following content:
a message type;
an ID of the DU;
DU capability information;
DU configuration information; and
DU status information.

7. The method according to any one of claims 1 to 6, comprising: receiving (S804, S805) information about the terminal device from the base station, wherein the information about the terminal device comprises one or more of the following: capability information of the terminal device, configuration information of the terminal device, and status information of the terminal device.

8. The method according to any one of claims 1 to 7, wherein the one or more tasks comprise at least one data collection task, and the method further comprises:
receiving collected data from the base station.

9. The method according to any one of claims 1 to 8, wherein the method further comprises:
publishing (S813) the inference result to the base station.

10. The method according to any one of claims 1 to 9, wherein the one or more tasks comprise at least one model training task, and the method further comprises:
receiving model parameter information or model parameter gradient information from the base station.

11. A communication method, comprising:
receiving (S801), by a base station, first task configuration information from a radio intelligence controller, RIC, wherein the first task configuration information indicates configuration information of one or more artificial intelligence, AI, tasks, wherein
for each of the one or more tasks, the configuration information of the task is used to indicate one or more of the following content of the task: a task identifier, ID, a task type, task content, a task execution body, and a task status, wherein the task is executed by a terminal device or the base station.

12. The method according to claim 11, wherein the task type is data collection, inference result publishing, model publishing, or model training.

13. The method according to claim 11 or 12, wherein
when the task type is data collection, the task content indicates one or more of the following content: a data measurement type, a measurement condition, and a measurement result report;
when the task type is inference result publishing, the task content indicates an inference result;
when the task type is model publishing, the task content indicates model information; or
when the task type is model training, the task content indicates one or more of the following content: a condition for reporting model parameter information or reporting model parameter gradient information, information about a reference neural network, and a neural network training data set.

14. The method according to any one of claims 11 to 13, wherein the task status comprises an activated state or a deactivated state, or the task status comprises an activated state, a deactivated state, or a released state.

15. A communication apparatus (300, 400), wherein the communication apparatus is configured to implement the method according to either any one of claims 1 to 10, or, any one of claims 11 to 14.

## Patentansprüche

1. Kommunikationsverfahren, umfassend:
Senden (S801), durch einen "Radio Intelligence Controller", RIC, von ersten Aufgabenkonfigurationsinformationen an eine Basisstation, wobei die ersten Aufgabenkonfigurationsinformationen Konfigurationsinformationen einer oder
mehrerer Aufgaben einer künstlichen Intelligenz, AI, anzeigen, wobei für jede der einen oder der mehreren Aufgaben die Konfigurationsinformationen der Aufgabe verwendet werden, um einen oder mehrere des folgenden Inhalts der Aufgabe anzuzeigen: eine Aufgabenkennung, ID, eine Aufgabenart, einen Aufgabeninhalt, ein Aufgabenausführungsorgan und einen Aufgabenstatus, wobei die Aufgabe durch ein Endgerät oder die Basisstation ausgeführt wird.

2. Verfahren nach Anspruch 1, wobei die Aufgabenart eine Datenerfassung, eine Inferenzergebnisveröffentlichung, eine Modellveröffentlichung oder ein Modelltraining ist.

3. Verfahren nach Anspruch 1 oder 2, wobei
wenn die Aufgabenart eine Datenerfassung ist, der Aufgabeninhalt einen oder mehrere des folgenden Inhalts anzeigt: eine Datenmessart, eine Messbedingung und einen Messergebnisbericht;
wenn die Aufgabenart eine Inferenzergebnisveröffentlichung ist, der Aufgabeninhalt ein Interferenzergebnis anzeigt;
wenn die Aufgabenart eine Modellveröffentlichung ist, der Aufgabeninhalt Modellinformationen anzeigt; oder
wenn die Aufgabenart ein Modelltraining ist, der Aufgabeninhalt einen oder mehrere des folgenden Inhalts anzeigt: eine Bedingung für ein Berichten von Modellparameterinformationen oder ein Berichten von Modellparametergradienteninformationen, Informationen über ein neuronales Referenznetzwerk und einen Trainingsdatensatz für das neuronale Netzwerk.

4. Verfahren nach einem der Ansprüche 1 bis 3, wobei der Aufgabenstatus einen aktivierten Zustand oder einen deaktivierten Zustand umfasst oder der Aufgabenstatus einen aktivierten Zustand, einen deaktivierten Zustand oder einen freigegebenen Zustand umfasst.

5. Verfahren nach einem der Ansprüche 1 bis 4, wobei das Verfahren ferner Folgendes umfasst:
Empfangen (S802) einer ersten Schnittstellenherstellungsanforderungsnachricht von einer zentralen Einheit, CU, der Basisstation, wobei die erste Schnittstellenherstellungsanforderungsnachricht einen oder mehrere des folgenden Inhalts anzeigt:
eine Nachrichtenart;
eine ID der CU;
CU-Fähigkeitsinformationen;
CU-Konfigurationsinformationen; und
CU-Statusinformationen.

6. Verfahren nach einem der Ansprüche 1 bis 5, wobei das Verfahren ferner Folgendes umfasst:
Empfangen (S803) einer zweiten Schnittstellenherstellungsanforderungsnachricht von einer verteilten Einheit, DU, der Basisstation, wobei die zweite Schnittstellenherstellungsanforderungsnachricht einen oder mehrere des folgenden Inhalts anzeigt:
eine Nachrichtenart;
eine ID der DU;
DU-Fähigkeitsinformationen;
DU-Konfigurationsinformationen; und
DU-Statusinformationen.

7. Verfahren nach einem der Ansprüche 1 bis 6, umfassend: Empfangen (S804, S805) von Informationen über das Endgerät von der Basisstation, wobei die Informationen über das Endgerät eines oder mehrere von Folgendem umfassen:
Fähigkeitsinformationen des Endgeräts, Konfigurationsinformationen des Endgeräts und Statusinformationen des Endgeräts.

8. Verfahren nach einem der Ansprüche 1 bis 7, wobei die eine oder die mehreren Aufgaben mindestens eine Datenerfassungsaufgabe umfassen, und wobei das Verfahren ferner Folgendes umfasst:
Empfangen von erfassten Daten von der Basisstation.

9. Verfahren nach einem der Ansprüche 1 bis 8, wobei das Verfahren ferner Folgendes umfasst:
Veröffentlichen (S813) des Interferenzergebnisses an die Basisstation.

10. Verfahren nach einem der Ansprüche 1 bis 9, wobei die eine oder die mehreren Aufgaben mindestens eine Modelltrainingsaufgabe umfassen, und wobei das Verfahren ferner Folgendes umfasst:
Empfangen von Modellparameterinformationen oder Modellparametergradienteninformationen von der Basisstation.

11. Kommunikationsverfahren, umfassend:
Empfangen (S801), durch eine Basisstation, von ersten Aufgabenkonfigurationsinformationen von einem "Radio Intelligence Controller", RIC, wobei die ersten Aufgabenkonfigurationsinformationen Konfigurationsinformationen einer oder mehrerer Aufgaben einer künstlichen Intelligenz, AI, anzeigen, wobei
für jede der einen oder der mehreren Aufgaben die Konfigurationsinformationen der Aufgabe verwendet werden, um einen oder mehrere des folgenden Inhalts der Aufgabe anzuzeigen: eine Aufgabenkennung, ID, eine Aufgabenart, einen Aufgabeninhalt, ein Aufgabenausführungsorgan und einen Aufgabenstatus, wobei die Aufgabe durch ein Endgerät oder die Basisstation ausgeführt wird.

12. Verfahren nach Anspruch 11, wobei die Aufgabenart eine Datenerfassung, eine Inferenzergebnisveröffentlichung, eine Modellveröffentlichung oder ein Modelltraining ist.

13. Verfahren nach Anspruch 11 oder 12, wobei
wenn die Aufgabenart eine Datenerfassung ist, der Aufgabeninhalt einen oder mehrere des folgenden Inhalts anzeigt: eine Datenmessart, eine Messbedingung und einen Messergebnisbericht;
wenn die Aufgabenart eine Inferenzergebnisveröffentlichung ist, der Aufgabeninhalt ein Interferenzergebnis anzeigt;
wenn die Aufgabenart eine Modellveröffentlichung ist, der Aufgabeninhalt Modellinformationen anzeigt; oder
wenn die Aufgabenart ein Modelltraining ist, der Aufgabeninhalt einen oder mehrere des folgenden Inhalts anzeigt: eine Bedingung für ein Berichten von Modellparameterinformationen oder ein Berichten von Modellparametergradienteninformationen, Informationen über ein neuronales Referenznetzwerk und einen Trainingsdatensatz für das neuronale Netzwerk.

14. Verfahren nach einem der Ansprüche 11 bis 13, wobei der Aufgabenstatus einen aktivierten Zustand oder einen deaktivierten Zustand umfasst oder der Aufgabenstatus einen aktivierten Zustand, einen deaktivierten Zustand oder einen freigegebenen Zustand umfasst.

15. Kommunikationsvorrichtung (300, 400), wobei die Kommunikationsvorrichtung dazu konfiguriert ist, das Verfahren nach entweder einem der Ansprüche 1 bis 10 oder einem der Ansprüche 11 bis 14 zu implementieren.

## Revendications

1. Procédé de communication, comprenant :
l'envoi (S801), par un contrôleur radio intelligent, RIC, de premières informations de configuration de tâche à une station de base, dans lequel les premières informations de configuration de tâche indiquent des informations de configuration d'une ou plusieurs tâches d'intelligence artificielle, IA, dans lequel
pour chacune de la ou des tâches, les informations de configuration de la tâche sont utilisées pour indiquer un ou plusieurs des contenus suivants de la tâche : un identifiant, ID, de tâche, un type de tâche, un contenu de tâche, un corps d'exécution de tâche et
un statut de tâche, dans lequel la tâche est exécutée par un dispositif terminal ou la station de base.

2. Procédé selon la revendication 1, dans lequel le type de tâche est une collecte de données, une publication de résultat d'inférence, une publication de modèle ou un entraînement de modèle.

3. Procédé selon la revendication 1 ou 2, dans lequel
lorsque le type de tâche est une collecte de données, le contenu de tâche indique un ou plusieurs des contenus suivants : un type de mesure de données, une condition de mesure et un rapport de résultat de mesure ;
lorsque le type de tâche est une publication de résultat d'inférence, le contenu de tâche indique un résultat d'inférence ;
lorsque le type de tâche est une publication de modèle, le contenu de tâche indique des informations de modèle ; ou
lorsque le type de tâche est un entraînement de modèle, le contenu de tâche indique un ou plusieurs des contenus suivants : une condition de signalement d'informations de paramètres de modèle ou de signalement d'informations de gradient de paramètres de modèle, des informations relatives à un réseau de neurones de référence, et un ensemble de données d'entraînement de réseau de neurones.

4. Procédé selon l'une quelconque des revendications 1 à 3, dans lequel le statut de tâche comprend un état activé ou un état désactivé, ou le statut de tâche comprend un état activé, un état désactivé ou un état libéré.

5. Procédé selon l'une quelconque des revendications 1 à 4, le procédé comprenant en outre :
la réception (S802) d'un premier message de demande d'établissement d'interface depuis une unité centrale, CU, de la station de base, dans lequel le premier message de demande d'établissement d'interface indique ou un ou plusieurs des contenus suivants :
un type de message ;
un ID de la CU ;
des informations de capacité de CU ;
des informations de configuration de CU ; et
des informations de statut de CU.

6. Procédé selon l'une quelconque des revendications 1 à 5, le procédé comprenant en outre :
la réception (S803) d'un second message de demande d'établissement d'interface depuis une unité distribuée, DU, de la station de base, dans lequel le second message de demande d'établissement d'interface indique ou un ou plusieurs des contenus suivants :
un type de message ;
un ID de la DU ;
des informations de capacité de DU ;
des informations de configuration de DU ; et
des informations de statut de DU.

7. Procédé selon l'une quelconque des revendications 1 à 6, comprenant : la réception (S804, S805) d'informations relatives au dispositif terminal depuis la station de base, dans lequel les informations relatives au dispositif terminal comprennent une ou plusieurs des informations suivantes : des informations de capacité du dispositif terminal, des informations de configuration du dispositif terminal et des informations de statut du dispositif terminal.

8. Procédé selon l'une quelconque des revendications 1 à 7, dans lequel la ou les tâches comprennent au moins une tâche de collecte de données, et le procédé comprend en outre :
la réception de données collectées depuis la station de base.

9. Procédé selon l'une quelconque des revendications 1 à 8, le procédé comprenant en outre :
la publication (S813) du résultat d'inférence pour la station de base.

10. Procédé selon l'une quelconque des revendications 1 à 9, dans lequel la ou les tâches comprennent au moins une tâche d'entraînement de modèle, et le procédé comprend en outre :
la réception d'informations de paramètres de modèle ou d'informations de gradient de paramètres de modèle depuis la station de base.

11. Procédé de communication, comprenant :
la réception (S801), par une station de base, de premières informations de configuration de tâche depuis un contrôleur radio intelligent, RIC, dans lequel les premières informations de configuration de tâche indiquent des informations de configuration d'une ou plusieurs tâches d'intelligence artificielle, IA, dans lequel pour chacune de la ou des tâches, les informations de configuration de la tâche sont utilisées pour indiquer un ou plusieurs des contenus suivants de la tâche : un identifiant, ID, de tâche, un type de tâche, un contenu de tâche, un corps d'exécution de tâche et un statut de tâche, dans lequel la tâche est exécutée par un dispositif terminal ou la station de base.

12. Procédé selon la revendication 11, dans lequel le type de tâche est une collecte de données, une publication de résultat d'inférence, une publication de modèle ou un entraînement de modèle.

13. Procédé selon la revendication 11 ou 12, dans lequel
lorsque le type de tâche est une collecte de données, le contenu de tâche indique un ou plusieurs des contenus suivants : un type de mesure de données, une condition de mesure et un rapport de résultat de mesure ;
lorsque le type de tâche est une publication de résultat d'inférence, le contenu de tâche indique un résultat d'inférence ;
lorsque le type de tâche est une publication de modèle, le contenu de tâche indique des informations de modèle ; ou
lorsque le type de tâche est un entraînement de modèle, le contenu de tâche indique un ou plusieurs des contenus suivants : une condition de signalement d'informations de paramètres de modèle ou de signalement d'informations de gradient de paramètres de modèle, des informations relatives à un réseau de neurones de référence, et un ensemble de données d'entraînement de réseau de neurones.

14. Procédé selon l'une quelconque des revendications 11 à 13, dans lequel le statut de tâche comprend un état activé ou un état désactivé, ou le statut de tâche comprend un état activé, un état désactivé ou un état libéré.

15. Appareil de communication (300, 400), l'appareil de communication étant configuré pour mettre en œuvre le procédé selon l'une quelconque des revendications 1 à 10, ou selon l'une quelconque des revendications 11 à 14.
